# EUROPÄISCHE PATENTSCHRIFT

(11) **EP 3 487 588 B1**
(45) Veröffentlichungstag und Bekanntmachung des Hinweises auf die Patenterteilung: **22.04.2020**
(21) Anmeldenummer: 16805015.1
(22) Anmeldetag: 11.11.2016
(51) Int. Cl.: A62D 5/00, B32B 5/18, B32B 5/20, B32B 5/30, B32B 7/12, B32B 5/24, B32B 3/26

(54) **SCHUTZMATERIAL MIT KATALYTISCHEN UND/ODER REAKTIVEN EIGENSCHAFTEN SOWIE DESSEN HERSTELLUNG UND VERWENDUNG**
PROTECTIVE MATERIAL HAVING CATALYTIC AND/OR REACTIVE PROPERTIES AND THE PRODUCTION AND USE OF SAME
MATIÈRE DE PROTECTION AUX PROPRIÉTÉS CATALYTIQUES ET/OU RÉACTIVES, AINSI QUE LEUR FABRICATION ET UTILISATION

(30) Priorität: 01.10.2016 WO PCT/EP2016/001623; 07.10.2016 WO PCT/EP2016/001667; 10.10.2016 WO PCT/EP2016/001674
(43) Veröffentlichungstag der Anmeldung: 29.05.2019
(73) Patentinhaber: Blücher GmbH, 40699 Erkrath (DE)
(72) Erfinder: BÖHRINGER, Bertram, 40699 Erkrath (DE); NGUYEN, Cong Minh, 40699 Erkrath (DE); STROBL, Florian, 40699 Erkrath (DE)
(74) Vertreter: Strehlke, Ingo Kurt
(86) Internationale Anmeldenummer: PCT/EP2016/077412
(87) Internationale Veröffentlichungsnummer: WO 2018/059722

(56) Entgegenhaltungen:
- EP-A2- 1 859 837
- DE-U1-202015 104 218
- FR-A1- 2 752 994
- US-A1- 2011 010 826

## Beschreibung

Die vorliegende Erfindung betrifft das technische Gebiet katalytisch aktiver bzw. reaktiver Einheiten bzw. Systeme, welche eine katalytisch aktive bzw. reaktive Komponente umfassen, wobei die katalytisch aktive bzw. reaktive Komponente insbesondere auf einem Träger aufgebracht ist. In diesem Zusammenhang betrifft die vorliegende Erfindung insbesondere das technische Gebiet von Schutzmaterialien mit katalytischen bzw. reaktiven Eigenschaften, wobei die Schutzmaterialien beispielsweise für Schutzbekleidung oder für Filter im zivilen oder militärischen Bereich, beispielsweise zur Herstellung von Schutzanzügen oder dergleichen, eingesetzt werden können.

In diesem Zusammenhang betrifft die vorliegende Erfindung insbesondere eine katalytische bzw. reaktive Einheit, welche in Form eines Schutzmaterials mit katalytischen bzw. reaktiven Eigenschaften vorliegt und welche insbesondere eine Schutzfunktion gegenüber chemischen bzw. biologischen Schad- bzw. Giftstoffen aufweist, wobei die katalytische bzw. reaktive Einheit nach der Erfindung beispielsweise in Form eines textilen Schutzfiltermaterials ausgebildet sein kann und wobei die erfindungsgemäße katalytische bzw. reaktive Einheit eine Vielzahl diskreter katalytischer bzw. reaktiver Partikel aufweist.

Darüber hinaus betrifft die vorliegende Erfindung auch ein Verfahren zur Herstellung der katalytischen bzw. reaktiven Einheit nach der Erfindung sowie spezielle Verwendungen der erfindungsgemäßen katalytischen bzw. reaktiven Einheit, insbesondere zur Herstellung von Schutzausrüstungen bzw. Schutzgegenständen sowie zur Herstellung von Filtern und Filtermaterialien.

Die vorliegende Erfindung betrifft gleichermaßen auch Schutzausrüstungen bzw. Schutzgegenstände einerseits sowie Filter- und Filtermaterialien andererseits, welche die erfindungsgemäße katalytische bzw. reaktive Einheit aufweisen bzw. welche unter Verwendung der erfindungsgemäßen Einheit mit katalytischen bzw. reaktiven Eigenschaften hergestellt sind.

Von chemischen bzw. biologischen Schad- und/oder Giftstoffen, wie beispielsweise chemischen bzw. biologischen Kampfstoffen, geht im Allgemeinen ein hohes Gefährdungspotential für mit solchen Substanzen in Kontakt kommende Personen einher, wie beispielsweise sich im Kampfeinsatz befindende Soldaten sowie im Rahmen der Brand- bzw. Katastrophenbekämpfung tätige Personen. Chemische bzw. biologische Schad- und/oder Giftstoffe sind oftmals auch insofern äußerst problematisch, als die Exposition bzw. der Kontakt bereits mit geringen Mengen derartiger Substanzen zu einer nachhaltigen und mitunter dauerhaften gesundheitlichen Beeinträchtigung bis hin zum Tod von mit diesen Substanzen konfrontierten Personen führen kann.

Diesbezüglich gibt es eine Reihe von Substanzen bzw. Stoffen, die bei Kontakt mit der Haut bzw. den Schleimhäuten vom Körper aufgenommen werden und bereits in geringen Mengen bzw. Konzentrationen zu schwerwiegenden körperlichen Schäden führen:
Im Bereich der chemischen Gift- bzw. Kampfstoffe können hierzu insbesondere das blasenziehende Lost (Gelbkreuz) und das Nervengift Sarin genannt werden. Personen, die mit derartigen hochtoxischen Giften in Kontakt kommen können, müssen demnach eine geeignete Schutzbekleidung tragen bzw. durch geeignete Schutzmaterialien gegen diese Substanzen bzw. Gifte geschützt werden.

Dies gilt in entsprechender Weise auch für biologische Schad- bzw. Giftstoffe, wie Toxine biologischen Ursprungs, welche gleichermaßen bei Kontakt bzw. durch nachfolgende Aufnahme in den Körper, beispielsweise über Schleimhäute oder dergleichen, zu mitunter nachhaltigen gesundheitlichen Problemen führen.

Auch im Katastrophenfall, beispielsweise bei Großbränden, insbesondere von industriellen Anlagen oder dergleichen, treten oftmals hochtoxische Verbrennungsprodukte auf. Aus ursprünglich unbedenklichen Stoffen kann dabei durch chemische Reaktionen eine Vielzahl von Gefahrstoffen entstehen. Diese können sich über die Luft verbreiten, wenn sie in der heißen Brandphase zusammen mit dem Rauch von der Brandstelle ausgetragen werden. Die Zusammensetzung und Menge der bei Bränden entstehenden Schad- bzw. Giftstoffen hängt dabei von den Brandbedingungen und den am Brand beteiligten Materialien ab. In hoher Konzentration bilden sich neben Kohlenmonoxid oftmals auch Stickoxide, Schwefeldioxid, Schwefelwasserstoff, Chlorwasserstoff, Bromwasserstoff, Cyanwasserstoff bzw. Blausäure, Ammoniak, Phosgen und dergleichen. Außerdem können zahlreiche weitere giftige und gesundheitsschädliche Folgeprodukte, wie Dioxine bzw. Furane, auftreten, insbesondere wenn problematische Vorläuferstoffe vorhanden sind. Von daher sind auch für in der Katastrophen- bzw. Brandbekämpfung tätige Personen entsprechende Schutzmaßnahmen zwingend erforderlich, um eine Kontamination bzw. einen Kontakt mit den zugrundeliegenden toxischen Substanzen zu verhindern.

Die Anforderungen an entsprechende Schutzmaterialien mit Schutzfunktion gegenüber den vorgenannten chemischen bzw. biologischen Schad- bzw. Giftstoffen sind neben der hohen Toxizität der zugrundeliegenden Substanzen auch von daher äußerst hoch, dass die in Rede stehenden Schad- bzw. Giftstoffe in zahlreichen Formen bzw. Zuständen vorliegen können: So können diese im Allgemeinen gasförmig, in Form von fein verteilten Partikeln, wie Aerosolen oder dergleichen, oder aber in flüssiger Form als solcher vorliegen, so dass die zugrundeliegenden Schutzmaterialien auch von daher eine hohe Schutzbreite aufweisen müssen, nämlich sowohl im Hinblick auf unterschiedliche toxische Substanzen als solche mit jeweils speziellen chemischen Eigenschaften als auch in Bezug auf deren Vorliegen in Form von Gasen, Aerosolen, Flüssigkeiten oder dergleichen. Zudem ist eine hohe mechanische Stabilität der Schutzmaterialien bei gleichzeitig hohem Tragekomfort von hieraus hergestellter Schutzausrüstung bzw. -bekleidung zu gewährleisten.

Zur Bereitstellung einer gewissen Schutzfunktion gegenüber den vorgenannten Schad- bzw. Giftstoffen, insbesondere chemischen bzw. biologischen Kampfstoffen, sind im Stand der Technik beispielsweise luft- und wasserdampfundurchlässige Systeme bekannt, welche zur Ausbildung von Schutzanzügen oder dergleichen eingesetzt werden können und welche im Allgemeinen mit einer gegenüber Gift- bzw. Kampfstoffen, insbesondere der vorgenannten Art, undurchlässigen Gummischicht ausgestattet sind. Derartige Schutzsysteme bieten zwar einen gewissen Schutz gegenüber den zuvor genannten Substanzen, sind jedoch mit dem großen Nachteil verbunden, dass hieraus hergestellte Schutzausrüstungen, beispielsweise Schutzanzüge oder dergleichen, im Trage- bzw. Anwendungszustand, beispielsweise im Rahmen eines Kampf- bzw. Katastropheneinsatzes mit hoher körperlicher Belastung des Trägers, sehr schnell zu einem Hitzestau führen, da derartige Systeme aufgrund der fehlenden Luft- bzw. Wasserdampfdurchlässigkeit keine feuchtigkeits- und thermoregulativen Eigenschaften aufweisen, insbesondere da weder eine Atmungsaktivität noch ein Luftaustausch gegeben ist.

Zudem kommen im Stand der Technik beispielsweise zur Herstellung von Schutzanzügen auch solche Materialien zum Einsatz, welche mit einer luftundurchlässig, jedoch wasserdampfdurchlässig ausgebildeten Membran ausgerüstet sind, wobei die Membran in entsprechender Weise als Sperrschicht gegenüber toxischen Subtanzen fungieren soll. Ein derartiges Schutzmaterial ist beispielsweise in der WO 96/37365 A1 sowie in der zu derselben Patentfamilie gehörenden US 5 743 775 A bzw. der DE 195 18 683 A1 beschrieben. Derartige Schutzanzüge mit einer zwar für Wasserdampf durchlässigen, jedoch für Gifte, insbesondere Hautgifte, undurchlässigen Membran sind mit dem grundsätzlichen Nachteil behaftet, dass an undichten Stellen, welche beispielsweise durch mechanische Beschädigungen im Kampf- bzw. Katastropheneinsatz hervorgerufen werden können, Gifte in das Innere des Schutzanzugs eindringen, innerhalb des Schutzanzugs verbleiben und in der Folge über die Haut vom Träger aufgenommen werden können. Zudem ist im Allgemeinen der Tragekomfort derartiger Schutzsysteme aufgrund des insgesamt beschränkten Luftaustauschs nicht immer zufriedenstellend.

Zur Verbesserung insbesondere auch des Tragekomforts sind im Stand der Technik zudem auch luftdurchlässige, permeable Schutzmaterialien bekannt, welche im Allgemeinen eine Adsorptionsschicht auf Basis von Aktivkohle aufweisen, wobei die Aktivkohle die zugrundeliegenden Gift- bzw. Kampfstoffe, insbesondere die chemischen Gifte, dauerhaft zu binden imstande ist, so dass neben der bereitgestellten Schutzfunktion auch von stark kontaminierten Anzügen für den Träger grundsätzlich keine Gefahr ausgeht. Derartige Schutzsysteme weisen durch den hohen Austausch von Luft und Wasser bzw. Wasserdampf insgesamt auch einen hohen Tragekomfort auf, zumal ein weiterer Vorteil darin liegt, dass die eingesetzte Aktivkohle auch an der Innenseite, d. h. auf der dem Träger zugewandten Seite des Schutzmaterials, zugänglich ist, so dass eingedrungene Gift schnell adsorbiert und unschädlich gemacht werden können. Jedoch sind auch derartige Schutzsysteme hinsichtlich ihrer Gesamtfunktion mitunter verbesserungsbedürftig. In diesem Zusammenhang sind beispielsweise luftdurchlässige, permeable Schutzanzüge bekannt, bei denen insbesondere pulverförmige Aktivkohle in einer Dispersion unter Verwendung eines Haftmittels auf eine Trägerschicht aufgebracht wird. Hierbei ist jedoch im Allgemeinen nachteilig, dass aufgrund des vollständigen Einbringens der Aktivkohle in das Haftmittel die Zugänglichkeit der Aktivkohle für zu adsorbierende Substanzen beschränkt ist.

Zudem ist es im Stand der Technik in Bezug auf luftdurchlässige bzw. permeable Schutzanzüge bekannt, die diesbezüglich eingesetzte Aktivkohle durch Verwendung eines diskontinuierlich (diskontinuierlich-punktförmig) auf einem Träger aufgetragenen Haftmittels insbesondere auf Basis eines vorgegebenen gleichmäßigen Rasters punktförmig zu fixieren, was im Allgemeinen die Luftdurchlässigkeit solcher Systeme verbessert. In diesem Zusammenhang kann es sich jedoch so verhalten, dass die Verteilung bzw. Anordnung des Adsorptionsmaterials in dem Schutzmaterial im Hinblick auf die Gewährleistung einer Schutzfunktion gegenüber Schad- bzw. Giftstoffen, insbesondere bei hoher Schadstoffbelastung, mitunter nicht optimal ist. Dies gilt beispielsweise für den Fall, dass die zugrundeliegenden Adsorptionsmaterialien mit einer zu geringen Belegungsdichte bzw. mit einem zu großen Abstand der Klebepunkte mit den jeweiligen Aktivkohlepartikeln aufgebracht sind. Insbesondere kann es bei einem diskontinuierlichen Auftrag des Haftmittels gegebenenfalls auch zu einer übermäßigen Lückenbildung zwischen den einzelnen Klebstoffpunkten bzw. zur Ausbildung einer stark regelmäßigen bzw. rasterförmigen Musterung kommen, was jedoch dazu führen kann, dass die Schutzleistung verringert wird, da toxische Substanzen mitunter zwischen den resultierenden Lücken durch das Schutzmaterial dringen können.

Ein diskontinuierlicher Auftrag von Adsorbentien ist auch insofern mitunter nachteilig, als relativ kleine partikuläre Strukturen des eingesetzten Adsorptionsmaterials für einen derartigen Auftrag im Allgemeinen weniger geeignet sind, insbesondere da diese zum einen vollständig in das Klebstoffmaterial einsinken können und damit der Adsorption von entsprechenden Giftstoffen nicht mehr vollständig zugänglich sind und da zum anderen für kleine Partikelgrößen die Gefahr besteht, dass die im Rahmen des rasterförmigen Auftrags resultierende Partikelbeabstandung zu groß ausfällt. Unter extremen Bedingungen, insbesondere wenn ein Tropfen eines eingedickten Gift- bzw. Kampfstoffs aus größerer Höhe auf das Schutzmaterial auftrifft, kann die Aktivkohleschicht zudem lokal überfordert sein. Weiterhin kann es bei solchen Materialien mitunter vorkommen, dass das punkt- bzw. rasterförmig aufgetragene Haftmittel bzw. der Klebstoff bei der Herstellung des Materials teilweise zwischen das Garnsystem des Trägers fällt, was der Fixierung der Adsorbentien abträglich ist und gleichermaßen zu Fehlstellen führen kann.

Darüber hinaus kann es bei luft- und wasserdampfdurchlässigen sowie zudem wasserdurchlässigen Schutzanzügen unter Verwendung eines Adsorptionsmaterials in Form von Aktivkohle mitunter zu einer frühzeitigen Erschöpfung der Aktivkohle für den Fall kommen, dass die Aktivkohle insbesondere bei hoher Schadstoffexposition und langen Trage- bzw. Einsatzzeiten mit den adsorbierten Schad- bzw. Giftstoffen abgesättigt wird, so dass die Adsorptionskapazität quasi erschöpft werden kann.

Um die Adsorptionsleistung von Adsorbentien in Form von Aktivkohle weiterführend zu verbessern, kann es im Stand der Technik weiterhin vorgesehen sein, Aktivkohlepartikel als solche direkt mit einer katalytisch aktiven Komponente auszurüsten, was durch Einbringen einer Katalysatorkomponente in die Aktivkohle geschehen kann. Durch die unmittelbare und direkte Ausrüstung der Aktivkohlepartikel mit entsprechenden katalytischen bzw. reaktiven Eigenschaften können grundsätzlich zuvor adsorbierte Substanzen katalytisch abgebaut bzw. in nichttoxische Substanzen zersetzt werden, was dem Adsorptionsverhalten der Aktivkohle auch im Hinblick auf lange Einsatzzeiten zuträglich ist, da von der Aktivkohle aufgenommene Substanzen abgebaut und somit vormals belegte Adsorptionsstellen erneut zur Verfügung gestellt werden können.

Nachteilig bei derartigen Ansätzen des Standes der Technik ist jedoch, dass das Einbringen einer katalytisch aktiven bzw. reaktiven Substanz in das Porensystem der Aktivkohle - neben dem relativ hohen verfahrenstechnischen Aufwand - dazu führen kann, dass zum einen die Gesamtadsorptionskapazität der Aktivkohle eingeschränkt wird, da ein Teil des Porensystems der Aktivkohle durch den Katalysator belegt wird und die Poren zudem durch den Katalysator verstopft werden können. Zum anderen ist der in das Porensystem eingebrachte Katalysator mitunter selbst nicht in optimaler Weise für die zu zersetzenden Substanzen zugänglich. So betrifft die DE 29 36 362 C2 ein Verfahren zur Herstellung eines Palladium-Kohlekatalysators, wobei das Palladium durch Reduktion auf in einem organischen Mittel suspendierten Kohlenstoff als Katalysatorträger abgeschieden werden soll. Als Kohlenstoffträger wird dabei pulverförmige Aktivkohle, Ruß oder Graphit verwendet. Wie zuvor angeführt, weisen derartige Systeme nicht immer optimale katalytische bzw. adsorptive Eigenschaften auf, insbesondere bedingt durch eine Verringerung der Adsorptionskapazität bei gleichzeitig verschlechterter Zugänglichkeit des Katalysators.

Vor diesem Hintergrund gibt es im Stand der Technik auch Ansätze, eine katalytisch aktive Substanz als solche für entsprechende Schutzsysteme, beispielsweise zur Herstellung von Schutzanzügen oder dergleichen, einzusetzen. In diesem Zusammenhang wird im Stand der Technik beispielsweise derart vorgegangen, dass zur Bereitstellung eines funktionellen Schutzmaterials eine als Sperrschicht gegenüber Schad- bzw. Giftstoffen eingesetzte Membran katalytisch bzw. reaktiv ausgerüstet wird. Hierzu kann eine katalytisch aktive Komponente beispielsweise auf eine zuvor bereitgestellte Membran aufgebracht werden, was jedoch mit dem Nachteil verbunden ist, dass mitunter keine dauerhafte Fixierung der katalytisch aktiven Komponente auf der Membran gegeben ist. Zudem kann es vorgesehen sein, eine Membran bereits während ihrer Herstellung mit der reaktiven Komponente auszurüsten, beispielsweise mittels Einpolymerisation oder dergleichen, was jedoch mit dem Nachteil verbunden ist, dass die Zugänglichkeit des Katalysators in der als Sperrschicht fungierenden Membran für abzubauende Schad- bzw. Giftstoffe wiederum verringert sein kann, was die Schutzfunktion eines solchen Systems insgesamt verringern kann. Zudem handelt es sich bei den zugrundeliegenden Membransystemen gleichermaßen um luftundurchlässige Systeme, was dem Tragekomfort einer auf dieser Basis hergestellten Schutzbekleidung jedoch abträglich ist.

Weiterhin betrifft die DE 20 2015 104 218 U1 ein textiles Schutzmaterial, wobei das textile Schutzmaterial einen vorzugsweise zweidimensionalen bzw. flächigen, insbesondere luftdurchlässigen textilen Träger, insbesondere in Form eines Flächenmaterials, umfassen soll. Darüber hinaus soll das Material eine auf den textilen Träger aufgebrachte Klebstoffschicht aufweisen, wobei die Klebstoffschicht eine luftdurchlässige bzw. diskontinuierlich ausgebildete Schicht auf Basis eines getrockneten bzw. ausgehärteten gebrochenen Klebstoffpolymerschaums sein soll. Weiterhin soll das Material eine an der Klebstoffschicht zum Haften gebrachte Adsorptionsschicht aufweisen, wobei die Adsorptionsschicht eine Vielzahl einzelner Adsorberpartikel umfassen oder hieraus gebildet sein soll.

Zudem betrifft die US 2001/0010826 A1 ein Sorptionsfiltermaterial, insbesondere Adsorptionsfiltermaterial, insbesondere für die Sorption, vorzugsweise Adsorption, von chemischen bzw. biologischen Schadstoffen, wie chemischen bzw. biologischen Kampfstoffen. Das Sorptionsfiltermaterial soll dabei mindestens ein Trägermaterial aufweisen, wobei das Trägermaterial mit einem Sorptionsmittel, insbesondere Adsorbens, beaufschlagt ist, wobei das Sorptionsmittel auf Basis mindestens einer metallorganischen Gerüstsubstanz ausgebildet ist bzw. mindestens eine metallorganische Gerüstsubstanz umfasst oder hieraus besteht.

Weiterhin betrifft die FR 2 752 994 A1 einen Schutzhandschuh mit Schutzfunktion gegenüber nuklearen, biologischen oder chemischen Angriffen. Der Schutzhandschuh soll dabei eine innere Filterschicht aufweisen, welche Aktivkohle enthält und welche auf einen Stoff aufgeklebt ist. Zudem soll der Handschuh eine äußere Schicht aus Baumwolle/Polyester aufweisen, welche wasser- und ölabweisend behandelt ist, und zwar mit Ausnahme (für die äußere Schicht) der Handfläche, welche aus Leder besteht oder welche mit einer mikroporösen Membran auf der Innenseite und Noppen auf der Außenseite bedeckt ist. Die innere Filterschicht kann dabei aus einem Polyurethanschaumstoff hergestellt sein, welcher mit Aktivkohle imprägniert ist und zudem komprimiert ist. Die Noppen sollen mittels Siebdruck aufgebracht werden, und zwar unter Verwendung eines Druckmaterials mit einem Katalysator, welcher eine Expansion des Druckmaterials hervorruft. Der Handschuh soll zudem eine doppelte Stulpe aufweisen.

Zudem betrifft die EP 1 859 837 A2 eine Schutzbekleidung mit einem mehrschichtigen Aufbau, wobei der mehrschichtige Aufbau ein Außenmaterial und ein mit Schutzfunktion gegenüber chemischen bzw. biologischen Schadstoffen ausgerüstetes Innenmaterial umfasst. Die Schutzbekleidung soll mindestens eine Belüftungsöffnung aufweisen, wobei die Belüftungsöffnung mit einem gasdurchlässigen, insbesondere luftdurchlässigen, chemische bzw. biologische Schadstoffe sorbierenden Schutzfiltermaterial verschlossen ist.

Insgesamt besteht im Stand der Technik somit ein großer Bedarf an weiterführend verbesserten Schutzmaterialien bzw. Einheiten mit Schutzfunktion gegenüber den zugrundeliegenden Schad- bzw. Giftstoffen, wobei insbesondere ein hoher Tragekomfort im Fall der Verwendung dieser Materialien z. B. als Schutzbekleidung bei gleichzeitig hoher Schutzfunktion gewährleistet werden soll. Dies wird von den im Stand der Technik bekannten Systemen jedoch nicht immer in zufriedenstellender Weise gelöst.

Vor diesem Hintergrund besteht damit die Aufgabe der vorliegenden Erfindung darin, eine spezielle Einheit, insbesondere in Form eines Schutzmaterials, bereitzustellen, welche die zuvor geschilderten Nachteile des Standes der Technik zumindest weitgehend vermeidet oder aber wenigstens abschwächt. Insbesondere soll sich die erfindungsgemäß bereitgestellte Einheit auch für die Herstellung von Schutzausrüstungen bzw. Schutzgegenständen mit Schutzfunktion gegenüber chemischen bzw. biologischen Gift- bzw. Kampfstoffen sowie von Filtern und Filtermaterialien eignen.

Eine weitere Aufgabe der vorliegenden Erfindung liegt zudem darin, eine solche Einheit, insbesondere in Form eines Schutzmaterials, bereitzustellen, welche neben einer hohen Luftdurchlässigkeit und einer hohen Wasserdampfdurchlässigkeit auch eine effektive Schutzfunktion gegenüber chemischen sowie biologischen Schad- bzw. Giftstoffen, wie insbesondere chemischen Kampfstoffen, gewährleistet. Dabei soll insbesondere eine gegenüber dem Stand der Technik verbesserte Schutzfunktion gegenüber den in Rede stehenden Schad- bzw. Giftstoffen bei gleichzeitiger Gewährleistung einer hohen Luftdurchlässigkeit, einhergehend mit einem hohen Tragekomfort im Fall der Verwendung für Schutzbekleidung oder dergleichen, bereitgestellt werden.

In diesem Zusammenhang soll sich die erfindungsgemäß bereitgestellte Einheit insbesondere auch zur Verwendung in bzw. zur Herstellung von Schutzgegenständen, wie zum Beispiel Schutzanzügen, Schutzhandschuhen, Schutzschuhen und anderen Schutzbekleidungsstücken sowie Schutzabdeckungen, Schlafsäcken und dergleichen eignen und dabei einen hohen Tragekomfort gewährleisten.

Darüber hinaus besteht eine wiederum weitere Aufgabe der vorliegenden Erfindung in der Bereitstellung einer entsprechenden Einheit, insbesondere in Form eines Schutzmaterials bzw. Adsorptionsfiltermaterials, vorzugsweise eines katalytischen bzw. reaktiven Schutzmaterials, welche sich insbesondere zur Verwendung in Filtern und Filtermaterialien (wie zum Beispiel zur Entfernung von Schad-, Geruchs- und Giftstoffen aller Art, insbesondere aus Luft- und/oder Gasströmen, wie Schutzmaskenfiltern, Geruchsfiltern, Flächenfiltern, Luftfiltern, adsorptionsfähigen Trägerstrukturen und Filtern für den medizinischen Bereich) eignet und dabei bei guter Durchströmbarkeit in Bezug auf das aufzureinigende Medium eine gute Filtereffizienz aufweist.

Insbesondere soll erfindungsgemäß im Rahmen einer nochmals weiterführenden Aufgabe auch eine solche Einheit bereitgestellt werden, welche aufgrund einer verbesserten Schutzfunktion gegenüber den in Rede stehenden Schad- bzw. Giftstoffen eine insgesamt erhöhte Trage- bzw. Einsatzdauer unter dauerhafter Gewährleistung der Schutzfunktion aufweist. Zudem soll die erfindungsgemäß bereitgestellte Einheit eine hohe Dauerhaftigkeit und insbesondere mechanische Stabilität und zudem ein optimiertes Flächengewicht aufweisen. Weiterhin soll auch die Schutzleistung insgesamt erhöht werden.

Schließlich besteht eines wiederum weitere Aufgabe der vorliegenden Erfindung in der Bereitstellung eines entsprechenden Verfahrens zur Herstellung der erfindungsgemäßen Einheit, wobei das erfindungsgemäß bereitgestellte Verfahren bei hoher Verfahrenseffizienz bzw. -ökonomie zu einer insgesamt leistungsfähigen Einheit mit entsprechenden Eigenschaften führen soll.

Zur Lösung der zuvor geschilderten Aufgabe schlägt die vorliegende Erfindung somit - gemäß einem **ersten** Aspekt der vorliegenden Erfindung - eine katalytische bzw. reaktive Einheit in Form eines Schutzmaterials mit katalytischen bzw. reaktiven Eigenschaften, insbesondere mit Schutzfunktion gegenüber chemischen bzw. biologischen Schad- und/oder Giftstoffen, vorzugsweise in Form eines textilen Schutzfiltermaterials, gemäß Patentanspruch 1 vor; jeweils vorteilhafte Weiterbildungen und Ausgestaltungen dieses Erfindungsaspekt sind Gegenstand der entsprechenden Unteransprüche.

Weiterer Gegenstand der vorliegenden Erfindung - gemäß einem **zweiten** Aspekt der vorliegenden Erfindung - ist ein Verfahren zur Herstellung der katalytischen bzw. reaktiven Einheit nach der Erfindung gemäß dem unabhängigen Verfahrensanspruch.

Ein weiterer Gegenstand der vorliegenden Erfindung - gemäß einem **dritten** Aspekt der vorliegenden Erfindung - ist zudem die Verwendung der erfindungsgemäßen katalytischen bzw. reaktiven Einheit zur Herstellung von Schutzausrüstungen bzw. Schutzgegenständen aller Art bzw. zur Herstellung von Filtern und Filtermaterialien aller Art gemäß dem unabhängigen Verwendungsanspruch.

Wiederum weiterer Gegenstand der vorliegenden Erfindung - gemäß einem **vierten** Aspekt der vorliegenden Erfindung - sind zudem die erfindungsgemäßen Schutzausrüstungen bzw. Schutzgegenstände, welche die erfindungsgemäße katalytische bzw. reaktive Einheit enthalten bzw. unter Verwendung der Einheit nach der Erfindung hergestellt sind, gemäß dem diesbezüglichen unabhängigen, die erfindungsgemäßen Schutzausrüstungen bzw. Schutzgegenstände betreffenden Anspruch.

Schließlich sind weiterer Gegenstand der vorliegenden Erfindung - gemäß einem **fünften** Aspekt der vorliegenden Erfindung - Filter und Filtermaterialien, welche die erfindungsgemäße katalytische bzw. reaktive Einheit aufweisen bzw. welche unter Verwendung der erfindungsgemäßen Einheit hergestellt sind, gemäß dem diesbezüglichen unabhängigen, die Filter bzw. Filtermaterialien nach der Erfindung betreffenden Anspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann zudem von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von bevorzugte Ausführungsformen bzw. Ausführungsbeispiele darstellenden Zeichnungen bzw. Figurendarstellungen.

Gegenstand der vorliegenden Erfindung - gemäß einem **ersten** Aspekt der vorliegenden Erfindung - ist somit eine katalytische und/oder reaktive Einheit, vorzugsweise in Form eines Schutzmaterials mit katalytischen und/oder reaktiven Eigenschaften, insbesondere mit Schutzfunktion gegenüber chemischen und/oder biologischen Schad- und/oder Giftstoffen in Form eines textilen Schutzfiltermaterials,
wobei die Einheit einen insbesondere luftdurchlässigen Träger, insbesondere in Form eines textilen Trägers umfasst, wobei der Träger mit einer Vielzahl diskreter katalytischer und/oder reaktiver Partikel ausgerüstet ist,
wobei die katalytischen und/oder reaktiven Partikel mindestens eine katalytische und/oder reaktive Komponente aufweisen oder hieraus bestehen,
wobei die katalytische und/oder reaktive Komponente ein MOF-Material (*Metal Organic Framework)* aufweist oder hieraus besteht,
wobei die katalytischen und/oder reaktiven Partikel mit dem Träger mittels Verklebung dauerhaft verbunden sind bzw. mit dem Träger verklebt sind, wobei die Verbindung bzw. Verklebung durch eine auf den Träger aufgebrachte Klebstoffschicht bewirkt ist, wobei die Klebstoffschicht als eine luftdurchlässige und/oder diskontinuierliche Schicht auf Basis eines getrockneten bzw. ausgehärteten, insbesondere vernetzten, gebrochenen Klebstoffpolymerschaums ausgebildet ist, und
wobei die katalytischen und/oder reaktiven Partikel gemeinsam und/oder zusammen mit einer Vielzahl an Aktivkohlepartikeln als diskrete Adsorberpartikel eingesetzt sind.

Denn die Anmelderin hat in völlig überraschender und nicht vorhersehbarer Weise gefunden, dass in Bezug die vorliegende Erfindung hervorragende Schutzeigenschaften bei gleichzeitig hohem Tragekomfort erreicht werden, wenn eine entsprechende Einheit insbesondere zur Bereitstellung von Schutzmaterialien in spezieller Art und Weise mit katalytischen bzw. reaktiven Eigenschaften ausgerüstet wird. Insbesondere hat die Anmelderin überraschenderweise gefunden, dass in Bezug auf die erfindungsgemäße katalytische bzw. reaktive Einheit, welche insbesondere in Form eines Schutzmaterials mit katalytischen bzw. reaktiven Eigenschaften ausgebildet ist, bei gleichzeitiger Bereitstellung einer hohen Luftdurchlässigkeit eine effiziente Schutzfunktion gegenüber chemischen bzw. biologischen Schad- bzw. Giftstoffen, insbesondere chemischen bzw. biologischen Kampfstoffen, bereitgestellt werden kann, wenn für die erfindungsgemäß bereitgestellte Einheit ein spezieller Aufbau vorgesehen ist: Erfindungsgemäß werden nämlich katalytische bzw. reaktive Partikel zur Bereitstellung entsprechender katalytischer bzw. reaktiver Eigenschaften an (d. h. auf und/oder in) einer auf einem textilen Träger aufgebrachten Klebstoffschicht fixiert bzw. befestigt, wobei die Klebstoffschicht luftdurchlässig ausgebildet ist und in spezieller Art und Weise in Form eines getrockneten bzw. ausgehärteten, insbesondere vernetzten, gebrochenen bzw. zerfallenen Klebstoffpolymerschaums vorliegt.

Ein zentrale Idee der vorliegenden Erfindung besteht somit darin, dass zur Bereitstellung entsprechender katalytischer bzw. reaktiver Eigenschaften katalytische bzw. reaktive Partikel in Form diskreter Teilchen, welche sozusagen als Katalysator fungieren, an (d. h. auf und/oder in) einer gebrochenen Schaumstruktur in Form der zugrundeliegenden Klebstoffschicht vorliegen bzw. hieran befestig bzw. fixiert sind.

Im Rahmen der vorliegenden Erfindung ist dabei der Begriff "gebrochen" (synonym auch als "zerfallen" bzw. "zerstört" bezeichnet), wie er in Bezug auf den getrockneten bzw. ausgehärteten, insbesondere vernetzten, Klebstoffpolymerschaum bzw. die Klebstoffschicht als solche verwendet wird, insbesondere so zu verstehen, dass es sich bei dem gebrochenen Klebstoffpolymerschaum erfindungsgemäß um ein insgesamt luftdurchlässiges System bzw. eine luftdurchlässige Schicht handelt, welches bzw. welche - insbesondere infolge einer speziellen Verfahrensführung zur Herstellung des Materials ausgehend von einer zuvor aufgeschäumten und auf den textilen Träger aufgebrachten, nichtgetrockneten Dispersion bzw. Lösung mit nachfolgender Trocknung bzw. Aushärtung zur Brechung bzw. Zerstörung der Schaumstrukturen - im getrockneten bzw. ausgehärteten Zustand und somit in Bezug auf das endfertige bzw. anwendungsfertige Material eine Vielzahl zerstörter bzw. geplatzter bzw. kollabierter Schaumblasen aufweist. Dementsprechend kann in Bezug auf den erfindungsgemäß vorliegenden getrockneten bzw. ausgehärteten, insbesondere vernetzten, gebrochenen Klebstoffpolymerschaum bzw. die Klebstoffschicht auch von einem zerfallenen bzw. zerstörten, jedoch weiterhin zusammenhängenden Schaum gesprochen werden. Der gebrochene Klebstoffpolymerschaum weist bzw. die zugrundeliegenden zerstörten Schaumblasen weisen dabei eine Vielzahl an zerstörten bzw. gebrochenen bzw. kollabierten Wandungen, Lamellen bzw. Stegen aus dem zugrundeliegenden Klebstoffpolymer auf.

Auf Basis der erfindungsgemäßen Konzeption, wonach die Schaumstruktur sozusagen aufgebrochen bzw. insbesondere nach Maßgabe der obigen Ausführungen zerstört ist, resultiert - ohne sich auf diese Theorie beschränken zu wollen - bei gleichzeitiger Integrität und Flexibilität der Gesamtschicht innerhalb des gebrochenen Klebstoffpolymerschaums der Klebstoffschicht ein luftdurchlässiges System, was den Durchtritt von Luft quer zur Haupterstreckungsebene der Klebstoffschicht ermöglicht, so dass auf dieser Basis ein insgesamt luftdurchlässiges Material resultiert. Im Rahmen der vorliegenden Erfindung kann es dabei vorgesehen sein, dass in Bezug auf den gebrochenen Klebstoffpolymerschaum insbesondere die (Schaumblasen-)Wandungen bzw. die (Schaumblasen-)Lamellen zerstört bzw. gebrochen sind, während die grundsätzlich stabiler ausgebildeten Stege des Schaumsystems nicht bzw. weniger stark zerstört sein können, was zur Aufrechterhaltung einer stabilisierenden Matrixstruktur des zugrundeliegenden gebrochenen Klebstoffpolymerschaums führt, wobei gleichzeitig ein Luftdurchtritt durch die zerstörten Blasenwandungen entlang des gebrochenen Schaums mit den darin eingelagerten bzw. integrierten bzw. darauf aufgebrachten katalytischen bzw. reaktiven Partikeln bzw. quer zur Erstreckungsebene der resultierenden Klebstoffschicht ermöglicht wird.

Was die erfindungsgemäß vorgesehene Klebstoffschicht zudem betrifft, so kann es gemäß einer erfindungsgemäß besonders bevorzugten Ausführungsform vorgesehen sein, dass der gebrochene Klebstoffpolymerschaum zusammenhängend bzw. kohärent ausgebildet ist. Mit anderen Worten verhält es sich im Rahmen der vorliegenden Erfindung insbesondere derart, dass die Klebstoffschicht insgesamt als zusammenhängendes Material bzw. als Schicht mit insgesamt zusammenhängender Matrix- bzw. Gerüststruktur, ausgebildet ist, so dass im Rahmen der vorliegenden Erfindung die der Schicht als solche zugrundeliegende Integrität bzw. Stabilität zumindest im Wesentlichen nicht beeinträchtigt ist. In diesem Zusammenhang bilden die gebrochenen Bestandteile des Klebstoffpolymerschaums - ohne sich auf diese Theorie beschränken zu wollen - gewissermaßen einen zusammenhängenden Verbund aus, d.h. die jeweiligen Bestandteile des gebrochenen Klebstoffpolymerschaums stehen insgesamt zur Ausbildung einer stabilen Schicht miteinander in Verbindung. Hieraus resultiert eine hohe Festigkeit der Klebstoffschicht auf Basis des gebrochenen Klebstoffpolymerschaums, was auch einer effizienten Fixierung der auf- bzw. eingebrachten Partikel zuträglich ist.

Aufgrund der erfindungsgemäßen Konzeption mit der Bereitstellung einer gebrochenen Schaumschicht, wie zuvor angeführt, kann bei gleichzeitiger Gewährleistung einer hohen Luftdurchlässigkeit, was wiederum zu einem hohen Tragekomfort im Fall der Verwendung der erfindungsgemäßen Einheit für Schutzmaterialien führt, insbesondere auch in Abhängigkeit von dem jeweiligen Anwendungszweck eine optimierte Anlagerung bzw. Fixierung der katalytischen bzw. reaktiven Partikel an der Klebstoffschicht erfolgen, und zwar sowohl was ein entsprechendes Aufbringen der katalytischen bzw. reaktiven Partikel auf der in Form eines gebrochenen Schaums vorliegenden Klebstoffschicht als auch eine weiterführende Anbringung bzw. Fixierung der in Rede stehenden katalytischen bzw. reaktiven Partikel in der Klebstoffschicht anbelangt.

Durch die optimierte Belegung der Klebstoffschicht mit den zugrundeliegenden Partikeln wird eine einheitliche und vollständige Ausrüstung des Materials mit entsprechenden katalytischen bzw. reaktiven Eigenschaften gewährleistet, so dass Durchbrüche von Schad- bzw. Giftstoffen vermieden werden. Zudem ist durch die Bereitstellung der Klebstoffschicht in Form eines gebrochenen Schaumsystems auch das Anströmverhalten der eingesetzten katalytischen bzw. reaktiven Partikel verbessert.

Aufgrund der hohen Luftdurchlässigkeit und des Vorliegens der Klebstoffschicht in Form eines gebrochenen Schaums, wie zuvor angeführt, ist zudem die Zugänglichkeit der katalytischen bzw. reaktiven Partikel für die katalytisch umzusetzenden Schad- bzw. Giftstoffe verbessert, so dass auch hierdurch die Schutzfunktion des erfindungsgemäß bereitgestellten Merkmals weiterführend verbessert wird. In der Folge können zudem die im Rahmen des katalytischen Abbaus resultierenden und insbesondere nichttoxischen Endprodukte in verbesserter Weise aus dem Material abtransportiert werden.

Ein weiterer zentraler Vorteil der erfindungsgemäßen Konzeption ist zudem darin zu sehen, dass aufgrund des zweckgerichteten Einsatzes von definierten diskreten katalytischen bzw. reaktiven Partikeln (d. h. katalytisch aktiven bzw. reaktiven Partikeln bzw. Teilchen, welche insbesondere kornförmig und/oder kugelförmig ausgebildet sind) die Schutzfunktion der resultierenden erfindungsgemäßen Einheit bzw. des resultierenden Schutzmaterials für einen großen und zumindest theoretisch nicht begrenzten Zeitraum gewährleistet wird, da das Material in Form eines Katalysators bei der Umsetzung der entsprechenden Schad- bzw. Giftstoffe selbst nicht verbraucht wird bzw. selbst nicht erschöpft.

Insbesondere weist die erfindungsgemäße Einheit eine hohe Eignung für den insbesondere katalytischen bzw. reaktiven Abbau verschiedener toxischer Substanzen bzw. Gase bzw. von Schad- und/oder Giftstoffen auf. Im Allgemeinen kann es sich hierbei beispielsweise und in nicht beschränkender Weise auch um sogenannte *Chemical Warfare Agents* (CWAs), *Toxic Industrial Materials* (TIMs), wie größere Moleküle, beispielsweise Ethylenoxid oder dergleichen, um *Toxic Industrial Chemicals* (TICs), wie NH₃, SO₂, H₂S, Cl₂, HCl oder dergleichen, handeln. Insbesondere eignet sich die erfindungsgemäße Einheit auch zur Unschädlichmachung von polaren Schad- bzw. Giftstoffen.

Zudem ist es im Rahmen der vorliegenden Erfindung durch den gezielten Einsatz diskreter und auch hinsichtlich der katalytischen bzw. reaktiven Eigenschaften individuell ausgestaltbarer Partikel möglich, vor dem jeweiligen Einsatz- bzw. Anwendungshintergrund ausgewählte bzw. optimierte katalytische Systeme bzw. Komponenten einzusetzen, so dass im Rahmen der vorliegenden Erfindung maßgeschneiderte und für den jeweiligen Einsatz- bzw. Anwendungsfall optimierte katalytische bzw. reaktive Einheiten nach der Erfindung bereitgestellt werden können.

In diesem Zusammenhang ist auch hervorzuheben, dass aufgrund der erfindungsgemäßen Konzeption die bereitgestellten katalytischen bzw. reaktiven Eigenschaften von gegebenenfalls vorliegenden anderen Maßnahmen zur Bereitstellung einer weiterführenden Schutzfunktion gegenüber Schad- bzw. Giftstoffen, wie dem zusätzlichen Einsatz von Aktivkohle oder dergleichen, sozusagen entkoppelt sind, so dass sich die jeweils zugrundeliegenden Systeme gegenseitig nicht negativ beeinflussen. So kann es beispielsweise im Rahmen der vorliegenden Erfindung, wie nachfolgend noch angeführt, vorgesehen sein, dass die erfindungsgemäße katalytische bzw. reaktive Einheit zudem mit einem Adsorptionsmaterial, beispielsweise in Form von Aktivkohle, ausgerüstet wird. Gemäß dieser Ausführungsform werden katalytische bzw. reaktive Eigenschaften einerseits und adsorptive Eigenschaften andererseits sozusagen unabhängig bzw. getrennt voneinander bereitgestellt, so dass die jeweiligen Systeme als solche und in gegenseitiger Abstimmung individuell ausgestaltet werden können. In diesem Zusammenhang können die erfindungsgemäß eingesetzten katalytischen bzw. reaktiven Partikel hinsichtlich der Bereitstellung einer weiterführenden Schutzfunktion gegenüber Schad- bzw. Giftstoffen zudem funktional mit gegebenenfalls gleichermaßen vorhandenen adsorptiven Strukturen, beispielsweise auf Basis von Adsorberpartikeln, insbesondere auf Aktivkohlebasis, zusammenwirken, wobei erfindungsgemäß überraschend gefunden wurde, dass die Gesamtleistung der erfindungsgemäßen Einheit über die jeweilige Einzelwirkung der zugrundeliegenden Materialien hinausgeht.

Bei den erfindungsgemäß eingesetzten katalytischen bzw. reaktiven Partikeln handelt es sich insbesondere um solche Materialien bzw. Substanzen, welche als Katalysator fungieren und welche die Reaktionsgeschwindigkeit einer chemischen Reaktion durch Absenkung der Aktivierungsenergie zu erhöhen imstande sind, ohne dabei selbst verbraucht zu werden. Zudem können die katalytisch bzw. reaktiven Partikel auch reaktive Eigenschaften insbesondere chemische Umsetzung der Schad- bzw. Giftstoffe aufweisen, wobei die katalytischen bzw. reaktiven Partikel diesbezüglich als Reaktionspartner bzw. als Edukt fungieren können.

In diesem Zusammenhang ist der Begriff "katalytisch und/oder reaktiv", wie er beispielsweise für die erfindungsgemäß bereitgestellte Einheit bzw. für die der erfindungsgemäßen Einheit zugrundeliegenden katalytischen bzw. reaktiven Partikel verwendet wird, sehr breit zu verstehen:
Insbesondere bezieht sich der Begriff auch auf die katalytischen Eigenschaften der Einheit bzw. der Partikel insofern, als diese insbesondere die Eigenschaft besitzen, durch insbesondere chemische Reaktionen, welche durch die Partikel bzw. einen den Partikeln zugrundeliegenden katalytisch aktiven bzw. reaktiven Bestandteil bzw. einer katalytischen bzw. reaktiven (Aktiv-)Komponente induziert bzw. katalysiert werden, Schad- bzw. Giftstoffe in andere, insbesondere unschädliche bzw. nichttoxische Verbindungen bzw. Abbauprodukte zu überführen, wobei die katalytischen bzw. reaktiven Partikel bzw. der den Partikeln zugrundeliegende katalytisch aktive bzw. reaktiven Bestandteil bzw. die entsprechende (Aktiv-)Komponente in seiner bzw. ihrer ursprünglichen Form erhalten bleibt und somit während des bestimmungsgemäßen Einsatzes nicht bzw. zumindest im Wesentlichen nicht verbraucht wird. Zudem kann sich der Begriff "katalytisch und/oder reaktiv" jedoch grundsätzlich auch auf solche Eigenschaften beziehen, wonach sowohl die katalytischen bzw. reaktiven Partikel bzw. der den Partikeln zugrundeliegende katalytisch aktive bzw. reaktive Bestandteil bzw. die entsprechende (Aktiv-)Komponente als solche(r) als auch die Schad- bzw. Giftstoffe beispielsweise durch chemische Reaktion zwischen Partikel(-bestandteil) bzw. (Aktiv-)Komponente einerseits und Schad- bzw. Giftstoff andererseits insbesondere irreversibel in im Vergleich zu dem Schad- bzw. Giftstoff weniger toxische bzw. nichttoxische Verbindungen überführt werden. Dabei können die Schad- bzw. Giftstoffe beispielsweise in Form neuer chemischer Verbindungen insbesondere als Feststoff vorzugsweise chemisch gebunden oder z. B. als Teile von Reaktionsprodukten in Form von weniger toxischen bzw. nichttoxischen Verbindungen, beispielsweise in Form von Gasen oder Dämpfen, welche entsprechend abgeführt werden können, vorliegen. Darüber hinaus ist es jedoch nicht ausgeschlossen, wenn zusätzlich adsorptive Effekte auftreten bzw. beobachtet werden können, wobei in diesem Zusammenhang auch chemisorptive Eigenschaften eine Rolle spielen können. Erfindungsgemäß stehen jedoch die katalytischen bzw. reaktiven Eigenschaften im Vordergrund.

Erfindungsgemäß wird zudem eine homogene, insbesondere stochastischhomogene Ausrüstung der erfindungsgemäßen Einheit mit den katalytischen bzw. reaktiven Partikeln gewährleistet. Insbesondere können die katalytischen bzw. reaktiven Partikel dabei auf der Oberfläche und/oder in die inneren Strukturen der in Form eines gebrochenen Schaums vorliegenden Klebstoffschicht aufgebracht bzw. eingebracht, insbesondere integriert, werden, wobei Oberflächenbelegung einerseits und Integration der Partikel andererseits erfindungsgemäß gemeinsam, aber auch unabhängig voneinander als einzelne Maßnahmen realisiert werden können. Erfindungsgemäß liegt sowohl in Bezug auf die Oberflächenbelegung als auch die Einlagerung bzw. Integration der Partikel in die Klebstoffschicht insbesondere eine sozusagen lückenlose und vollständige Belegung der jeweiligen Abschnitte der Klebstoffschicht mit den katalytischen bzw. reaktiven Partikeln auf Basis einer zufälligen Verteilung der Partikel vor, was zu hervorragenden Schutzeigenschaften der erfindungsgemäßen Einheit führt, da hierdurch das Auftreten von sozusagen systemisch bedingten Durchbruchstellen vermieden wird. Insbesondere weisen die einzelnen katalytischen bzw. reaktiven Partikel in der erfindungsgemäßen Einheit in ihrer Vielzahl auch optimale Abstände zueinander auf, was die Schutzfunktion gleichermaßen verbessert. Durch die gebrochenen Schaumstruktur sind die katalytischen bzw. reaktiven Partikel zudem in optimaler Weise für die zu zersetzenden Schad- bzw. Giftstoffe zugänglich. Insbesondere liegt keine Porendiffusionslimitierung, wie sie bei mikroporösen Trägerkomponenten bzw. Trägermaterialien auftreten kann, vor, da im gebrochenen Schaum makroporöse Strukturen (Makroporen) vorliegen. Die erfindungsgemäße Konzeption ermöglich aufgrund der verbesserten Verteilung der katalytischen bzw. reaktiven Partikel mit der optimalen Partikelbeabstandung auch den Einsatz von partikulären Systemen mit relativ geringen Teilchengrößen bzw. -durchmessern. Im Gegensatz zum Stand der Technik kann mit dem erfindungsgemäßen Verfahren eine geringe Flächenbeladung, insbesondere geringe massenspezifische Flächenbeladung, im Fall kleiner katalytischer bzw. reaktiver Partikel realisiert werden, was auch zu einer verbesserten Wirtschaftlichkeit bzw. Kosteneffizienz führt.

Der Begriff "stochastisch-homogen", wie er im Rahmen der vorliegenden Erfindung insbesondere in Bezug auf die Verteilung bzw. Anordnung der katalytischen bzw. reaktiven Partikel bzw. der nachfolgend noch angeführten Adsorberpartikel in und auf der Klebstoffschicht bzw. dem gebrochenen Schaum verwendet wird, ist dabei insbesondere so zu verstehen, dass grundsätzlich eine zufällige bzw. stochastische Verteilung bzw. Anordnung der Partikel auf und/oder in der in Form eines gebrochenen Schaums ausgebildeten Klebstoffschicht vorliegt. Hieraus folgt, dass die Menge bzw. Konzentration an Partikeln auf und/oder in der der erfindungsgemäßen Einheit zugrundeliegenden Klebstoffschicht derart hoch sind, dass wiederum eine einheitliche bzw. gleichmäßige Belegung mit den Partikeln vorliegt, so dass das Auftreten von Durchbruchstellen bzw. Stellen mit niedrigen Partikelmengen bzw. ohne Partikel auf bzw. in der Klebstoffschicht vermieden werden. Folglich resultiert ein effektiver Schutz gegenüber Schad- bzw. Giftstoffen sozusagen über die gesamte Fläche der Einheit bzw. des Schutzmaterials nach der Erfindung, da durch die zufällige Anordnung der in einer Vielzahl vorliegenden Partikel Durchbruchstellen oder Bereiche niedriger Partikelmengen bzw. partikelfreie Bereiche vermieden werden.

Die erfindungsgemäß bereitgestellte katalytische bzw. reaktive Einheit weist zudem hervorragende haptische Eigenschaften auf, was gleichermaßen mit der Verwendung einer flächig ausgebildeten Klebstoffschicht auf Basis eines gebrochenen Schaums mit der diesbezüglichen Fixierung relativ kleiner Partikel zusammenhängt. In diesem Zusammenhang weist das Schutzmaterial nach der Erfindung auch hervorragende Eigenschaften hinsichtlich seiner Flexibilität und seines Biegeverhaltens auf, zumal der ausgehärtete bzw. getrocknete, gebrochene Klebstoffpolymerschaum bzw. die entsprechende Klebstoffschicht als solche flexible bzw. reversibel dehnbar (elastisch) ausgebildet ist. Erfindungsgemäß ist es somit insbesondere vorgesehen, dass der ausgehärtete bzw. getrocknete, gebrochene Klebstoffpolymerschaum bzw. die Klebstoffschicht flexibel und/oder elastisch und/oder reversibel dehnbar ausgebildet ist.

Zudem führt der zweckgerichtete Einsatzes eines gebrochenen Klebstoffpolymerschaums gleichzeitig auch zur Bereitstellung einer hohen Luftdurchlässigkeit der zugrundeliegenden Klebstoffschicht, einhergehend mit einer verbesserten Tragephysiologie infolge der resultierenden hohen Atmungsaktivität des Schutzmaterials insgesamt. Im Rahmen der vorliegenden Erfindung ist es dabei auch gelungen, textile Schutzmaterialien nach der Erfindung bereitzustellen, welche gegenüber dem Stand der Technik und in Relation zu den bereitgestellten Schutzeigenschaften über ein weiterführend verringertes Flächengewicht verfügen, da auch aufgrund der hervorragenden Fixierbarkeit der eingesetzten katalytischen bzw. reaktiven Partikel an (d. h. auf und in) dem gebrochenen Schaum kleinere Partikelgrößen in Bezug auf die eingesetzten Partikel und insgesamt geringere Klebstoffmengen eingesetzt werden können. Aufgrund der insbesondere stochastisch-homogenen Ausbildung kann zudem die Auftragsmenge an katalytischen bzw. reaktiven Partikeln selbst reduziert werden, und zwar ohne die Leistungsfähigkeit des Materials insgesamt zu verringern. In diesem Zusammenhang kann auch die Dicke der Klebstoffschicht und folglich die Dicke der resultierenden Einheit bzw. des Schutzmaterials insgesamt verringert werden.

Infolge des zerstörten bzw. gebrochenen bzw. zerfallenen Schaums resultiert zudem eine Vielzahl an Durchbrechungen, Poren, Kanälen bzw. Öffnungen in dem zerstörten bzw. gebrochenen bzw. zerfallenen Schaumsystem der Klebstoffschicht, welche sich insbesondere durch die gesamte Schicht(-dicke) ziehen, was zu der sozusagen im Rahmen der Brechung bzw. des Zerfalls des Schaums entstehenden Luftdurchlässigkeit der Klebstoffschicht somit der erfindungsgemäßen Einheit insgesamt mit der hohen Zugänglichkeit der an der Klebstoffschicht angebrachten bzw. fixierten katalytischen bzw. reaktiven Partikel führt.

Wie nachfolgend noch für das erfindungsgemäße Verfahren angeführt, wird erfindungsgemäß bei der Herstellung des Schutzmaterials mit der gebrochenen Schaumstruktur insbesondere derart vorgegangen, dass ein zunächst intakter und nicht getrockneter bzw. nicht (vollständig) ausgehärteter Schaum zur Bereitstellung der Klebstoffschicht auf einen textilen Träger aufgebracht wird, wobei die erfindungsgemäß eingesetzten Partikel (d. h. insbesondere katalytisch bzw. reaktive Partikel einerseits und gegebenenfalls zusätzliche eingesetzte Adsorberpartikel andererseits) zum einen in die (Schaum-)Schicht eingelagert bzw. eingebracht (beispielsweise durch Ausbildung einer Suspension bzw. Immersion der Partikel in den insbesondere aufgeschäumten Klebstoff bzw. in das Klebstoffpolymer vor Aufbringen der Klebstoffschicht auf den Träger) und/oder zum anderen auf die (Schaum-)Schicht aufgebracht werden können (beispielsweise durch Aufstreuen bzw. Aufdrücken auf die Klebstoffschicht nach deren Aufbringen auf den Träger), wobei nachfolgend eine Trocknung bzw. Aushärtung der mit den Partikeln ausgerüsteten Klebstoffschicht unter (Auf-)Brechung bzw. Zerstörung bzw. Verfall des Schaumsystems zum Erhalt des gebrochenen Klebstoffpolymerschaums im getrockneten bzw. ausgehärteten Zustand erfolgt, wobei der schichtartige, zusammenhängende Aufbau der Klebstoffschicht als solcher grundsätzlich erhalten bleibt. Die erfindungsgemäße Verfahrensweise ermöglichst zudem eine homogene, großflächige Beaufschlagung mit den katalytischen bzw. reaktiven Partikeln bei gleichzeitig geringen Flächengewichten des aufgetragenen und zur Fixierung eingesetzten Klebstoffpolymers.

Insgesamt resultiert somit ein Schutzmaterial bzw. eine erfindungsgemäße Einheit mit hoher Luftdurchlässigkeit, welches bzw. welche sich aufgrund seiner bzw. ihrer hohen Schutzfunktion gegenüber Schad- bzw. Giftstoffen der vorgenannten Art, insbesondere chemischen bzw. biologischen Kampfstoffen, auch für den Einsatz im Bereich des ABC-Schutzes bzw. NBC-Schutzes (*nuclear biological, chemical*) eignet, zumal die erfindungsgemäße Einheit auch über entsprechende Schutzeigenschaften in Bezug auf nukleare bzw. radioaktive Schad- bzw. Giftstoffe verfügt, insbesondere bei zusätzlicher Verwendung von Adsorberpartikeln, beispielsweise auf Basis von Aktivkohle.

Bei der erfindungsgemäßen katalytischen bzw. reaktiven Einheit handelt es sich insbesondere um ein funktionales Gebilde aus mehreren Komponenten. Bei den der erfindungsgemäßen Einheit zugrundeliegenden Komponenten handelt es sich insbesondere um einen vorzugsweise textilen Träger sowie einer darauf aufgebrachten und in spezieller Weise in Form eines getrockneten bzw. ausgehärteten, insbesondere vernetzten, gebrochenen Klebstoffpolymerschaums vorliegenden Klebstoffschicht. Dabei weist die erfindungsgemäße Einheit zudem als weitere Komponente katalytische bzw. reaktive Partikel auf, welche insbesondere auf die Klebstoffschicht aufgebracht bzw. in die Klebstoffschicht eingelagert bzw. integriert sind. Zudem weist - in nicht beschränkender Weise - die katalytische bzw. reaktive Einheit, wie nachfolgend noch angeführt, eine Vielzahl an Adsorberpartikeln zur zusätzlichen Bereitstellung von adsorptiven Eigenschaften sowie gegebenenfalls mindestens eine Abdeckschicht bzw. mindestens ein Abdeckmaterial auf.

Nachfolgend wird die vorliegende Erfindung anhand erfindungsgemäßer Ausführungsformen, welche jedoch nicht beschränkend sind, weiterführend beschrieben:
Die Ausrüstung der erfindungsgemäßen katalytischen bzw. reaktiven Einheit mit den katalytischen bzw. reaktiven Partikeln kann, wie zuvor angeführt, in vielfältiger Weise erfolgen. Insbesondere kann es erfindungsgemäß vorgesehen sein, dass die katalytischen bzw. reaktiven Partikel auf und/oder in der Klebstoffschicht angeordnet bzw. zumindest teilweise in die Klebstoffschicht eingelagert bzw. integriert sind. Mit anderen Worten kann es somit zum einen erfindungsgemäß vorgesehen sein, dass die katalytischen bzw. reaktiven Partikel sozusagen zweidimensional insbesondere auf der dem Träger abgewandten Seite der Klebstoffschicht angeordnet sind. Gemäß dieser Anordnung können die in Rede stehenden katalytischen bzw. reaktiven Partikel sozusagen eine auf der Klebstoffschicht angeordnete katalytische bzw. reaktive Schicht ausbilden. Zudem kann es erfindungsgemäß zum anderen gleichermaßen und unabhängig hiervon vorgesehen sein, dass die katalytischen bzw. reaktiven Partikel in die Klebstoffschicht eingelagert bzw. integriert sind, so dass hierdurch sozusagen eine dreidimensionale Anordnung der Partikel in der Klebstoffschicht vorliegt.

Erfindungsgemäß können die jeweiligen Anordnungen der katalytischen bzw. reaktiven Partikel, wie zuvor beschrieben, unabhängig voneinander oder gemeinsam realisiert werden bzw. vorliegen, d. h. erfindungsgemäß können katalytische bzw. reaktive Einheiten bereitgestellt werden, bei welchen nur die Oberfläche der Klebstoffschicht oder nur die Klebstoffschicht sozusagen in ihrem Inneren oder bei welchen die Klebstoffschicht in ihrem Inneren und gleichermaßen deren Oberfläche mit den zugrundeliegenden Partikeln ausgerüstet ist bzw. sind. Folglich können solche Einheiten nach der Erfindung bereitgestellt werden, bei welchen die reaktiven Partikel in die Klebstoffschicht eingelagert (beispielsweise durch Einmischen in die der Klebstoffschicht zugrundeliegende Klebstoffmasse insbesondere vor deren Auftrag auf den Träger) und/oder auf der Oberfläche aufgebracht sind (z. B. durch Aufstreuen oder dergleichen insbesondere auf die noch nicht (vollständig) ausgehärtete Klebstoffschicht).

Erfindungsgemäß kann die Einheit nach der Erfindung einen schichtförmigen bzw. lagenförmigen Aufbau aufweisen. Dieser Aufbau wird dabei insbesondere durch den Träger einerseits und die darauf aufgebrachte Klebstoffschicht andererseits bereitgestellt bzw. ausgebildet. In diesem Zusammenhang können der Träger und die Klebstoffschicht schichtförmig bzw. lagenförmig angeordnet sein.

Gemäß dem vorliegenden Aspekt betrifft die vorliegende Erfindung auch eine katalytische bzw. reaktive Einheit, insbesondere wie zuvor definiert, in Form eines Schutzmaterials mit katalytischen bzw. reaktiven Eigenschaften, insbesondere mit Schutzfunktion gegenüber chemischen bzw. biologischen Schad- bzw. Giftstoffen, vorzugsweise in Form eines textilen Schutzfiltermaterials, wobei die Einheit umfasst:
(a) einen insbesondere luftdurchlässigen Träger, insbesondere in Form eines textilen Trägers;
(b) eine auf den Träger aufgebrachte Klebstoffschicht, wobei die Klebstoffschicht eine luftdurchlässige und/oder diskontinuierlich ausgebildete Schicht auf Basis eines getrockneten und ausgehärteten, insbesondere vernetzten, gebrochenen Klebstoffpolymerschaums ist; und
(c) eine Vielzahl diskreter katalytischer und/oder reaktiver Partikel, wobei die katalytischen und/oder reaktiven Partikel mittels Verklebung mit dem Träger dauerhaft verbunden sind und/oder mit dem Träger verklebt sind, wobei die Verbindung und/oder Verklebung durch die auf den Träger aufgebrachte Klebstoffschicht erfolgt,
wobei die katalytischen und/oder reaktiven Partikel mindestens eine katalytische und/oder reaktive Komponente aufweisen oder hieraus bestehen, wobei die katalytische und/oder reaktive Komponente ein MOF-Material (*Metal Organic Framework*) aufweist oder hieraus besteht, und
wobei die katalytischen und/oder reaktiven Partikel (4) gemeinsam und/oder zusammen mit einer Vielzahl an Aktivkohlepartikeln als diskrete Adsorberpartikel (5) eingesetzt sind.

Was die vorgenannten katalytischen bzw. reaktiven Partikel, wie sie erfindungsgemäß eingesetzt werden, anbelangt, so können diese in vielfältiger Weise ausgestaltet sein:
Im Rahmen der vorliegenden Erfindung verhält es sich derart, dass die vorgenannten katalytischen bzw. reaktiven Partikel mindestens eine katalytische bzw. reaktive Komponente, insbesondere eine katalytische bzw. reaktive Metallkomponente (Metall enthaltende Komponente), aufweisen oder hieraus bestehen.

Was die Menge bzw. den Gehalt an katalytischer bzw. reaktiver Komponente in den erfindungsgemäß eingesetzten katalytischen bzw. reaktiven Partikeln anbelangt, so kann diese im Allgemeinen in großen Bereichen variieren: In diesem Zusammenhang können die katalytischen bzw. reaktiven Partikel die katalytische bzw. reaktive Komponente in Mengen im Bereich von 0,001 Gew.-% bis 100 Gew.-%, insbesondere im Bereich von 0,01 Gew.-% bis 95 Gew.-%, vorzugsweise im Bereich von 0,1 Gew.-% bis 80 Gew.-%, bezogen auf die katalytischen bzw. reaktiven Partikel, enthalten. Insbesondere können die Partikel die katalytische bzw. reaktive Komponente, wie nachfolgend angeführt, auch in Reinform und/oder in Masse und/oder ohne Trägerkomponente bzw. als solche enthalten bzw. hieraus bestehen. Darüber hinaus kann die katalytische bzw. reaktive Komponente in den Partikeln gemeinsam mit einer Trägerkomponente bzw. einem Bindemittel vorliegen, wie nachfolgend gleichermaßen noch ausgeführt.

Im Rahmen der vorliegenden Erfindung kann es insbesondere vorgesehen sein, dass die katalytische und/oder reaktive Komponente in Masse und/oder in Reinform und/oder ohne Trägerkomponente und/oder als solche eingesetzt wird bzw. dass die katalytischen und/oder reaktiven Partikel (4) aus der katalytischen und/oder reaktiven Komponente in Masse und/oder in Reinform und/oder ohne Trägerkomponente und/oder als solcher bestehen bzw. hieraus gebildet sind. Dies ist mit dem Vorteil verbunden, dass bei gleichzeitig hoher katalytischer bzw. reaktiver Leistung bzw. Aktivität für die Partikel geringe Flächenbeladungen realisiert werden können.

Gemäß einer weiterführenden Ausführungsform nach der vorliegenden Erfindung kann es insbesondere vorgesehen sein, dass die katalytischen bzw. reaktiven Partikel die katalytische bzw. reaktive Komponente, insbesondere die katalytische bzw. reaktive Metallkomponente, zusammen mit einer Trägerkomponente aufweisen oder hieraus bestehen.

Diese erfindungsgemäße Ausführungsform fokussiert insbesondere auf eine An- bzw. Einlagerung bzw. Anordnung der katalytischen bzw. reaktiven Komponente an Träger- bzw. Gerüstkomponente zur Ausbildung der katalytischen bzw. reaktiven Partikel (d. h. wonach die katalytischen bzw. reaktiven Partikel aus der Trägerkomponente und der katalytischen bzw. reaktiven Komponente gebildet werden bzw. diese umfassen). Dabei kann die katalytische bzw. reaktive Komponente beispielsweise in eine insbesondere poröse bzw. innere Hohlräume aufweisende Trägerkomponente bzw. Trägersubstanz eingebracht vorliegen.

Was die im Zusammenhang mit der katalytischen bzw. reaktiven Komponente gegebenenfalls eingesetzte Trägerkomponente anbelangt, so kann es erfindungsgemäß vorgesehen sein, dass die Trägerkomponente mindestens ein anorganisches, organisches oder anorganisch-organisches Bindemittel bzw. eine insbesondere poröse bzw. innere Hohlräume aufweisende Trägerkomponente bzw. Trägersubstanz umfasst oder hieraus besteht.

Erfindungsgemäß kann die katalytische bzw. reaktive Komponente, insbesondere die katalytische bzw. reaktive Metallkomponente, dabei an der Trägerkomponente insbesondere chemisch bzw. physikalisch fixiert bzw. hierin eingelagert sein. Zudem kann die Trägerkomponente mit der katalytischen bzw. reaktiven Komponente, insbesondere mit der katalytischen bzw. reaktiven Metallkomponente, dotiert bzw. imprägniert sein. Im Allgemeinen kann die katalytische bzw. reaktive Komponente somit an (d. h. auf und/oder in) der Trägerkomponente zur Ausbildung der katalytischen bzw. reaktiven Partikel angebracht sein, und zwar insbesondere auf Basis einer chemischen und/oder physikalischen Fixierung bzw. Dotierung und/oder Imprägnierung. Erfindungsgemäß kann das insbesondere organische Bindemittel bzw. die Trägerkomponente ein Polymer, insbesondere organisches Polymer, sein. Insbesondere kann das Bindemittel bzw. die Trägerkomponente ausgewählt sein aus der Gruppe von Polyestern, Polystyrolen, Poly(meth-)-acrylaten, Polyacrylaten, Cellulosen, Polyamiden, Polyolefinen, Polyalkylenoxiden und deren Mischungen sowie Kombinationen.

Gemäß der vorliegenden erfindungsgemäßen Ausführungsform kann es insbesondere vorgesehen sein, dass die katalytischen bzw. reaktiven Partikel die katalytische bzw. reaktive Komponente, insbesondere die katalytische bzw. reaktive Metallkomponente, in Mengen im Bereich von 0,001 Gew.-% bis 100 Gew.-%, insbesondere im Bereich von 0,005 Gew.-% bis 99,5 Gew.-%, vorzugsweise im Bereich von 0,01 Gew.-% bis 95 Gew.-%, bevorzugt im Bereich von 0,05 Gew.-% bis 90 Gew.-%, besonders bevorzugt im Bereich von 0,1 Gew.-% bis 80 Gew.-%, ganz besonders bevorzugt im Bereich von 0,25 Gew.-% bis 50 Gew.-%, weiter bevorzugt im Bereich von 0,5 Gew.-% bis 30 Gew.-%, noch weiter bevorzugt im Bereich von 1 Gew.-% bis 20 Gew.-%, nochmals weiter bevorzugt im Bereich von 2 Gew.-% bis 10 Gew.-%, bezogen auf die katalytischen und/oder reaktiven Partikel, enthalten.

Im Allgemeinen kann es im Rahmen der vorliegenden Erfindung somit gemäß dieser Ausführungsform vorgesehen sein, dass die katalytische bzw. reaktive Komponente einerseits und die Trägerkomponente andererseits die erfindungsgemäß eingesetzten katalytischen bzw. reaktiven Partikel als solche ausbilden.

Erfindungsgemäß sind die katalytischen bzw. reaktiven Partikel auf Basis von Metall- bzw. Metallverbindungen enthaltenden insbesondere porösen Gerüstmaterialien, und zwar auf Basis von MOF-Materialien (*Metal Organic Framework*), ausgebildet:
In diesem Zusammenhang weist die katalytische bzw. reaktive Komponente das MOF-Material (*Metal Organic Framework*) auf oder besteht hieraus.

Im Allgemeinen weisen die erfindungsgemäß eingesetzten MOF-Materialien eine hohe katalytische bzw. reaktive Leistungsfähigkeit auf. Zudem liegt bei den erfindungsgemäß eingesetzten MOF-Materialien eine gute Verarbeitbarkeit in insbesondere wässrigen oder wässrig-basierten bzw. Wasser enthaltenden Medien vor.

Insbesondere kann das MOF-Material (*Metal Organic Framework*) sich wiederholende Struktureinheiten auf Basis jeweils mindestens eines Metalls, insbesondere Metallatoms oder Metallions, insbesondere wie vorliegend definiert, einerseits und mindestens eines wenigstens bidentaten (zweizähnigen) und/oder verbrückenden organischen Liganden, insbesondere wie nachfolgend definiert, andererseits aufweisen oder hieraus bestehen.

Zudem kann das MOF-Material (*Metal Organic Framework*) mindestens ein Metall, insbesondere Metallatom oder Metallion, insbesondere wie vorliegend definiert, aufweisen.

In diesem Zusammenhang kann das Metall insbesondere ausgewählt sein aus Elementen der Gruppen 1 bis 14 des Periodensystems der Elemente, insbesondere aus Elementen der Gruppen 4, 8, und 11 bis 13 des Periodensystems der Elemente. Insbesondere kann das Metall ausgewählt sein aus der Gruppe von Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Si, Ge, Sn, Pb, As, Sb und Bi, insbesondere aus der Gruppe von Ti, Zn, Cu, Zr, Ni, Pd, Pt, Ru, Th, Fe, Mn, Ag, Al und Co, vorzugsweise aus der Gruppe von Ti, Cu, Zr, Fe, Co, Zn, Mn, Al und Ag, bevorzugt aus der Gruppe von Cu, Fe, Al und Zn. Erfindungsgemäß kommen vorzugsweise solche Metalle zum Einsatz, welche insbesondere in Kombination mit entsprechenden Liganden zu MOF-Materialien mit weiterführend erhöhter Stabilität gegen Wasserdampf bzw. Feuchte bzw. Hydrolyse bzw. mit verbesserter Verarbeitbarkeit in insbesondere wässrigen oder wässrig-basierten bzw. Wasser enthaltenden Medien führen.

Weiterhin kann das MOF-Material (*Metal Organic Framework*) mindestens einen wenigstens bidentaten (zweizähnigen) bzw. verbrückenden organischen Liganden aufweisen. Insbesondere kann der Ligand mindestens eine funktionelle Gruppe aufweisen, welche imstande ist, zu einem Metall, insbesondere Metallatom oder Metallion, insbesondere wie zuvor definiert, mindestens zwei koordinative Bindungen auszubilden bzw. zu zwei oder mehreren Metallen, insbesondere Metallatomen oder Metallionen, insbesondere wie zuvor definiert, gleich oder verschieden, jeweils eine koordinative Bindung auszubilden, insbesondere wobei die funktionelle Gruppe des Liganden mindestens ein Heteroatom, bevorzugt aus der Gruppe von N, O, S, B, P, Si und AI, besonders bevorzugt N, O und S, aufweist. In diesem Zusammenhang kann der Ligand ausgewählt sein aus mindestens zweiwertigen organischen Säuren, insbesondere Dicarbonsäuren, Tricarbonsäuren, Tetracarbonsäuren und deren Mischungen, besonders bevorzugt gegebenenfalls mindestens einfach substituierten aromatischen, insbesondere mono-, di-, tri-, tetra- oder höherkernigen aromatischen Di-, Tri- oder Tetracarbonsäuren. In diesem Zusammenhang kann jeder der Kerne mindestens ein Heteroatom, gleich oder verschieden, wie insbesondere N, O, S, B, P, Si bzw. AI, bevorzugt N, S bzw. O, enthalten.

Zudem kann das MOF-Material (*Metal Organic Framework*) mit mindestens einem weiteren Metall, ausgewählt aus der Gruppe der Edelmetalle, insbesondere ausgewählt aus der Gruppe von Rt, Rh, Pt, Ag, Au und deren Kombinationen, ausgerüstet, insbesondere dotiert, sein. Dabei kann die Menge an dem weiteren Metall im Bereich von 0,01 Gew.-% bis 15 Gew.-%, insbesondere im Bereich von 0,05 Gew.-% bis 10 Gew.-%, vorzugsweise im Bereich von 0,1 Gew.-% bis 8 Gew.-%, bezogen auf das metallhaltige anorganische, organische oder anorganischorganische Gerüstmaterial, liegen. Hierdurch können die katalytischen bzw. reaktiven Eigenschaften nochmals gesteigert werden.

Das MOF-Material (*Metal Organic Framework*) kann zudem in kristalliner Form vorliegen. Hierbei kann der Kristallinitätsgrad mindestens 60 %, insbesondere mindestens 70 %, vorzugsweise mindestens 80 %, besonders bevorzugt mindestens 90 %, besonders bevorzugt mindestens 95 %, ganz besonders bevorzugt mindestens 99 % oder mehr, betragen.

Erfindungsgemäß kann es zudem vorgesehen sein, dass das MOF-Material (*Metal Organic Framework*) in aktivierter Form, vorzugsweise mittels Wärmebehandlung, insbesondere bei Temperaturen im Bereich von 90 °C bis 300 °C, vorzugsweise 100 °C bis 250 °C, bevorzugt 110 °C bis 220 °C, vorliegt.

Zudem können die katalytischen bzw. reaktiven Partikel aus dem MOF-Material (*Metal Organic Framework*) als katalytische bzw. reaktive Komponente bestehen. Mit anderen Worten können die insbesondere in partikulärer Form vorliegenden Gerüstmaterialien die Partikel als solche ausbilden. Mit anderen Worten kann es erfindungsgemäß vorgesehen sein, dass die katalytischen bzw. reaktiven Partikel aus einer katalytischen bzw. reaktiven Komponente in Form des zuvor genannten MOF-Materials bestehen. Die vorgenannten MOF-Materialien können somit entweder geträgert (d.h. in Kombination mit einer Trägerkomponente bzw. einem Bindemittel) oder aber bevorzugt ungeträgert (d.h. als solche bzw. ohne Trägerkomponente bzw. ohne Bindemittel) bzw. in Masse oder in Reinform bzw. als Reinstoff, vorzugsweise ungeträgert, bzw. in Form von katalytischen bzw. reaktiven Partikeln als solchen eingesetzt werden.

Erfindungsgemäß kann es insbesondere vorgesehen sein, dass die katalytischen bzw. reaktiven Partikel auf Basis des MOF-Materials (*Metal Organic Framework*) ausgebildet sind. Insbesondere können die katalytischen bzw. reaktiven Partikel das MOF-Material (*Metal Organic Framework*) umfassen oder hieraus bestehen, insbesondere hieraus bestehen. Insbesondere kann es somit vorgesehen sein, dass die katalytischen bzw. reaktiven Partikel von der katalytisch bzw. reaktiven Komponente in Form des MOF-Materials (*Metal Organic Framework*) gebildet werden.

In diesem Zusammenhang kann es erfindungsgemäß vorgesehen sein, dass die katalytischen bzw. reaktiven Partikel das MOF-Material (*Metal Organic Framework*) in Masse und/oder als solches enthalten oder hieraus bestehen.

Insbesondere können die katalytischen und/oder reaktiven Partikel das MOF-Material (*Metal Organic Framework*) folglich in Masse und/oder in Reinform und/oder ohne Trägerkomponente und/oder als solches enthalten oder hieraus bestehen, insbesondere hieraus bestehen. In diesem Zusammenhang können die katalytischen und/oder reaktiven Partikel aus der katalytischen und/oder reaktiven Komponente in Form des MOF-Materials (*Metal Organic Framework*) in Masse und/oder in Reinform und/oder ohne Trägerkomponente und/oder als solchem bestehen und/oder hieraus gebildet sein. Diesbezüglich können die katalytischen und/oder reaktiven Partikel eine mittlere Partikelgröße (D50), insbesondere einen mittleren Teilchendurchmesser (D50), im Bereich von 0,0001 mm bis 1 mm, insbesondere im Bereich von 0,0005 mm bis 0,5 mm, vorzugsweise im Bereich von 0,001 mm bis 0,3 mm, bevorzugt im Bereich von 0,003 mm bis 0,2 mm, besonders bevorzugt im Bereich von 0,005 mm bis 0,1 mm, aufweisen. Derartige Partikel lassen sich besonders gut insbesondere in die Klebstoffschicht einlagern bzw. integrieren, wobei gleichzeitig hervorragende katalytische bzw. reaktive Eigenschaften bereitgestellt werden.

Zudem kann das MOF-Material (*Metal Organic Framework*) grundsätzlich aber auch in einer in einer Trägerkomponente, insbesondere in einem anorganischen, organischen oder anorganisch-organischen Bindemittel, bzw. in einer insbesondere porösen bzw. innere Hohlräume aufweisenden Trägerkomponente bzw. Trägersubstanz eingebrachten Form vorliegen.

Beispielsweise können die katalytischen bzw. reaktiven Partikel das MOF-Material (*Metal Organic Framework*) einerseits und die Trägerkomponente andererseits in einem Gerüstmaterial/Trägerkomponente-Mengenverhältnis, insbesondere Gerüstmaterial/Trägerkomponente-Gewichtsverhältnis, im Bereich von 1:0,5 bis 15 : 1, insbesondere im Bereich von 1 : 1 bis 10 : 1, vorzugsweise im Bereich von 1,2 : 1 bis 3 : 1, besonders bevorzugt im Bereich von 1,4 : 1 bis 2,5 : 1, enthalten und insbesondere von mehr als 1 (> 1, d.h. unter Ausschluss von 1) enthalten.

Die diesbezüglich eingesetzte Trägerkomponente kann mindestens ein organisches Bindemittel, insbesondere ein organisches Polymer, umfassen bzw. hieraus bestehen. In diesem Zusammenhang kann das organische Bindemittel bzw. die Trägerkomponente ausgewählt sein aus der Gruppe von Polyestern, Polystyrolen, Poly(meth-)acrylaten, Polyacrylaten, Cellulosen, Polyamiden, Polyolefinen, Polyalkylenoxiden und deren Kombinationen und Mischungen.

Die im Rahmen der vorliegenden Erfindung einsetzbaren MOF-Materialien zeichnen sich durch hervorragende katalytische bzw. reaktive Eigenschaften aus, welche vor dem jeweiligen Einsatz- bzw. Anwendungszweck maßgeschneidert werden können. Zudem besteht ein weiterer Vorteil der Verwendung von MOF-Materialien darin, dass diese als solche bzw. in Reinform und somit ohne weitere Trägerkomponente bzw. Bindemittel in Form von katalytischen bzw. reaktiven Partikeln als solche eingesetzt werden können, und zwar insbesondere was die Einarbeitung bzw. Integration der entsprechenden Partikel in die Klebstoffschicht anbelangt.

Darüber hinaus kann zu weiterführenden Einzelheiten zu den erfindungsgemäß einsetzbaren katalytischen bzw. reaktiven Partikeln auf Basis von MOF-Materialien verwiesen werden auf die internationale Patentanmeldung WO 2009/056184 A1 sowie auf die parallele deutsche Patentanmeldung DE 10 2008 005 218 A1 und auf die parallele US-Patentanmeldung gemäß der US 2011 010 826 A, deren jeweilige Offenbarung hiermit durch Bezugnahme vollumfänglich eingeschlossen ist.

Was die körperliche Ausbildung bzw. Formgebung der erfindungsgemäß eingesetzten katalytischen bzw. reaktiven Partikel weiterhin anbelangt, so kann es erfindungsgemäß vorgesehen sein, dass die katalytischen bzw. reaktiven Partikel kornförmig bzw. kugelförmig, insbesondere kugelförmig, ausgebildet sind. Hierdurch kann die Ausrüstung der erfindungsgemäßen Einheit mit den in Rede stehenden Partikeln entsprechend verbessert werden, da die korn- bzw. kugelförmigen Partikel beispielsweise ein besseres Schüttverhalten aufweisen und zudem besser (d. h. mit homogener Beladung bzw. Belegung) in das Material eingearbeitet bzw. hieran aufgebracht werden können.

Darüber hinaus kann die Partikelgröße der erfindungsgemäß eingesetzten katalytischen bzw. reaktiven Partikel in großen Bereichen variieren. Erfindungsgemäß ist es jedoch von Vorteil, wenn die katalytischen bzw. reaktiven Partikel eine Partikelgröße, insbesondere einen Teilchendurchmesser, im Bereich von 0,0001 mm bis 2,5 mm, insbesondere im Bereich von 0,0005 mm bis 2 mm, vorzugsweise im Bereich von 0,001 mm bis 1,5 mm, bevorzugt im Bereich von 0,003 mm bis 1 mm, besonders bevorzugt im Bereich von 0,005 mm bis 0,8 mm, ganz besonders bevorzugt im Bereich von 0,01 mm bis 0,5 mm, aufweisen. In diesem Zusammenhang sollten mindestens 80 %, insbesondere mindestens 90 %, vorzugsweise mindestens 95 % der katalytischen bzw. reaktiven Partikel, bezogen auf die Gesamtanzahl der katalytischen bzw. reaktiven Partikel, Partikelgrößen, insbesondere Teilchendurchmesser, in den vorgenannten Bereichen aufweisen.

Insbesondere können die katalytischen bzw. reaktiven Partikel eine mittlere Partikelgröße (D50), insbesondere einen mittleren Teilchendurchmesser (D50), im Bereich von 0,0001 mm bis 2,5 mm, insbesondere im Bereich von 0,0005 mm bis 2 mm, vorzugsweise im Bereich von 0,001 mm bis 1,5 mm, bevorzugt im Bereich von 0,003 mm bis 1 mm, besonders bevorzugt im Bereich von 0,005 mm bis 0,8 mm, ganz besonders bevorzugt im Bereich von 0,01 mm bis 0,5 mm, aufweisen.

Was die erfindungsgemäße Ausführungsform anbelangt, wonach die katalytischen bzw. reaktiven Partikel in die Klebstoffschicht eingebracht bzw. integriert werden, so werden diesbezüglich besonders gute Ergebnisse erreicht, wenn die eingesetzten katalytischen bzw. reaktiven Partikel eine relativ kleine Partikelgröße bzw. einen relativ kleinen mittleren Teilchendurchmesser aufweisen. So ist es im Rahmen der vorliegenden Erfindung diesbezüglich von Vorteil, wenn die katalytischen bzw. reaktiven Partikel eine mittlere Partikelgröße (D50), insbesondere einen mittleren Teilchendurchmesser (D50), im Bereich von 0,0001 mm bis 1 mm, insbesondere im Bereich von 0,0005 mm bis 0,5 mm, vorzugsweise im Bereich von 0,001 mm bis 0,1 mm, aufweisen. Die relativ kleinen Partikel lassen sich dabei besonders gut in die Schaumstruktur einarbeiten bzw. integrieren.

Für die erfindungsgemäße Ausführungsform, wonach die katalytischen bzw. reaktiven Partikel auf der Klebstoffschicht angeordnet sind, hat es sich demgegenüber insbesondere von Vorteil erwiesen, wenn die diesbezüglich eingesetzten Partikel eine relativ große mittlere Partikelgröße bzw. einen relativ großen mittleren Teilchendurchmesser aufweisen. Insbesondere ist es erfindungsgemäß von Vorteil, wenn die katalytischen bzw. reaktiven Partikel eine mittlere Partikelgröße (D50), insbesondere einen mittleren Teilchendurchmesser (D50), im Bereich von 0,001 mm bis 2,5 mm, insbesondere im Bereich von 0,002 mm bis 2 mm, vorzugsweise im Bereich von 0,003 mm bis 1 mm, bevorzugt im Bereich von 0,005 mm bis 0,5 mm, aufweisen. Hierdurch wird ein übermäßiges Einsinken der Partikel in die Klebstoffschicht verhindert.

Bezüglich der der Teilchen- bzw. Partikelgrößenbestimmung zugrundeliegenden Methoden bzw. Messverfahren kann auf nachfolgende Ausführungen verwiesen werden.

Im Allgemeinen können die katalytischen bzw. reaktiven Partikel zur Gewährleistung einer effizienten Schutzfunktion gegenüber den in Rede stehenden Schad- bzw. Giftstoffen in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², eingesetzt werden. Mit anderen Worten kann die erfindungsgemäße Einheit die katalytischen bzw. reaktiven Partikel in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², aufweisen. Die zuvor angeführten Mengenangaben beziehen sich dabei insbesondere auf die Fläche der erfindungsgemäßen Einheit bzw. des der Einheit zugrundeliegenden insbesondere textilen Trägers.

Erfindungsgemäß können die katalytischen bzw. reaktiven Partikel auf bzw. in der Klebstoffschicht in zufälliger bzw. stochastischer Weise bzw. stochastisch-homogen angeordnet sein. Insbesondere können die katalytischen bzw. reaktiven Partikel zumindest teilweise in die Klebstoffschicht in zufälliger bzw. stochastischer Weise bzw. stochastisch-homogen eingelagert bzw. integriert sein. Hierzu kann auch auf obige Ausführungen verwiesen werden.

Die katalytischen bzw. reaktiven Partikel können zumindest im Wesentlichen vollständig oder aber zumindest teilweise auf der Klebstoffschicht angeordnet sein bzw. vorliegen. Diesbezüglich können mindestens 50 %, insbesondere mindestens 70 %, vorzugsweise mindestens 90 %, bevorzugt mindestens 95 %, der katalytischen und/oder reaktiven Partikel, bezogen auf die Gesamtanzahl der katalytischen und/oder reaktiven Partikel, auf der Klebstoffschicht angeordnet sein bzw. vorliegen. Die vorgenannten Prozentwerte beziehen sich auf die Gesamtanzahl der katalytischen bzw. reaktiven Partikel in der erfindungsgemäßen Einheit. In diesem Zusammenhang können die insbesondere auf der dem Träger abgewandten Seite bzw. Oberfläche der Klebstoffschicht angeordneten katalytischen bzw. reaktiven Partikel eine katalytische bzw. reaktive Schicht innerhalb der erfindungsgemäßen Einheit ausbilden.

Erfindungsgemäß kann es auch vorgesehen sein, dass die katalytischen bzw. reaktiven Partikel zumindest im Wesentlichen vollständig oder aber zumindest teilweise in der Klebstoffschicht angeordnet sind bzw. vorliegen, insbesondere in die Klebstoffschicht eingelagert bzw. integriert sind. In diesem Zusammenhang können mindestens 50 %, insbesondere mindestens 70 %, vorzugsweise mindestens 90 %, bevorzugt mindestens 95 %, der katalytischen bzw. reaktiven Partikel, bezogen auf die Gesamtanzahl der katalytischen bzw. reaktiven Partikel, in der Klebstoffschicht angeordnet sein bzw. vorliegen, insbesondere in die Klebstoffschicht eingelagert bzw. integriert sein. Dabei sind die katalytischen bzw. reaktiven Partikel, insbesondere an den jeweiligen Strukturen des gebrochenen Schaums, beispielsweise an den zerstörten Wandungen, Lamellen, Stegen des dem gebrochenen Schaum zugrundeliegenden Klebstoffpolymers, angebracht bzw. fixiert.

Im Rahmen der vorliegenden Erfindung hat es sich dabei von Vorteil erwiesen, wenn die auf der Klebstoffschicht angeordneten bzw. vorliegenden katalytischen bzw. reaktiven Partikel eine größere mittlere Partikelgröße (D50), insbesondere einen größeren mittleren Teilchendurchmesser (D50), als die zumindest im Wesentlichen vollständig oder aber zumindest teilweise in der Klebstoffschicht angeordneten bzw. vorliegenden, insbesondere in die Klebstoffschicht integrierten bzw. eingebrachten katalytischen bzw. reaktiven Partikel aufweisen.

In diesem Zusammenhang kann das Verhältnis der mittleren Partikelgröße, insbesondere des mittleren Teilchendurchmesser (D50), der zumindest im Wesentlichen vollständig oder aber zumindest teilweise auf der Klebstoffschicht angeordneten bzw. vorliegenden katalytischen bzw. reaktiven Partikel einerseits zu der mittleren Partikelgröße (D50), insbesondere dem mittleren Teilchendurchmesser (D50), der zumindest im Wesentlichen vollständig oder aber zumindest teilweise in der Klebstoffschicht angeordneten bzw. vorliegenden, insbesondere in die Klebstoffschicht integrierten bzw. eingebrachten katalytischen bzw. reaktiven Partikel andererseits [Partikelgröße (D50), insbesondere mittlerer Teilchendurchmesser (D50), der aufgelagerten katalytischen bzw. reaktiven Partikel: Partikelgröße (D50), insbesondere mittlerer Teilchendurchmesser (D50), der eingelagerten katalytischen bzw. reaktiven Partikel] im Bereich von 100 : 1 bis 1 : 1, insbesondere im Bereich von 50 : 1 bis 1,05 : 1, vorzugsweise im Bereich von 40 : 1 bis 1,1 : 1, bevorzugt im Bereich von 30 : 1 bis 1,5 : 1, besonders bevorzugt im Bereich von 20 : 1 bis 2 : 1, ganz besonders bevorzugt im Bereich von 10 : 1 bis 3 : 1, liegen.

Gemäß dieser erfindungsgemäß bevorzugten Ausführungsform können sich somit die relativ großen katalytischen bzw. reaktiven Partikel vorrangig an oder im Bereich der Oberfläche der Klebstoffschicht befinden, während die relativ kleinen Partikel vorrangig in der Klebstoffschicht angeordnet bzw. integriert sind.

Erfindungsgemäß ist es zudem vorgesehen, dass die katalytischen bzw. reaktiven Partikel gemeinsam bzw. in Kombination mit einer Vielzahl an Aktivkohlepartikeln als diskrete Adsorberpartikel eingesetzt sind. In diesem Zusammenhang weist die Einheit nach der Erfindung somit eine Vielzahl diskreter Adsorberpartikel in Form von Aktivkohlepartikeln auf. Insbesondere kann der Träger mit einer Vielzahl diskreter Adsorberpartikel in Form von Aktivkohlepartikeln beaufschlagt und/oder ausgerüstet und/oder versehen sein, wobei die Adsorberpartikel mit dem Träger dauerhaft verbunden sind, insbesondere mittels Verklebung, bzw. mit dem Träger verklebt sind, wobei die Verbindung und/oder Verklebung durch die auf den Träger aufgebrachte Klebstoffschicht erfolgt bzw. bewirkt ist. Die Adsorberpartikel können dabei auf und/oder in der Klebstoffschicht angeordnet und/oder zumindest teilweise in die Klebstoffschicht eingelagert bzw. integriert, vorzugsweise in der Klebstoffschicht angeordnet und/oder zumindest teilweise in die Klebstoffschicht eingelagert bzw. integriert, sein.

Hierdurch können in gezielter Weise die katalytischen und reaktiven Eigenschaften der erfindungsgemäßen Einheit mit adsorptiven Eigenschaften ergänzt werden. Dabei verhält es sich im Rahmen der vorliegenden Erfindung insbesondere derart, dass sich die katalytischen bzw. reaktiven Partikel einerseits und die Adsorberpartikel, insbesondere auf Basis von Aktivkohlepartikeln, andererseits hinsichtlich der Unschädlichmachung von Schad- bzw. Giftstoffen funktional ergänzen, wobei sich die in Rede stehenden Komponenten in ihrer Wirkweise über die Summe der Einzelmaßnahmen hinaus verstärken. Insbesondere liegt, ohne sich auf diese Theorie beschränken zu wollen, eine gegenseitige Entlastung von katalytischem bzw. reaktivem System einerseits und adsorptivem System andererseits vor. Insbesondere können auch von den Adsorberpartikeln insbesondere bei hoher Schadstoffbeladung gegebenenfalls desorbierte Schad- bzw. Giftstoffe nachfolgend durch die katalytischen bzw. reaktiven Partikel abgebaut werden.

Was darüber hinaus die im Rahmen der vorliegenden Erfindung in Ergänzung zu den katalytischen bzw. reaktiven Partikeln einsetzbaren Adsorberpartikel in Form von Aktivkohle bzw. Aktivkohlepartikeln (nachfolgend auch nur als Aktivkohle bezeichnet) anbelangt, so können die vorliegend aufgeführten Parameter mit genormten oder explizit angegebenen Bestimmungsverfahren oder mit dem Fachmann an sich geläufigen Bestimmungsmethoden bestimmt werden. Insbesondere die Parameterangaben betreffend die Charakterisierung der Porosität der Porengrößenverteilung und andere Adsorptionseigenschaften ergeben sich im Allgemeinen jeweils aus den entsprechenden Stickstoffsorptionsisothermen der betreffenden Aktivkohle bzw. der vermessenen Produkte. Zudem kann die Porenverteilung, insbesondere auch im Hinblick auf den Gehalt an Mikroporen in Bezug auf das Gesamtporenvolumen, auf Basis der DIN 66135-1 bestimmt werden.

Erfindungsgemäß ist es von Vorteil, wenn die Adsorberpartikel bzw. Aktivkohlepartikel kornförmig bzw. kugelförmig, insbesondere kugelförmig, ausgebildet sind. Insbesondere können die Adsorberpartikel bzw. Aktivkohlepartikel eine Partikelgröße, insbesondere einen Teilchendurchmesser, im Bereich von 0,005 mm bis 2,5 mm, vorzugsweise 0,01 mm bis 2 mm, bevorzugt 0,015 mm bis 0,5 mm, besonders bevorzugt 0,02 mm bis 0,3 mm, ganz besonders bevorzugt 0,03 mm bis 0,15 mm, aufweisen. Diesbezüglich sollten mindestens 80%, insbesondere mindestens 90 %, vorzugsweise mindestens 95 % der Adsorberpartikel, bezogen auf die Gesamtanzahl der Adsorberpartikel, Partikelgrößen, insbesondere Teilchendurchmesser, in den vorgenannten Bereichen aufweisen.

Zudem sollten die Adsorberpartikel bzw. Aktivkohlepartikel eine mittlere Partikelgröße (D50), insbesondere einen mittleren Teilchendurchmesser (D50), im Bereich von 0,005 mm bis 2,5 mm, vorzugsweise 0,01 mm bis 2 mm, bevorzugt 0,015 mm bis 0,5 mm, besonders bevorzugt 0,02 mm bis 0,3 mm, ganz besonders bevorzugt 0,03 mm bis 0,15 mm, aufweisen.

Was die erfindungsgemäße Ausführungsform des Einbringens bzw. der Integration der Adsorberpartikel in die Klebstoffschicht bzw. den der Klebstoffschicht zugrundeliegenden gebrochenen Schaum anbelangt, so hat es sich auch hier erfindungsgemäß als vorteilhaft erwiesen, wenn diesbezüglich relativ kleine Partikelgrößen eingesetzt werden. In diesem Zusammenhang können die Adsorberpartikel bzw. Aktivkohlepartikel eine mittlere Partikelgröße (D50), insbesondere einen mittleren Teilchendurchmesser (D50), im Bereich von 0,005 mm bis 1 mm, insbesondere im Bereich von 0,01 mm bis 0,5 mm, vorzugsweise im Bereich von 0,02 mm bis 0,1 mm, aufweisen.

Was zudem die erfindungsgemäße Ausführungsform mit dem Aufbringen der Adsorberpartikel auf die Klebstoffschicht anbelangt, so hat es sich erfindungsgemäß in entsprechender Weise von Vorteil erwiesen, wenn hierzu relativ große Adsorberpartikel eingesetzt werden. In diesem Zusammenhang können die Adsorberpartikel, eine mittlere Partikelgröße (D50), insbesondere einen mittleren Teilchendurchmesser (D50), im Bereich von 0,01 mm bis 2,5 mm, insbesondere im Bereich von 0,02 mm bis 2,0 mm, vorzugsweise im Bereich von 0,03 mm bis 1,0 mm, bevorzugt im Bereich von 0,03 mm bis 0,5 mm, aufweisen.

Bezüglich der der Teilchen- bzw. Partikelgrößenbestimmung zugrundeliegenden Methoden bzw. Messverfahren kann auf nachfolgende Ausführungen verwiesen werden.

Erfindungsgemäß können die Adsorberpartikel bzw. Aktivkohlepartikel in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², eingesetzt werden. Insbesondere kann die erfindungsgemäße Einheit die Adsorberpartikel bzw. Aktivkohlepartikel in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², aufweisen.

Die Adsorberpartikel bzw. Aktivkohlepartikel können, wie zuvor angeführt, auf bzw. in der Klebstoffschicht, insbesondere in zufälliger bzw. stochastischer Anordnung bzw. in stochastisch-homogener Anordnung, angebracht bzw. angeordnet sein bzw. zumindest teilweise in die Klebstoffschicht, insbesondere in zufälliger bzw. stochastischer Anordnung bzw. stochastisch-homogener Anordnung, eingelagert bzw. integriert sein.

Die Adsorberpartikel können zumindest im Wesentlichen vollständig oder aber zumindest teilweise auf der Klebstoffschicht angeordnet sein. Hierbei können mindestens 50 %, insbesondere mindestens 70 %, vorzugsweise mindestens 90 %, bevorzugt mindestens 95 %, der Adsorberpartikel, bezogen auf die Gesamtanzahl der Adsorberpartikel, auf der Klebstoffschicht angeordnet sein.

Zudem können die Adsorberpartikel bzw. Aktivkohlepartikel zumindest im Wesentlichen vollständig oder aber zumindest teilweise in der Klebstoffschicht angeordnet sein, insbesondere in die Klebstoffschicht eingelagert bzw. integriert sein. Hierbei können mindestens 50 %, insbesondere mindestens 70 %, vorzugsweise mindestens 90 %, bevorzugt mindestens 95 %, der Adsorberpartikel (5), bezogen auf die Gesamtanzahl der Adsorberpartikel, in der Klebstoffschicht (3) angeordnet sein, insbesondere in die Klebstoffschicht eingelagert und/oder integriert sein.

Insbesondere können die Adsorberpartikel bzw. Aktivkohlepartikel in einem Dickenabschnitt mit einer Dicke von mindestens 5 %, insbesondere mindestens 10%, vorzugsweise mindestens 30%, bevorzugt mindestens 50 %, besonders bevorzugt mindestens 70 %, ganz besonders bevorzugt mindestens 90 %, bezogen auf die Gesamtdicke der Klebstoffschicht, in der Klebstoffschicht angeordnet bzw. eingelagert sein bzw. vorliegen, insbesondere in die Klebstoffschicht eingelagert bzw. integriert sein. Der die Adsorberpartikel bzw. Aktivkohlepartikel aufweisende Dickenabschnitt ist dabei insbesondere auf der dem Träger abgewandten Seite der Klebstoffschicht angeordnet. Die Adsorberpartikel bzw. Aktivkohlepartikel können zumindest im Wesentlichen in der gesamten Dicke der Klebstoffschicht in der Klebstoffschicht angeordnet sein bzw. vorliegen, insbesondere in die Klebstoffschicht eingelagert und/oder integriert sein.

Erfindungsgemäß ist es in diesem Zusammenhang von Vorteil, wenn die auf der Klebstoffschicht angeordneten bzw. vorliegenden Adsorberpartikel eine größere mittlere Partikelgröße (D50), insbesondere mittleren Teilchendurchmesser (D50), als die zumindest im Wesentlichen vollständig oder aber zumindest teilweise in der Klebstoffschicht angeordneten bzw. vorliegenden Adsorberpartikel aufweisen.

Diesbezüglich kann das Verhältnis der mittleren Partikelgröße (D50), insbesondere des mittleren Teilchendurchmesser (D50), der zumindest im Wesentlichen vollständig oder aber zumindest teilweise auf der Klebstoffschicht angeordneten bzw. vorliegenden Adsorberpartikel einerseits zu der mittleren Partikelgröße (D50), insbesondere dem mittleren Teilchendurchmesser (D50), der zumindest im Wesentlichen vollständig oder aber zumindest teilweise in der Klebstoffschicht angeordneten bzw. vorliegenden, insbesondere in die Klebstoffschicht integrierten bzw. eingebrachten, Adsorberpartikel andererseits [Partikelgröße (D50), insbesondere mittlerer Teilchendurchmesser (D50), der aufgelagerten Adsorberpartikel : Partikelgröße (D50), insbesondere mittlerer Teilchendurchmesser (D50), der eingelagerten Adsorberpartikel] im Bereich von 100 : 1 bis 1 : 1, insbesondere im Bereich von 50 : 1 bis 1,05 : 1, vorzugsweise im Bereich von 40 : 1 bis 1,1 : 1, bevorzugt im Bereich von 30 : 1 bis 1,5 : 1, besonders bevorzugt im Bereich von 20 : 1 bis 2 : 1, ganz besonders bevorzugt im Bereich von 10 : 1 bis 3 : 1, liegen.

Zudem kann es erfindungsgemäß vorgesehen sein, dass die auf der Klebstoffschicht angeordneten bzw. vorliegenden Adsorberpartikel eine größere mittlere Partikelgröße (D50), insbesondere mittleren Teilchendurchmesser (D50), als die zumindest im Wesentlichen vollständig oder aber zumindest teilweise in der Klebstoffschicht angeordneten bzw. vorliegenden katalytischen bzw. reaktiven Partikel aufweisen. Hierdurch werden die insbesondere in der Schaumstoffschicht angeordneten katalytischen bzw. reaktiven Partikel in besonders effizienter Weise von den auf der Oberfläche der Klebstoffschicht angeordneten Adsorberpartikel entlastet, da im Anwendungsfall auf die erfindungsgemäße Einheit auftreffende Schad- bzw. Giftstoffe zunächst von den auf der Oberfläche angeordneten Adsorberpartikeln aufgenommen bzw. adsorbiert werden, was die in der Klebstoffschicht angeordneten katalytischen bzw. reaktiven Partikel entsprechend entlastet. Zudem führt die Anordnung der Adsorberpartikel auf der Oberfläche der Klebstoffschicht zu einer Verringerung der Strömungsgeschwindigkeit in der Klebstoffschicht mit den darin eingelagerten katalytischen bzw. reaktiven Partikeln, was die Kontaktzeit der Partikel mit den Schad- bzw. Giftstoffen bei gleichzeitig hoher Zugänglichkeit der katalytischen bzw. reaktiven Partikel vergrößert.

Insbesondere kann das Verhältnis der mittleren Partikelgröße (D50), insbesondere des mittleren Teilchendurchmesser (D50), der zumindest im Wesentlichen vollständig oder aber zumindest teilweise auf der Klebstoffschicht angeordneten bzw. vorliegenden Adsorberpartikel einerseits zu der mittleren Partikelgröße (D50), insbesondere dem mittleren Teilchendurchmesser (D50), der zumindest im Wesentlichen vollständig oder aber zumindest teilweise in der Klebstoffschicht angeordneten bzw. vorliegenden, insbesondere in die Klebstoffschicht integrierten bzw. eingebrachten, katalytischen bzw. reaktiven Partikel andererseits [Partikelgröße (D50), insbesondere mittlerer Teilchendurchmesser (D50), der aufgelagerten Adsorberpartikel : Partikelgröße (D50), insbesondere mittlerer Teilchendurchmesser, (D50), der eingelagerten katalytischen bzw. reaktiven Partikel] im Bereich von 100 : 1 bis 1 : 1, insbesondere im Bereich von 50 : 1 bis 1,05 : 1, vorzugsweise im Bereich von 40 : 1 bis 1,1 : 1, bevorzugt im Bereich von 30 : 1 bis 1,5 : 1, besonders bevorzugt im Bereich von 20 : 1 bis 2 : 1, ganz besonders bevorzugt im Bereich von 10 : 1 bis 3 : 1, liegen.

Gemäß einer erfindungsgemäß bevorzugten Ausführungsform, wonach die erfindungsgemäße Einheit katalytische bzw. reaktive als auch adsorptive Eigenschaften aufweist, kann es erfindungsgemäß vorgesehen sein, dass die katalytischen bzw. reaktiven Partikel zumindest im Wesentlichen vollständig oder aber zumindest teilweise in der Klebstoffschicht angeordnet sind, insbesondere in die Klebstoffschicht eingelagert bzw. integriert sind, insbesondere wobei mindestens 50 %, insbesondere mindestens 70 %, vorzugsweise mindestens 90 %, bevorzugt mindestens 95 %, der katalytischen bzw. reaktiven Partikel, bezogen auf die Gesamtanzahl der katalytischen bzw. reaktiven Partikel, in der Klebstoffschicht angeordnet sind, insbesondere in die Klebstoffschicht eingelagert bzw. integriert sind, und dass die Adsorberpartikel, insbesondere Aktivkohlepartikel, zumindest im Wesentlichen vollständig oder aber zumindest teilweise auf der Klebstoffschicht angeordnet sind, insbesondere wobei mindestens 50 %, insbesondere mindestens 70 %, vorzugsweise mindestens 90 %, bevorzugt mindestens 95 %, der Adsorberpartikel, bezogen auf die Gesamtanzahl der Adsorberpartikel, auf der Klebstoffschicht angeordnet sind.

Gemäß dieser Ausführungsform kann es erfindungsgemäß vorgesehen sein, dass die Adsorberpartikel bzw. Aktivkohlepartikel eine größere Partikelgröße, insbesondere einen größeren Teilchendurchmesser, bzw. eine größere mittlere Partikelgröße (D50), insbesondere einen größeren mittleren Teilchendurchmesser (D50), als die katalytischen bzw. reaktiven Partikel aufweisen. Diesbezüglich kann die Partikelgröße, insbesondere der Teilchendurchmesser, bzw. die mittlere Partikelgröße (D50), insbesondere der mittlere Teilchendurchmesser (D50), der Adsorberpartikel um mindestens 10 %, insbesondere mindestens 25 %, vorzugsweise mindestens 50 %, größer sein als die entsprechende Partikel- bzw. Teilchengröße der katalytischen und/oder reaktiven Partikel, bezogen auf die entsprechende Partikel- bzw. Teilchengröße der katalytischen und/oder reaktiven Partikel.

In diesem Zusammenhang ist es insbesondere vorgesehen, dass die Adsorberpartikel bzw. Aktivkohlepartikel auf der dem Träger abgewandten Seite der Klebstoffschicht angeordnet sind.

In diesem Zusammenhang hat die Anmelderin in völlig überraschender Weise gefunden, dass hinsichtlich der Schutzeigenschaften gegenüber den vorgenannten Schad- bzw. Giftstoffen der Anordnung der jeweiligen Partikel und der Abstimmung der Teilchengrößen von Adsorberpartikeln einerseits und katalytischen bzw. reaktiven Partikeln andererseits eine große Bedeutung zukommt. Erfindungsgemäß werden dabei besonders gute Schutzeigenschaften bereitgestellt, wenn die katalytischen bzw. reaktiven Partikel in der Klebstoffschicht und die Adsorberpartikel auf der Klebstoffschicht angeordnet sind und die zugrundeliegenden Partikel die oben angeführten Größen(-verhältnisse) aufweisen.

Erfindungsgemäß ist es vorgesehen, dass die Adsorberpartikel aus insbesondere partikulärer Aktivkohle bzw. Aktivkohlepartikeln, vorzugsweise in Form von Aktivkohleteilchen in Kornform ("Kornkohle") oder Kugelform ("Kugelkohle"), gebildet sind bzw. hieraus bestehen. Erfindungsgemäß handelt es sich somit bei den Adsorberpartikeln um partikuläre Aktivkohle bzw. Aktivkohlepartikel.

Bezüglich weitergehender Eigenschaften zu den erfindungsgemäß eingesetzten Adsorberpartikeln kann auf die diesbezüglichen Unteransprüche verwiesen werden.

Die entsprechenden Partikel- bzw. Teilchengrößen, insbesondere Partikel- bzw. Teilchendurchmesser, der erfindungsgemäß eingesetzten partikulären Körper, insbesondere der katalytischen bzw. reaktiven Partikel bzw. der Adsorberpartikel, können auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Die im Rahmen der vorliegenden Erfindung einsetzbaren Adsorberpartikel in Form von Aktivkohle bzw. Aktivkohlepartikeln sind im Allgemeinen kommerziell erhältlich bzw. handelsüblich. Insbesondere können Aktivkohlen bzw. Aktivkohlepartikel mit den erfindungsgemäß angeführten Spezifikationen zum Einsatz kommen, welche beispielsweise von der Blücher GmbH, Erkrath, Deutschland, oder von der Adsor-Tech GmbH, Premnitz, Deutschland, vertrieben werden.

Gemäß der vorliegenden Erfindung, wonach als Adsorberpartikel bzw. als Adsorptionsmaterial Aktivkohle bzw. Aktivkohlepartikel eingesetzt wird bzw. werden, kann die Aktivkohle zudem erhältlich sein durch Carbonisierung und nachfolgende Aktivierung eines synthetischen bzw. nicht naturstoffbasierten Ausgangsmaterials, insbesondere auf Basis organischer Polymere.

In diesem Zusammenhang kann die Aktivkohle aus einem Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten werden, insbesondere durch Carbonisierung und nachfolgende Aktivierung des Ausgangsmaterials. In diesem Zusammenhang kann der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegen.

Erfindungsgemäß kann das Ausgangsmaterial für die Aktivkohle ein insbesondere sulfoniertes und/oder Sulfonsäuregruppen enthaltendes lonenaustauscherharz, insbesondere vom Geltyp, sein.

Gemäß einer erfindungsgemäß bevorzugten Ausführungsform kann als Aktivkohle eine polymerbasierte sphärische Aktivkohle (PBSAC; *Polymer-based Spherical Activated Carbon*) eingesetzt werden. Insbesondere kann die Aktivkohle eine polymerbasierte sphärische Aktivkohle (PBSAC) sein. Derartige Aktivkohlen zeichnen sich durch hervorragende Adsorptionseigenschaften gegenüber den zuvor genannten Schad- bzw. Giftstoffen und durch hervorragende mechanische Eigenschaften, wie eine hohe Materialhärte sowie eine hohe Abriebshärte, auf.

Die erfindungsgemäß einsetzbare Aktivkohle kann dabei grundsätzlich nach bekannten Verfahren des Standes der Technik erhalten werden: Insbesondere werden zu diesem Zweck kugelförmige sulfonierte organische Polymere, insbesondere auf Basis von divinylbenzolvernetztem Polystyrol, carbonisiert und anschließend zu der betreffenden Aktivkohle aktiviert, insbesondere wie zuvor angeführt. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. auf die parallele, zu derselben Patentfamilie gehörende US 7,737,038 B2 verwiesen werden, deren jeweiliger Inhalt hiermit durch Bezugnahme vollumfänglich eingeschlossen ist. In Bezug auf erfindungsgemäß gleichermaßen einsetzbare mikroporöse Aktivkohle kann zudem auf die auf die Anmelderin selbst zurückgehende europäische Patentanmeldung EP 1 918 022 A1 sowie auf die parallele US 2008/0107589 A1 verwiesen werden, deren jeweilige Offenbarung hiermit durch Bezugnahme vollumfänglich eingeschlossen ist.

Was die Bestimmung der den erfindungsgemäß einsetzbaren Adsorberpartikeln zugrundeliegenden weiterführenden Eigenschaften bzw. Parameter anbelangt, so kann in Ergänzung zu den obigen Ausführungen zudem auf Folgendes verwiesen werden:
Was die Bestimmung des Gesamtporenvolumens nach Gurvich anbelangt, so handelt es sich um eine dem Fachmann auf diesem Gebiet an sich wohlbekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805*,* sowie auf S. Lowell et al., Characterization of Porous Solids and Powders: Surface Area Pore Size and Density, Kluwer Academic Publishers, Article Technology Series, Seiten 111 ff*.* Insbesondere kann das Porenvolumen der Aktivkohle auf Basis der Gurvich-Regel gemäß der Formel V_{P} = Wₐ/ρₗ bestimmt werden, wobei Wₐ die adsorbierte Menge eines zugrundeliegenden Adsorbats und ρₗ die Dichte des eingesetzten Adsorbats darstellt (vgl. auch Formel (8.20) gemäß Seite 111, Kapitel 8.4.) von S. Lowell et al.).

Die Bestimmungsmethode nach Carbon Black ist dem Fachmann an sich bekannt, wobei zudem für weitergehende Einzelheiten zur Bestimmung der Porenoberfläche und des Porenvolumens nach Carbon Black beispielsweise verwiesen werden kann auf R. W. Magee, Evaluation ofthe External Surface Area of Carbon Black by Nitrogen Adsorption, Presented at the Meeting of the Rubber Division of the American Chem. Soc., October 1994*,* z. B. referiert in: Quantachrome Instruments, AUTOSORB-1, AS1 WinVersion 1.50, Operating Manual, OM, 05061, Quantachrome Instruments 2004, Florida, USA, Seiten 71 ff*.* Insbesondere kann die diesbezügliche Auswertung mittels *t-plot-method* erfolgen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Sämtliche BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nicht ausdrücklich abweichend angegeben - die so genannte Multi-Point-BET-Bestimmungsmethode (MP-BET) in einem Partialdruckbereich p/p₀ von 0,05 bis 0,1 angewendet.

Für weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Im Rahmen der vorliegenden Erfindung bezeichnet der Begriff "Mikroporen" solche Poren mit Porendurchmessern von weniger als 2 nm, wohingegen der Begriff "Mesoporen" solche Poren mit Porendurchmessern im Bereich von 2 nm (d.h. 2 nm einschließlich) bis 50 nm einschließlich bezeichnet und der Begriff "Makroporen" solche Poren mit Porendurchmessern von mehr als 50 nm (d.h. > 50 nm) bezeichnet.

Für entsprechende weitere Ausführungsformen bzw. Ausgestaltungen der vorliegenden Erfindung kann auf die die erfindungsgemäße katalytische bzw. reaktive Einheit betreffenden Unteransprüche verwiesen werden.

Erfindungsgemäß wird insgesamt eine katalytische bzw. reaktive Einheit bereitgestellt, welche über eine dauerhaft hohe Schutzfunktion gegenüber Schad- bzw. Giftstoffen der vorgenannten Art verfügt.

Weiterer Gegenstand der vorliegenden Erfindung - gemäß einem **weiteren** Aspekt der vorliegenden Erfindung - ist zudem das erfindungsgemäße Verfahren zur Herstellung der erfindungsgemäßen katalytischen und/oder reaktiven Einheit, insbesondere wie zuvor definiert, in Form eines Schutzmaterials mit katalytischen und/oder reaktiven Eigenschaften, insbesondere mit Schutzfunktion gegenüber chemischen und/oder biologischen Schad- und/oder Giftstoffen, vorzugsweise in Form eines textilen Schutzfiltermaterials, vorzugsweise zur Herstellung eines insbesondere textilen katalytischen und/oder reaktiven Schutzfiltermaterials,
wobei ein insbesondere luftdurchlässiger Träger, insbesondere in Form eines textilen Trägers, mit einer Vielzahl diskreter katalytischer und/oder reaktiver Partikel ausgerüstet wird,
wobei die katalytischen und/oder reaktiven Partikel mindestens eine katalytische und/oder reaktive Komponente aufweisen oder hieraus bestehen,
wobei die katalytische und/oder reaktive Komponente ein MOF-Material (*Metal Organic Framework*) aufweist oder hieraus besteht,
wobei die katalytischen und/oder reaktiven Partikel mit dem Träger mittels Verklebung dauerhaft verbunden werden und/oder mit dem Träger verklebt werden, wobei die Klebstoffschicht als eine luftdurchlässige und/oder diskontinuierlich Schicht auf Basis eines getrockneten und ausgehärteten, insbesondere vernetzten, gebrochenen Klebstoffpolymerschaums ausgebildet wird, und
wobei die Einheit zudem mit einer Vielzahl diskreter Adsorberpartikel ausgerüstet wird.

Für weitere diesbezügliche Ausführungsformen kann auf die entsprechenden, das erfindungsgemäße Verfahren betreffenden Neben- und Unteransprüche verwiesen werden.

Insgesamt wird im Rahmen der vorliegenden Erfindung ein effizientes Verfahren zur Herstellung bzw. Bereitstellung der erfindungsgemäßen katalytischen bzw. reaktiven Einheit bereitgestellt.

Weiterhin betrifft die vorliegende Erfindung - gemäß einem **weiteren** Aspekt der vorliegenden Erfindung - die Verwendung der erfindungsgemäßen katalytischen und/oder reaktiven Einheit, wie zuvor definiert, zur Herstellung von Schutzausrüstung und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen.

In diesem Zusammenhang betrifft die vorliegende Erfindung auch die Verwendung der erfindungsgemäßen katalytischen und/oder reaktiven Einheit, wie zuvor definiert, zur Herstellung von Filtern und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Außerdem sind Gegenstand der vorliegenden Erfindung - gemäß einem **weiteren** Aspekt der vorliegenden Erfindung - die Schutzausrüstungen bzw. Schutzgegenstände aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, hergestellt unter Verwendung der erfindungsgemäßen katalytischen und/oder reaktiven Einheit, wie zuvor definiert, und/oder aufweisend die erfindungsgemäße katalytische und/oder reaktive Einheit, wie zuvor definiert.

Schließlich sind weiterer Gegenstand der vorliegenden Erfindung - gemäß einem **weiteren** Aspekt der vorliegenden Erfindung - Filter und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung der erfindungsgemäßen katalytischen und/oder reaktiven Einheit, wie zuvor definiert, und/oder aufweisend die erfindungsgemäße katalytische und/oder reaktive Einheit, wie zuvor definiert.

Im Nachfolgenden wird die vorliegende Erfindung anhand von bevorzugten Ausführungsformen bzw. Ausführungsbeispiele darstellenden Zeichnungen bzw. Figurendarstellungen beschrieben, wobei die diesbezüglichen Ausführungen für sämtliche erfindungsgemäße Aspekte gelten und wobei die entsprechenden bevorzugten Ausführungsformen keinesfalls beschränkend sind.

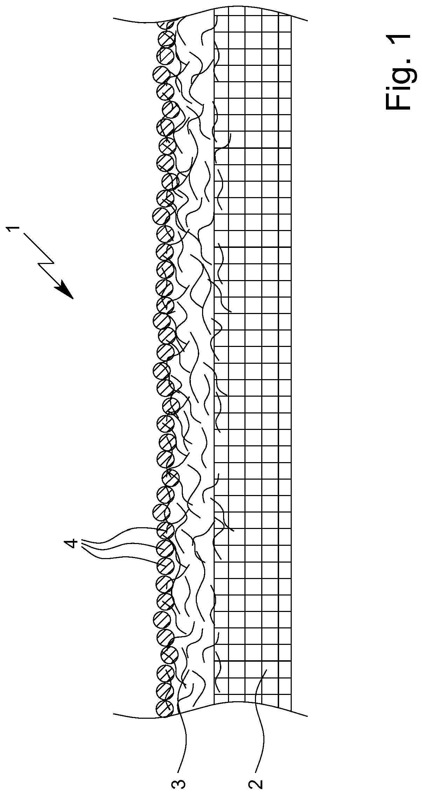

In den Figurendarstellungen zeigt
- Fig.1:: eine Querschnittsdarstellung einer nichterfindungsgemäßen katalytischen bzw. reaktiven Einheit insbesondere in Form eines Schutzmaterials, wobei die Einheit einen insbesondere textilen Träger mit einer darauf aufgebrachten Klebstoffschicht in Form eines luftdurchlässigen, getrockneten bzw. ausgehärteten gebrochenen Klebstoffpolymerschaums aufweist, wobei auf der Klebstoffschicht eine Vielzahl einzelner katalytischer bzw. reaktiver Partikel zum Haften gebracht ist;

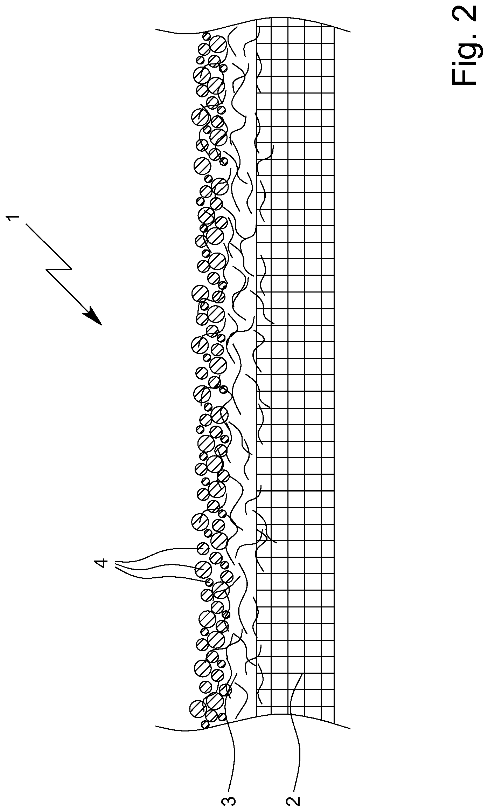

- Fig. 2:: eine Querschnittsdarstellung einer weiteren nichterfindungsgemäßen katalytischen bzw. reaktiven Einheit, wobei die katalytischen bzw. reaktiven Partikel derart angeordnet sind, dass die katalytischen bzw. reaktiven Partikel teilweise auf der Oberfläche und teilweise in der Klebstoffschicht angeordnet bzw. integriert sind;

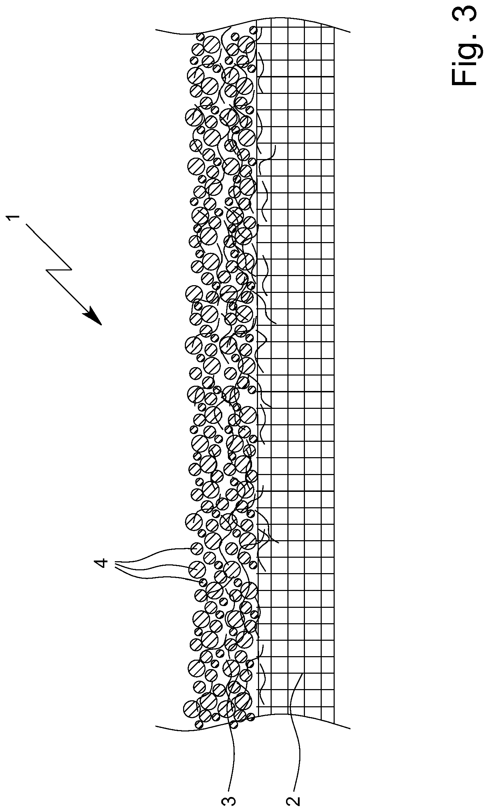

- Fig. 3:: eine Querschnittsdarstellung einer wiederum weiteren nichterfindungsgemäßen katalytischen bzw. reaktiven Einheit, wonach die katalytischen bzw. reaktiven Partikel derart angeordnet sind, dass die Klebstoffschicht über ihre gesamte Dicke mit den darin integrierten katalytischen bzw. reaktiven Partikel ausgerüstet ist;

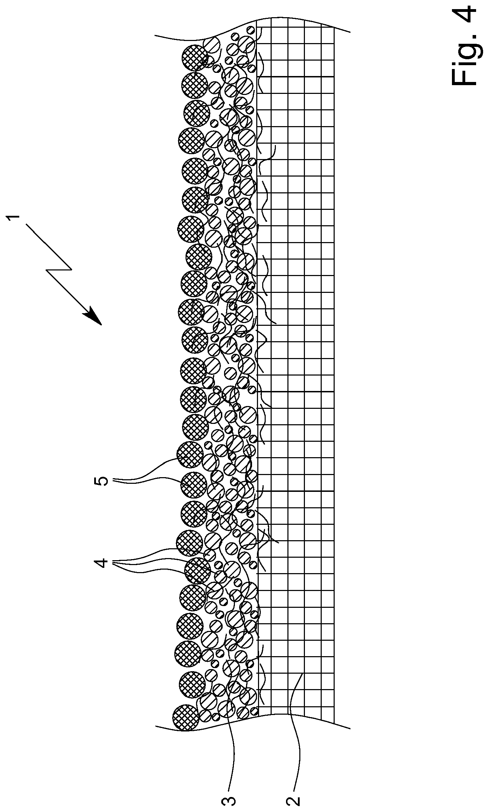

- Fig. 4:: eine Querschnittsdarstellung einer erfindungsgemäßen katalytischen bzw. reaktiven Einheit, wonach die erfindungsgemäße Einheit in der Klebstoffschicht angeordnete bzw. in die Klebstoffschicht integrierte katalytische bzw. reaktive Partikel und zusätzlich auf der Oberfläche der Klebstoffschicht angeordnete bzw. aufgebrachte Adsorberpartikel aufweist;

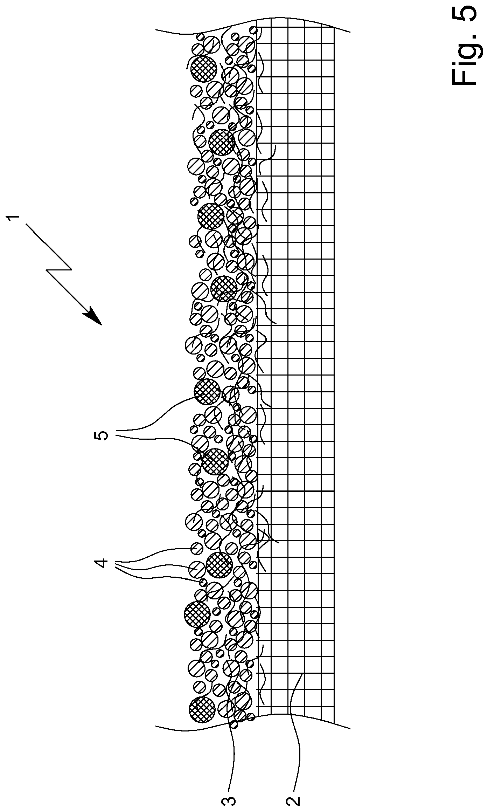

- Fig. 5:: eine Querschnittsdarstellung einer weiteren erfindungsgemäßen katalytischen bzw. reaktiven Einheit mit in der Klebstoffschicht angeordneten bzw. integrierten katalytischen bzw. reaktiven Partikel katalytischen bzw. reaktiven Partikeln sowie mit zusätzlichen und gleichermaßen in der Klebstoffschicht angeordneten bzw. integrierten Adsorberpartikeln;

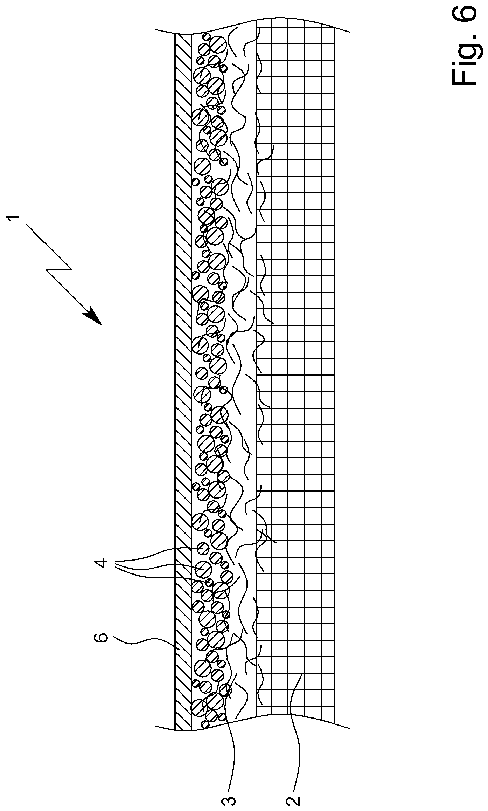

- Fig. 6:: eine Querschnittsdarstellung einer nichterfindungsgemäßen katalytischen bzw. reaktiven Einheit, wobei die erfindungsgemäße Einheit zusätzlich eine Abdeckschicht, insbesondere Abdeckmaterial, aufweist, wobei die Klebstoffschicht mit den katalytischen und/oder reaktiven Partikeln zwischen dem Träger und der Abdeckschicht, insbesondere Abdeckmaterial, angeordnet ist.

Die Figurendarstellungen gemäß Fig. 1 bis Fig. 3 sowie Fig. 6 zeigen somit eine nichterfindungsgemäße katalytische bzw. reaktive Einheit 1. Die Figurendarstellungen gemäß Fig. 4 und Fig. 5 zeigen eine erfindungsgemäße katalytische bzw. reaktive Einheit 1, welche in Form eines Schutzmaterials mit katalytischen bzw. reaktiven Eigenschaften vorliegt, wobei die erfindungsgemäße Einheit 1 einen insbesondere luftdurchlässigen Träger 2 aufweist, welcher insbesondere in Form eines textilen Trägers ausgebildet sein kann, wobei der Träger 2 mit einer Vielzahl diskreter katalytischer bzw. reaktiver Partikel 4 ausgerüstet ist, wobei die katalytischen bzw. reaktiven Partikel 4 mit dem Träger 2 dauerhaft mittels Verklebung verbunden sind und/oder mit dem Träger 2 verklebt sind, wobei die Verbindung bzw. Verklebung durch eine auf den Träger 2 aufgebrachte Klebstoffschicht 3 erfolgt bzw. bewirkt ist, wobei die Klebstoffschicht 3 als eine luftdurchlässige bzw. diskontinuierliche Schicht auf Basis eines getrockneten bzw. ausgehärteten, insbesondere vernetzten, gebrochenen Klebstoffpolymerschaums ausgebildet ist. Fig. 1 bis Fig. 6 ist zudem zu entnehmen, dass sich die Klebstoffschicht 3 teilweise in dem insbesondere textilen Träger 2 hineinerstrecken kann, was zu einer stabilen und dauerhaften Verbindung des Trägers 2 mit der Klebstoffschicht 3 und somit zu einem stabilen Schichtverbund führt.

Fig. 1 zeigt zudem eine Ausführungsform, wonach die katalytischen bzw. reaktiven Partikel 4 auf der Klebstoffschicht 3 angeordnet sind, wobei die katalytischen bzw. reaktiven Partikel 4 auf der dem Träger 2 abgewandten Seite der Klebstoffschicht 3 an deren Oberfläche positioniert sind. Das diesbezügliche Aufbringen der katalytischen bzw. reaktiven Partikel 4 kann beispielsweise durch Aufstreuen, Aufrieseln oder dergleichen der Partikel 4 auf den zuvor auf den Träger 2 aufgebrachten und noch nicht (vollständig) getrockneten bzw. ausgehärteten Klebstoffpolymerschaum bzw. auf die Klebstoffschicht 3 erfolgen, gegebenenfalls gefolgt von einem An- und/oder Eindrücken. Für eine derartige erfindungsgemäße Ausführungsform eignet sich der Einsatz von katalytischen bzw. reaktiven Partikel 4 mit relativ großen Partikelgrößen, insbesondere relativ großen Teilchendurchmessern, da hierduch ein übermäßiges Einsinken in den Klebstoffpolymerschaum verhindert wird.

Fig. 2 zeigt eine weitere Ausführungsform, wonach sich die katalytischen bzw. reaktiven Partikel zumindest teilweise in die Klebstoffschicht 3 hineinerstrecken, so dass ein Teil der katalytischen bzw. reaktiven Partikel 4 in der Klebstoffschicht 3 eingelagert bzw. in die Klebstoffschicht 3 bzw. den Klebstoffpolymerschaum integriert sind. Fig. 2 zeigt zudem, dass ein Teil der katalytischen bzw. reaktiven Partikel 4 auf der dem Träger 2 abgewandten Oberfläche der Klebstoffschicht 3 angeordnet sind. Eine derartige Anordnung der katalytischen bzw. reaktiven Teilchen kann beispielsweise realisiert werden, indem die Partikel 4 auf dem auf den Träger 2 aufgebrachten und noch nicht (vollständig) getrockneten bzw. ausgehärteten Klebstoffschaum bzw. auf die entsprechende Klebstoffschicht 3 aufgestreut und anschließend in Richtung der Klebstoffschicht 3 angedrückt bzw. in die Klebstoffschicht 3 eingedrückt werden, so dass die Partikel 4 zumindest teilweise in die Klebstoffschicht 3 eindringen. Hierdurch kann die (Oberflächen-) Belegung der Klebstoffschicht mit den katalytischen bzw. reaktiven Partikeln insgesamt erhöht werden. Das Eindringen der katalytischen bzw. reaktiven Partikel 4 in die Klebstoffschicht 3 kann auch durch deren Partikelgröße gesteuert werden, wobei der Einsatz von katalytischen bzw. reaktiven Partikel 4 mit relativ geringen Partikelgrößen, insbesondere relativ geringen Teilchendurchmessern, zu einem verstärkten Eindringen der Partikel 4 in die Klebstoffschicht 3 führt.

Fig. 3 veranschaulicht eine weitere Ausführungsform, wonach die katalytischen bzw. reaktiven Partikel 4 in die in Form eines gebrochenen Schaums vorliegende Klebstoffschicht 3 eingebracht bzw. integriert sind derart, dass zumindest im Wesentlichen die gesamte Dicke der Klebstoffschicht 3 und somit die Klebstoffschicht 3 insgesamt mit den Partikeln 4 ausgerüstet ist. Die katalytischen bzw. reaktiven Partikel 4 erstrecken sich somit gemäß dieser Ausführungsform über die gesamte Dicke der Klebstoffschicht 3. Auf diese Wiese können besonders hohe Beladungsmengen für die katalytischen bzw. reaktiven Partikel 4 realisiert werden. Durch die sozusagen dreidimensionale Anordnung der katalytischen bzw. reaktiven Partikel 4 in dem Klebstoffträger 3 kann die Schutzfunktion der erfindungsgemäßen Einheit 1 weiterführend verbessert werden. Diese erfindungsgemäße Ausführungsform ermöglicht bzw. eignet sich für den Einsatz von katalytischen bzw. reaktiven Partikeln 4 mit relativ geringen Partikelgrößen, insbesondere relativ geringen Teilchendurchmessern, wobei es zudem vorgesehen sein, dass die katalytischen bzw. reaktiven Partikel 4 jeweils voneinander unterschiedliche Partikelgrößen, insbesondere unterschiedliche Teilchendurchmesser, aufweisen. Eine derartige erfindungsgemäße Einheit 1 mit katalytischen bzw. reaktiven Eigenschaften kann erhalten werden, indem zunächst (d. h. vor Aufbringen der Klebstoffschicht 3) eine Suspension der katalytischen bzw. reaktiven Partikel 4 in dem der Klebstoffschicht 3 zugrundeliegenden, nicht getrockneten bzw. nicht ausgehärteten Klebstoff bzw. Klebstoffpolyschaum hergestellt wird und nachfolgend die erhaltene Suspension in Form des mit den Partikeln 4 ausgerüsteten Klebstoffpolyschaums auf den Träger 2 aufgebracht wird. Nachfolgend kann eine Trocknung bzw. ein Aushärten zum Erhalt der Klebstoffschicht 3 in Form des getrockneten und ausgehärteten, insbesondere vernetzten, gebrochenen Klebstoffpolymerschaums mit den darin eingelagerten bzw. integrierten katalytischen bzw. reaktiven Partikeln 4 durchgeführt werden.

Fig. 4 zeigt die Ausgestaltung der vorliegenden Erfindung, wonach neben den katalytischen bzw. reaktiven Partikeln 4 für die erfindungsgemäße katalytische bzw. reaktive Einheit 1 zudem Adsorberpartikel 5 in Form von Aktivkohlepartikel eingesetzt werden. Fig. 4 zeigt dabei, dass die katalytischen bzw. reaktiven Partikel 4 zumindest im Wesentlichen vollständig in die Klebstoffschicht 3 eingelagert bzw. integriert sind, während die Adsorberpartikel 5 auf der Klebstoffschicht 3 aufgebracht bzw. zum Haften gebracht sind. In diesem Zusammenhang kann es erfindungsgemäß vorgesehen sein, dass die Adsorberpartikel 5 größere Partikelgrößen bzw. größere Teilchendurchmesser als die katalytischen bzw. reaktiven Partikel 4 aufweisen. Eine derartige erfindungsgemäße Einheit 1 kann beispielsweise derart hergestellt werden, dass zunächst eine Suspension der katalytischen bzw. reaktiven Partikel mit dem der Klebstoffschicht 3 zugrundeliegenden, nicht getrockneten bzw. nicht ausgehärteten Klebstoff bzw. Klebstoffpolymerschaum hergestellt und anschließend die Suspension zum Erhalt der Klebstoffschicht 3 auf den textilen Träger 2 aufgebracht wird. Nachfolgend kann dann das Anbringen der Adsorberpartikel 5 auf die noch nicht (vollständig) getrocknete bzw. noch nicht (vollständig) ausgehärtete und die katalytischen bzw. reaktiven Partikel 4 aufweisende Klebstoffschicht 3 erfolgen. Hierzu können die Adsorberpartikel 5 beispielsweise auf die Klebstoffschicht 3 aufgestreut und gegebenenfalls an- bzw. eingedrückt werden. Nachfolgend kann eine Trocknung bzw. ein Aushärten zum Erhalt der Klebstoffschicht 3 in Form des getrockneten und ausgehärteten, insbesondere vernetzten, gebrochenen Klebstoffpolymerschaums mit den darin eingelagerten bzw. integrierten katalytischen bzw. reaktiven Partikeln 4 und den aufgelagerten Adsorberpartikeln 5 durchgeführt werden. Auf dieser Basis resultiert somit eine erfindungsgemäße katalytische bzw. reaktive Einheit 1, welche neben den katalytischen bzw. reaktiven Eigenschaften auch über adsorptive Eigenschaften verfügt.

Fig. 5 veranschaulicht eine weiterführende erfindungsgemäße Ausführungsform einer katalytischen bzw. reaktiven Einheit 1, wonach sowohl die katalytischen bzw. reaktiven Partikel 4 als auch die Adsorberpartikel 5 zumindest im Wesentlichen vollständig in die Klebstoffschicht 3 eingelagert bzw. integriert sind. Diesbezüglich kann zunächst eine gemeinsame Suspension der katalytischen bzw. reaktiven Partikel 4 und der Adsorberpartikel 5 in dem der Klebstoffschicht 3 zugrundeliegenden Klebstoff bzw. Klebstoffpolymerschaum hergestellt werden, wobei die in Rede stehende Suspension anschließend zum Erhalt der Klebstoffschicht 3 auf den Träger 2 aufgebracht und getrocknet bzw. ausgehärtet werden kann.

Fig. 6 zeigt schließlich eine Ausführungsform, wonach die katalytische bzw. reaktive Einheit 1 mit der auf einen insbesondere textilen Träger 2 aufgebrachten Klebstoffschicht 3 und dem an der Klebstoffschicht 3 an- bzw. eingebrachten katalytischen bzw. reaktiven Partikel 4 zusätzlich mit einem Abdeckmaterial 6 bzw. einer Abdeckschicht 6 versehen ist, wobei das Abdeckmaterial 6 bzw. die Abdeckschicht 6 auf der dem Träger 2 abgewandten Seite der Klebstoffschicht 3 angeordnet ist. Das Abdeckmaterial 6 bzw. die Abdeckschicht 6 kann beispielsweise als Partikel- bzw. Aerosolfilterschicht ausgebildet sein, so dass die erfindungsgemäße katalytische bzw. reaktive Einheit neben katalytischen sowie gegebenenfalls adsorptiven Eigenschaften zudem auch über entsprechende Filtereigenschaften in Bezug auf (Staub-)Partikel bzw. Aerosole verfügt. Zudem kann das Abdeckmaterial 6 bzw. die Abdeckschicht 6 an der Klebstoffschicht bzw. den Partikeln fixiert sein, beispielsweise unter Verwendung eines Haft- bzw. Klebemittels, welches kontinuierlich oder diskontinuerlich, insbesondere diskontinuierlich-punktförmig, netzartig (beispielsweise in Form eines Klebstoffwebs), eingesetzt sein oder vorliegen kann.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

Es werden unterschiedliche katalytische bzw. reaktive Einheiten in Form von Schutzmaterialien hergestellt, nämlich erfindungsgemäße Schutzmaterialien A1 bis A7 sowie ein Vergleichsschutzmaterial B.

Zur Herstellung der in Form von Schutzmaterialien vorliegenden katalytischen bzw. reaktiven Einheiten werden als katalytische und/oder reaktive Partikel bzw. als katalytische und/oder reaktive (Metall-)Komponente Materialien auf Basis verschiedener partikulärer metallorganischer Gerüstmaterialien (MOF-Materialien, *Metal Organic Framework*) eingesetzt, und zwar jeweils unter Verwendung von Kupfer (Cu), Zink (Zn) sowie Titan (Ti) als Metallkomponente. Zur Herstellung der jeweiligen MOF-Materialien werden die Metallkomponenten gemeinsam mit 1,3,5-Benzoltricarbonsäure (Trimesinsäure) bzw. 1,1'-Binaphtyl-4,4'-dicarboxylat (BNDC) bzw. 4,4'-Biphenyldicarboxylat (BPDC) bzw. 4,4',4"-Triphenyldicarbonat (TPDC) bzw. 1,4-Benzoldicarboxylat (BDC) als beispielhafte Liganden eingesetzt. Die so erhaltenen und als katalytische bzw. reaktive Partikel eingesetzten partikulären MOF-basierten Materialien weisen einen mittleren Teilchendurchmesser (D50) von etwa 20 µm auf und werden nachfolgend in Abhängigkeit von der eingesetzten Metallkomponente als Cu-MOF, Zn-MOF sowie Ti-MOF bezeichnet. Für diesbezüglich weiterführende Ausführungen zur Herstellung der erfindungsgemäß eingesetzten MOF-Materialien kann insbesondere auf die Ausführungsbeispiele zu der auf die Anmelderin selbst zurückgehenden internationalen Patentanmeldung WO 2009/056184 A1 sowie auf die parallelen Patentanmeldungen DE 10 2008 005 218 A1 und US 2011 010 826 A verwiesen werden.

Zur Herstellung der nichterfindungsgemäßen Schutzmaterialien A1 bis A3 und der erfindungsgemäßen Schutzmaterialien A4 bis A7 sowie des Vergleichsschutzmaterials B wird jeweils eine luftdurchlässige textile Trägerschicht (Träger) mit einem Flächengewicht von etwa 80 g/m² verwendet.

Die katalytischen bzw. reaktiven Einheiten in Form der jeweiligen Schutzmaterialien A1 bis A3 werden dabei so hergestellt, dass für die einzelnen Schutzmaterialien jeweils ein vorgenanntes partikuläres MOF-Materialien eingesetzt wird, wobei Material A1 katalytische und/oder reaktive Partikel auf Basis von Cu-MOF (A1-Cu-MOF), Material A2 katalytische und/oder reaktive Partikel auf Basis von Zn-MOF (A2-Zn-MOF) und Material A3 katalytische und/oder reaktive Partikel auf Basis von Ti-MOF (A3-Ti-MOF) enthält. Die MOF-basierten Partikel werden dabei in die Klebstoffschicht eingelagert bzw. integriert. Hierzu wird zunächst eine Suspension der jeweiligen MOF-basierten Partikel in dem der nachfolgend auszubildenden Klebstoffschicht zugrundeliegenden Material, welches als Lösung bzw. Dispersion eines Klebstoffpolymers auf Basis eines Polyurethans vorliegt, hergestellt. Die für die Herstellung der Suspension eingesetzte Lösung bzw. Dispersion des Klebstoffpolymers als solche weist eine Dichte von etwa 200 g/l bei einem Feststoffgehalt von etwa 50 %, bezogen auf die Lösung bzw. Dispersion, auf. Zur Herstellung der Schutzmaterialien A1 bis A4 wird die textile Trägerschicht vollflächig mit der zuvor unter mechanischem Energieeintrag aufgeschäumten Suspension auf Basis der wässrig basierten Lösung bzw. Dispersion des Klebstoffpolymers mit den eingebrachten katalytischen bzw. reaktiven Partikel beschichtet, wobei die Klebstoffschicht in Form der aufgeschäumten Suspension auf Basis der Lösung bzw. Dispersion des Klebstoffpolymers mit den darin eingebrachten katalytischen bzw. reaktiven Partikeln auf den textilen Träger aufgerakelt wird. Der Auftrag erfolgt dabei in einer Menge von etwa 100 g/m² (Nassgewicht); die eingesetzte (Auftrags-)Menge der Lösung bzw. Dispersion des Klebstoffpolymers als solcher beträgt dabei etwa 65 g/m². Die so aufgebrachte Schicht weist eine Dicke von etwa 0,4 mm auf. Es erfolgt eine Trocknung bzw. Aushärtung der auf den Träger aufgebrachten Suspension auf Basis der Lösung bzw. Dispersion des Klebstoffpolymers mit den eingebrachten MOF-basierten Partikeln zur weiterführenden Fixierung der Partikel und zur Ausbildung des getrockneten bzw. ausgehärteten gebrochenen Klebstoffpolymerschaums bzw. der ausgehärteten Klebstoffschicht mit dem gebrochenen Schaum und den darin eingelagerten Partikeln. Die Trocknung bzw. Aushärtung erfolgt dabei bei Temperatur zwischen 100 °C und 150 °C. Die getrocknete Klebstoffschicht in Form des gebrochenen Schaums mit dem damit eingebrachten MOF-Material weist ein Trockengewicht von etwa 65 g/m² auf. Die resultierenden erfindungsgemäßen Schutzmaterialien weisen dabei das partikuläre MOF-Material in einer Beladungsmenge von etwa 35 g/m² auf.

Die Ausbildung des getrockneten bzw. ausgehärteten gebrochenen Klebstoffpolymerschaums erfolgt dabei, ohne sich auf diese Theorie beschränken zu wollen, einerseits durch die mechanische Einwirkung beim Auftragen der Klebstoffschicht auf den Träger sowie andererseits durch das Entweichen von Löse- bzw. des Dispersionsmitteln, insbesondere Wasser, bei der Trocknung der Klebstoffschicht, was zu einem Aufbrechen der Schaumblasen bzw. der zugrundeliegenden Schaumstrukturen (Stege, Wandungen, Lamellen und/oder dergleichen) führt.

Es resultieren erfindungsgemäße Schutzmaterialien A1 bis A3 in Form von A1-Cu-MOF, A2-Zn-MOF und A3-Ti-MOF, wie zuvor angeführt.

Darüber hinaus werden erfindungsgemäße katalytische bzw. reaktive Einheiten in Form von Schutzmaterialien (Schutzmaterialien A4 bis A7) hergestellt, wobei die Schutzmaterialien zudem diskrete Adsorberpartikel in Form von Aktivkohle enthalten. Als katalytische bzw. reaktive Partikel wird das zuvor angeführte partikuläre Cu-MOF eingesetzt. Die Herstellung der erfindungsgemäßen Schutzmaterialien A4 bis A7 erfolgt dabei wie für die Materialien A1 bis A3 beschrieben, jedoch mit der Maßgabe, dass auf die auf den Träger aufgebrachte Klebstoffschicht mit dem darin integrierten partikulären MOF-Material im nichtgetrockneten bzw. nichtausgehärteten Zustand zusätzlich Adsorberpartikel in Form von Aktivkohle durch Aufstreuen und leichtes Andrücken mit einer Beladungsmenge von etwa 30 g/m² aufgebracht werden. Es resultieren somit erfindungsgemäße Schutzmaterialien A4 bis A7, welche zusätzlich zu dem in den gebrochenen Schaum der Klebstoffschicht integrierten partikulären MOF-basierten Partikeln auf Basis von Cu-MOF zudem auf die Klebstoffschicht aufgebrachte Adsorberpartikel in Form von partikulärer Aktivkohle aufweisen. Dabei werden für die jeweiligen erfindungsgemäßen Schutzmaterialien A4 bis A7 unterschiedliche Größenverhältnisse des mittleren Teilchendurchmessers (D50) der Adsorberpartikel in Form von Aktivkohle einerseits zu den katalytischen bzw. reaktiven Partikeln auf Basis von Cu-MOF andererseits eingesetzt. Diesbezüglich liegt für das Schutzmaterial A4 ein Größenverhältnis des mittleren Teilchendurchmessers (D50) der Adsorberpartikel einerseits zu dem mittleren Teilchendurchmesser (D50) der katalytischen bzw. reaktiven Partikel andererseits [mittlerer Teilchendurchmesser (D50) Aktivkohle : mittlerer Teilchendurchmesser (D50) Cu-MOF] von 1 : 2, für das Schutzmaterial A5 ein entsprechendes Verhältnis von 1 : 1, für das Schutzmaterial A6 ein entsprechendes Verhältnis von 2 : 1 und für das Schutzmaterial A7 ein entsprechendes Verhältnis von 5 : 1 vor. Dementsprechend resultieren somit erfindungsgemäße Schutzmaterialien A4-1:2, A5-1:1, A6-2:1 und A7-5:1.

Zudem wird ein Vergleichsmaterial in Form von Schutzmaterial B hergestellt, bei welchem das zuvor angeführte partikuläre Cu-MOF diskontinuierlich im Rahmen einer punktförmigen Auftragung unter Verwendung eines nichtgeschäumten Bindemittels in einer punktrasterförmigen und gleichmäßigen Verteilung auf dem Träger fixiert wird. Dabei beträgt die Auftragsmenge an partikulärem Cu-MOF gleichermaßen etwa 35 g/m², wobei für den diskontinuierlich-punktförmigen Auftrag ein Haft- bzw. Bindemittel auf Basis eines homogen ausgebildeten, nichtgeschäumten Klebstoffs in Form von Polyurethan verwendet wird, wobei die Auftragsmenge des Klebstoffs etwa 15 g/m² beträgt. Es resultiert ein Belegungsgrad des textilen Trägers mit dem partikulären Cu-MOF von etwa 60 %.

Bei den zuvor angeführten katalytischen bzw. reaktiven Einheiten bzw. Schutzmaterialien wird die Schutzfunktion gegenüber Schad- bzw. Giftstoffen untersucht, wobei die jeweiligen Barrierewirkungen gegenüber Senfgas und Soman gemäß Methode 2.2 der CRDEC-SP-84010 im Rahmen des sogenannten konvektiven Strömungstests (*convective flow test*) bestimmt werden; zu diesem Zweck lässt man bei konstantem Strömungswiderstand mit einer Strömungsgeschwindigkeit von ca. 0,45 cm/s einen Senfgas bzw. Soman enthaltenden Luftstrom auf das jeweilige Filterschutzmaterial einwirken und bestimmt die flächenbezogene Durchbruchmenge nach 16 Stunden (80 % relative Luftfeuchtigkeit, 32 °C, 10 · 1 µl HD/12,56 cm², bzw. 12 · 1 µl GD/12,56 cm²); dabei bedeutet eine geringere flächenbezogene Durchbruchmenge eine entsprechend höhere Schutzwirkung gegenüber den in Rede stehenden Giftstoffen:

| Material | Senfgas | Soman |
|---|---|---|
| | | |
| A1-Cu-MOF | 1,01 µg/cm² | 1,37 µg/cm² |
| A2-Zn-MOF | 1,12 µg/cm² | 1,44 µg/cm² |
| A3-Ti-MOF | 0,95 µg/cm² | 1,20 µg/cm² |
| | | |
| A4-1:2 | 0,83 µg/cm² | 1,18 µg/cm² |
| A5-1:1 | 0,80 µg/cm² | 1,08 µg/cm² |
| A6-2:1 | 0,76 µg/cm² | 1,00 µg/cm² |
| A7-5:1 | 0,71 µg/cm² | 0,93 µg/cm² |
| | | |
| B | 2,36 µg/cm² | 2,79 µg/cm² |

In Ergänzung werden weitere Schutzmaterialien A8 bis A10 in Anlehnung an die Schutzmaterialien A1, A3 und A7 und gemäß den obigen Ausführungen mit der Maßgabe hergestellt, dass das jeweilige MOF-Material zusätzlich mit einem Edelmetall in Form von Platin (Pt) ausgerüstet bzw. dotiert werden, und zwar in einer Menge von 5 Gew.-%, bezogen auf das MOF-Material. Es resultieren somit nichterfindungsgemäße Schutzmaterialien A8 (A8-Cu-MOF-Pt) und A9 (A9-Ti-MOF-Pt) und ein erfindungsgemäßes Schutzmaterial A10 (A10-5:1-Pt). Die so erhaltenen Schutzmaterialien weisen im Vergleich zu den korrespondierenden Schutzmaterialien A1, A3 und A7 um etwa 10 % verringerte Durchbruchmengen auf, so dass eine weiterführende Verbesserung der Schutzeigenschaften vorliegt.

Bei ergänzenden Untersuchungen der vorgenannten Schutzmaterialien zur Schutzwirkung gegenüber Mikroorganismen werden im Fall der erfindungsgemäßen Materialien gleichermaßen hervorragende Ergebnisse erhalten: Bei Versuchen zur Überprüfung der biostatischen Eigenschaften nach ASTM E2149-01 (*Klebsiella pneumoniae* sowie *Staphylococcus aureus,* jeweils 1,5 bis 3,0 x 10⁵ CFU/ml) liegt die prozentuale Reduktion in Bezug auf diese Erreger nach 24 Stunden bei den Schutzmaterialien in Form der Materialien A1 bis A7 in sämtlichen Fällen oberhalb von 95 %, wohingegen für das nichterfindungsgemäße Materials B nur ein Wert von 64 % ermittelt erden kann. Somit ist auch die biologische Schutzfunktion der erfindungsgemäßen Schutzmaterialien erhöht.

Die Versuchsergebnisse zeigen insgesamt, dass die Schutzfunktion der Schutzmaterialien A1 bis A7 im Vergleich zu dem Vergleichsmaterial B nachhaltig verbessert ist, was die hervorragende Wirksamkeit der erfindungsgemäßen katalytischen bzw. reaktiven Einheit in Bezug auf die Schutzfunktion gegenüber chemischen Gift- bzw. Kampfstoffen bei gleichzeitig hoher Luftdurchlässigkeit und geringem Flächengewicht belegt. Dabei kann die Schutzfunktion durch die gezielte Kombination mit einem partikulären Adsorptionsmaterial in Form von Aktivkohle nochmals gesteigert werden, wobei eine weiterführende Verbesserung erhalten wird, wenn die eingesetzten Adsorberpartikel in Form von Aktivkohle im Vergleich zu den katalytischen bzw. reaktiven Partikeln größere mittlere Teilchendurchmesser aufweisen.

Insgesamt zeigen die zuvor angeführten Untersuchungen die hervorragenden Eigenschaften der auf Basis der erfindungsgemäßen Konzeption bereitgestellten katalytischen bzw. reaktiven Einheiten bzw. der diesbezüglich bereitgestellten Schutzmaterialien.

### Bezugszeichenliste:

- 1: Katalytische und/oder reaktive Einheit
- 2: Träger
- 3: Klebstoffschicht
- 4: Katalytische und/oder reaktive Partikel
- 5: Adsorberpartikel
- 6: Abdeckschicht bzw. Abdeckmaterial

## Patentansprüche

1. Katalytische und/oder reaktive Einheit (1) in Form eines Schutzmaterials mit katalytischen und/oder reaktiven Eigenschaften, insbesondere mit Schutzfunktion gegenüber chemischen und/oder biologischen Schad- und/oder Giftstoffen,
wobei die Einheit (1) einen insbesondere luftdurchlässigen Träger (2), insbesondere in Form eines textilen Trägers umfasst, wobei der Träger (2) mit einer Vielzahl diskreter katalytischer und/oder reaktiver Partikel (4) ausgerüstet ist,
wobei die katalytischen und/oder reaktiven Partikel (4) mindestens eine katalytische und/oder reaktive Komponente aufweisen oder hieraus bestehen, wobei die katalytische und/oder reaktive Komponente ein MOF-Material (*Metal Organic Framework*) aufweist oder hieraus besteht,
wobei die katalytischen und/oder reaktiven Partikel (4) mit dem Träger (2) mittels Verklebung dauerhaft verbunden sind und/oder mit dem Träger (2) verklebt sind, wobei die Verbindung und/oder Verklebung durch eine auf den Träger (2) aufgebrachte Klebstoffschicht (3) bewirkt ist, wobei die Klebstoffschicht (3) als eine luftdurchlässige und/oder diskontinuierliche Schicht auf Basis eines getrockneten und ausgehärteten gebrochenen Klebstoffpolymerschaums ausgebildet ist, und
wobei die katalytischen und/oder reaktiven Partikel (4) gemeinsam und/oder zusammen mit einer Vielzahl an Aktivkohlepartikeln als diskrete Adsorberpartikel (5) eingesetzt sind.

2. Einheit nach Anspruch 1,
wobei die katalytische und/oder reaktive Komponente in Masse und/oder in Reinform und/oder ohne Trägerkomponente und/oder als solche eingesetzt wird; und/oder wobei die katalytischen und/oder reaktiven Partikel (4) aus der katalytischen und/oder reaktiven Komponente in Masse und/oder in Reinform und/oder ohne Trägerkomponente und/oder als solcher bestehen und/oder hieraus gebildet sind.

3. Einheit Anspruch 1 oder 2,
wobei die katalytischen und/oder reaktiven Partikel (4) die katalytische und/oder reaktive Komponente zusammen mit einer Trägerkomponente aufweisen oder hieraus bestehen;
insbesondere wobei die Trägerkomponente mindestens ein anorganisches, organisches oder anorganisch-organisches Bindemittel und/oder eine insbesondere poröse und/oder innere Hohlräume aufweisende Trägerkomponente umfasst oder hieraus besteht; und/oder
insbesondere wobei die katalytische und/oder reaktive Komponente an der Trägerkomponente insbesondere chemisch und/oder physikalisch fixiert und/oder hierin eingelagert ist und/oder wobei die Trägerkomponente mit der katalytischen und/oder reaktiven Komponente dotiert und/oder imprägniert ist; und/oder
insbesondere wobei die katalytischen und/oder reaktiven Partikel (4) die katalytische und/oder reaktive Komponente, insbesondere die katalytische und/oder reaktive Metallkomponente in Mengen im Bereich von 0,001 Gew.-% bis 100 Gew.-%, insbesondere im Bereich von 0,005 Gew.-% bis 99,5 Gew.-%, vorzugsweise im Bereich von 0,01 Gew.-% bis 95 Gew.-%, bevorzugt im Bereich von 0,05 Gew.-% bis 90 Gew.-%, besonders bevorzugt im Bereich von 0,1 Gew.-% bis 80 Gew.-%, ganz besonders bevorzugt im Bereich von 0,25 Gew.-% bis 50 Gew.-%, weiter bevorzugt im Bereich von 0,5 Gew.-% bis 30 Gew.-%, noch weiter bevorzugt im Bereich von 1 Gew.-% bis 20 Gew.-%, nochmals weiter bevorzugt im Bereich von 2 Gew.-% bis 10 Gew.-%, bezogen auf die katalytischen und/oder reaktiven Partikel (4), enthalten.

4. Einheit nach einem der vorangehenden Ansprüche,
wobei das MOF-Material (*Metal Organic Framework*) sich wiederholende Struktureinheiten auf Basis jeweils mindestens eines Metalls, insbesondere Metallatoms oder Metallions, insbesondere wie zuvor definiert, einerseits und mindestens eines wenigstens bidentaten (zweizähnigen) und/oder verbrückenden organischen Liganden, insbesondere wie nachfolgend definiert, andererseits aufweist; und/oder
wobei das MOF-Material (*Metal Organic Framework*) mindestens ein Metall, insbesondere Metallatom oder Metallion, insbesondere wie zuvor definiert, aufweist, insbesondere wobei das Metall ausgewählt ist aus Elementen der Gruppen 1 bis 14 des Periodensystems der Elemente, insbesondere aus Elementen der Gruppen 4, 8, und 11 bis 13 des Periodensystems der Elemente, und/oder insbesondere wobei das Metall ausgewählt ist aus der Gruppe von Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Si, Ge, Sn, Pb, As, Sb und Bi, insbesondere aus der Gruppe von Ti, Zn, Cu, Zr, Ni, Pd, Pt, Ru, Th, Fe, Mn, Ag, Al und Co, vorzugsweise aus der Gruppe von Ti, Cu, Zr, Fe, Co, Zn, Mn, Al und Ag, bevorzugt aus der Gruppe von Cu, Fe, Al und Zn; und/oder
wobei das MOF-Material (*Metal Organic Framework*) mindestens einen wenigstens bidentaten (zweizähnigen) und/oder verbrückenden organischen Liganden aufweist, wobei der Ligand mindestens eine funktionelle Gruppe aufweist, welche imstande ist, zu einem Metall, insbesondere Metallatom oder Metallion, insbesondere wie zuvor definiert, mindestens zwei koordinative Bindungen auszubilden und/oder zu zwei oder mehreren Metallen, insbesondere Metallatomen oder Metallionen, insbesondere wie zuvor definiert, gleich oder verschieden, jeweils eine koordinative Bindung auszubilden, insbesondere wobei die funktionelle Gruppe des Liganden mindestens ein Heteroatom, bevorzugt aus der Gruppe von N, O, S, B, P, Si und AI, besonders bevorzugt N, O und S, aufweist, insbesondere wobei der Ligand ausgewählt ist aus mindestens zweiwertigen organischen Säuren, insbesondere Dicarbonsäuren, Tricarbonsäuren, Tetracarbonsäuren und deren Mischungen, besonders bevorzugt gegebenenfalls mindestens einfach substituierten aromatischen, insbesondere mono-, di-, tri-, tetra- oder höherkernigen aromatischen Di-, Tri- oder Tetracarbonsäuren, insbesondere wobei jeder der Kerne mindestens ein Heteroatom, gleich oder verschieden, wie insbesondere N, O, S, B, P, Si und/oder AI, bevorzugt N, S und/oder O, enthalten kann; und/oder
wobei das MOF-Material (*Metal Organic Framework*) mit mindestens einem weiteren Metall, ausgewählt aus der Gruppe der Edelmetalle, insbesondere ausgewählt aus der Gruppe von Rt, Rh, Pt, Ag, Au und deren Kombinationen, ausgerüstet, insbesondere dotiert, ist, insbesondere wobei die Menge an dem weiteren Metall im Bereich von 0,01 Gew.-% bis 15 Gew.-%, insbesondere im Bereich von 0,05 Gew.-% bis 10 Gew.-%, vorzugsweise im Bereich von 0,1 Gew.-% bis 8 Gew.-%, bezogen auf das metallhaltige anorganische, organische oder anorganisch-organische Gerüstmaterial, liegt; und/oder
wobei das MOF-Material (*Metal Organic Framework*) in kristalliner Form vorliegt, insbesondere wobei der Kristallinitätsgrad mindestens 60 %, insbesondere mindestens 70 %, vorzugsweise mindestens 80 %, besonders bevorzugt mindestens 90 %, besonders bevorzugt mindestens 95 %, ganz besonders bevorzugt mindestens 99 % oder mehr, beträgt; und/oder
wobei das MOF-Material (*Metal Organic Framework*) in aktivierter Form, vorzugsweise mittels Wärmebehandlung, insbesondere bei Temperaturen im Bereich von 90 °C bis 300 °C, vorzugsweise 100 °C bis 250 °C, bevorzugt 110 °C bis 220 °C, vorliegt; und/oder
wobei die katalytischen und/oder reaktiven Partikel (4) aus dem MOF-Material (*Metal Organic Framework*) bestehen; und/oder
wobei die katalytischen und/oder reaktiven Partikel (4) auf Basis des MOF-Materials (*Metal Organic Framework*) ausgebildet sind, insbesondere das MOF-Material (*Metal Organic Framework*) umfassen oder hieraus bestehen, insbesondere hieraus bestehen; und/oder
wobei die katalytischen und/oder reaktiven Partikel (4) das MOF-Material (*Metal Organic Framework*) in Masse und/oder in Reinform und/oder ohne Trägerkomponente und/oder als solches enthalten oder hieraus bestehen, insbesondere hieraus bestehen; und/oder wobei die katalytischen und/oder reaktiven Partikel (4) aus dem MOF-Material (*Metal Organic Framework*) in Masse und/oder in Reinform und/oder ohne Trägerkomponente und/oder als solchem bestehen und/oder hieraus gebildet sind; und/oder
wobei das MOF-Material (*Metal Organic Framework*) in einer Trägerkomponente, insbesondere in einem anorganischen, organischen oder anorganisch-organischen Bindemittel, und/oder in einer insbesondere porösen und/oder innere Hohlräume aufweisenden Trägerkomponente eingebrachten Form vorliegt; und/oder
wobei die katalytischen und/oder reaktiven Partikel (4) das MOF-Material (*Metal Organic Framework*) einerseits und die Trägerkomponente andererseits in einem Gerüstmaterial/ Trägerkomponente-Mengenverhältnis, insbesondere Gerüstmaterial/Trägerkomponente-Gewichtsverhältnis, im Bereich von 1 : 0,5 bis 15 : 1, insbesondere im Bereich von 1 : 1 bis 10 : 1, vorzugsweise im Bereich von 1,2 : 1 bis 3 : 1, besonders bevorzugt im Bereich von 1,4 : 1 bis 2,5 : 1, enthält und insbesondere von mehr als 1 (> 1, d.h. unter Ausschluss von 1) enthält; und/oder
wobei die Trägerkomponente mindestens ein organisches Bindemittel, insbesondere ein organisches Polymer, umfasst oder hieraus besteht, insbesondere wobei das organische Bindemittel ausgewählt ist aus der Gruppe von Polyestern, Polystyrolen, Poly(meth-) acrylaten, Polyacrylaten, Cellulosen, Polyamiden, Polyolefinen, Polyalkylenoxiden und deren Kombinationen und Mischungen.

5. Einheit nach einem der vorangehenden Ansprüche,
wobei das MOF-Material (*Metal Organic Framework*) mindestens ein Metall, insbesondere Metallatom oder Metallion, insbesondere wie zuvor definiert, aufweist, insbesondere wobei das Metall ausgewählt ist aus Elementen der Gruppen 1 bis 14 des Periodensystems der Elemente, insbesondere aus Elementen der Gruppen 4, 8, und 11 bis 13 des Periodensystems der Elemente, und/oder insbesondere wobei das Metall ausgewählt ist aus der Gruppe von Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, AI, Ga, In, TI, Si, Ge, Sn, Pb, As, Sb und Bi, insbesondere aus der Gruppe von Ti, Zn, Cu, Zr, Ni, Pd, Pt, Ru, Th, Fe, Mn, Ag, Al und Co, vorzugsweise aus der Gruppe von Ti, Cu, Zr, Fe, Co, Zn, Mn, Al und Ag, bevorzugt aus der Gruppe von Cu, Fe, Al und Zn; und/oder
wobei das MOF-Material (*Metal Organic Framework*) mit mindestens einem weiteren Metall, ausgewählt aus der Gruppe der Edelmetalle, insbesondere ausgewählt aus der Gruppe von Rt, Rh, Pt, Ag, Au und deren Kombinationen, ausgerüstet, insbesondere dotiert, ist; und/oder
wobei die katalytischen und/oder reaktiven Partikel (4) das MOF-Material (*Metal Organic Framework*) in Masse und/oder in Reinform und/oder ohne Trägerkomponente und/oder als solches enthalten oder hieraus bestehen, insbesondere hieraus bestehen; und/oder wobei die katalytischen und/oder reaktiven Partikel (4) aus der katalytischen und/oder reaktiven Komponente in Form des MOF-Materials (*Metal Organic Framework*) in Masse und/oder in Reinform und/oder ohne Trägerkomponente und/oder als solchem bestehen und/oder hieraus gebildet; und/oder
wobei die katalytischen und/oder reaktiven Partikel (4) zumindest im Wesentlichen vollständig oder aber zumindest teilweise in der Klebstoffschicht (3) angeordnet und/oder in die Klebstoffschicht (3) eingelagert und/oder integriert sind; und/oder
wobei die katalytischen und/oder reaktiven Partikel (4) einerseits und die Klebstoffschicht (3) andererseits in einem Partikel/Klebstoffschicht-Mengenverhältnis, insbesondere Partikel/Klebstoffschicht-Flächengewichtsverhältnis, insbesondere im Bereich von 10 : 1 bis 1 : 5, vorzugsweise im Bereich von 5 : 1 bis 1 : 2, bevorzugt im Bereich von 2 : 1 bis 1 : 1, eingesetzt sind und/oder insbesondere von mehr als 1 (> 1, d.h. unter Ausschluss von 1) eingesetzt sind; und/oder
wobei die Adsorberpartikel (5) zumindest im Wesentlichen vollständig oder aber zumindest teilweise auf der Klebstoffschicht (3) angeordnet sind und/oder insbesondere wobei das Verhältnis der mittleren Partikelgröße (D50), insbesondere des mittleren Teilchendurchmesser (D50), der zumindest im Wesentlichen vollständig oder aber zumindest teilweise auf der Klebstoffschicht (3) angeordneten und/oder vorliegenden Adsorberpartikel (5) einerseits zu der mittleren Partikelgröße (D50), insbesondere dem mittleren Teilchendurchmesser (D50), der zumindest im Wesentlichen vollständig oder aber zumindest teilweise in der Klebstoffschicht (3) angeordneten und/oder vorliegenden, insbesondere in die Klebstoffschicht (3) integrierten und/oder eingebrachten katalytischen und/oder reaktiven Partikel (4) andererseits [Partikelgröße (D50), insbesondere mittlerer Teilchendurchmesser (D50), der aufgelagerten Adsorberpartikel (5) : Partikelgröße (D50), insbesondere mittlerer Teilchendurchmesser (D50), der eingelagerten katalytischen und/oder reaktiven Partikel (4)] im Bereich von 100 : 1 bis 1 : 1, insbesondere im Bereich von 50 : 1 bis 1,05 : 1, vorzugsweise im Bereich von 40 : 1 bis 1,1 : 1, bevorzugt im Bereich von 30 : 1 bis 1,5 : 1, besonders bevorzugt im Bereich von 20 : 1 bis 2 : 1, ganz besonders bevorzugt im Bereich von 10 : 1 bis 3 : 1, liegt.

6. Einheit nach einem der vorangehenden Ansprüche,
wobei die katalytischen und/oder reaktiven Partikel (4) kornförmig und/oder kugelförmig, insbesondere kugelförmig, ausgebildet sind; und/oder
wobei die katalytischen und/oder reaktiven Partikel (4) eine Partikelgröße, insbesondere einen Teilchendurchmesser, im Bereich von 0,0001 mm bis 2,5 mm, insbesondere im Bereich von 0,0005 mm bis 2 mm, vorzugsweise im Bereich von 0,001 mm bis 1,5 mm, bevorzugt im Bereich von 0,003 mm bis 1 mm, besonders bevorzugt im Bereich von 0,005 mm bis 0,8 mm, ganz besonders bevorzugt im Bereich von 0,01 mm bis 0,5 mm, aufweisen, insbesondere wobei mindestens 80 %, insbesondere mindestens 90 %, vorzugsweise mindestens 95 % der katalytischen und/oder reaktiven Partikel (4), bezogen auf die Gesamtanzahl der katalytischen und/oder reaktiven Partikel (4), Partikelgrößen, insbesondere Teilchendurchmesser, in den vorgenannten Bereichen aufweisen, und/oder
wobei die katalytischen und/oder reaktiven Partikel (4) eine mittlere Partikelgröße (D50), insbesondere einen mittleren Teilchendurchmesser (D50), im Bereich von 0,0001 mm bis 2,5 mm, insbesondere im Bereich von 0,0005 mm bis 2 mm, vorzugsweise im Bereich von 0,001 mm bis 1,5 mm, bevorzugt im Bereich von 0,003 mm bis 1 mm, besonders bevorzugt im Bereich von 0,005 mm bis 0,8 mm, ganz besonders bevorzugt im Bereich von 0,01 mm bis 0,5 mm, aufweisen; und/oder
wobei die katalytischen und/oder reaktiven Partikel (4) eine mittlere Partikelgröße (D50), insbesondere einen mittleren Teilchendurchmesser (D50), im Bereich von 0,0001 mm bis 1 mm, insbesondere im Bereich von 0,0005 mm bis 0,5 mm, vorzugsweise im Bereich von 0,001 mm bis 0,1 mm, aufweisen, insbesondere wobei die katalytischen und/oder reaktiven Partikel (4) zumindest teilweise in die Klebstoffschicht (3) eingelagert und/oder integriert sind; und/oder
wobei die katalytischen und/oder reaktiven Partikel (4) eine mittlere Partikelgröße (D50), insbesondere einen mittleren Teilchendurchmesser (D50), im Bereich von 0,001 mm bis 2,5 mm, insbesondere im Bereich von 0,002 mm bis 2 mm, vorzugsweise im Bereich von 0,003 mm bis 1 mm, bevorzugt im Bereich von 0,005 mm bis 0,5 mm, aufweisen, insbesondere wobei die katalytischen und/oder reaktiven Partikel (4) auf der Klebstoffschicht (3) angeordnet sind; und/oder;
wobei die katalytischen und/oder reaktiven Partikel (4) in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², eingesetzt sind und/oder wobei die Einheit (1) die katalytischen und/oder reaktiven Partikel (4) in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², aufweist; und/oder
wobei die katalytischen und/oder reaktiven Partikel (4) auf und/oder in der Klebstoffschicht (3), insbesondere in zufälliger und/oder stochastischer Anordnung und/oder in stochastisch-homogener Anordnung, angebracht und/oder angeordnet sind und/oder zumindest teilweise in die Klebstoffschicht (3), insbesondere in zufälliger und/oder stochastischer Anordnung und/oder stochastisch-homogen Anordnung, eingelagert und/oder integriert sind; und/oder
wobei die katalytischen und/oder reaktiven Partikel (4) zumindest im Wesentlichen vollständig oder aber zumindest teilweise auf der Klebstoffschicht (3) angeordnet sind und/oder vorliegen und/oder wobei mindestens 50 %, insbesondere mindestens 70 %, vorzugsweise mindestens 90 %, bevorzugt mindestens 95 %, der katalytischen und/oder reaktiven Partikel (4), bezogen auf die Gesamtanzahl der katalytischen und/oder reaktiven Partikel (4), auf der Klebstoffschicht (3) angeordnet sind und/oder vorliegen; und/oder
wobei die katalytischen und/oder reaktiven Partikel (4) zumindest im Wesentlichen vollständig oder aber zumindest teilweise in der Klebstoffschicht (3) angeordnet sind und/oder vorliegen, insbesondere in die Klebstoffschicht (3) eingelagert und/oder integriert sind, und/oder wobei mindestens 50 %, insbesondere mindestens 70 %, vorzugsweise mindestens 90 %, bevorzugt mindestens 95 %, der katalytischen und/oder reaktiven Partikel (4), bezogen auf die Gesamtanzahl der katalytischen und/oder reaktiven Partikel (4), in der Klebstoffschicht (3) angeordnet sind und/oder vorliegen, insbesondere in die Klebstoffschicht (3) eingelagert und/oder integriert sind; und/oder
wobei die katalytischen und/oder reaktiven Partikel (4) in einem Dickenabschnitt mit einer Dicke von mindestens 5 %, insbesondere mindestens 10 %, vorzugsweise mindestens 30 %, bevorzugt mindestens 50 %, besonders bevorzugt mindestens 70 %, ganz besonders bevorzugt mindestens 90 %, bezogen auf die Gesamtdicke der Klebstoffschicht (3), in der Klebstoffschicht (3) angeordnet und/oder eingelagert sind und/oder vorliegen, insbesondere in die Klebstoffschicht (3) eingelagert und/oder integriert sind, insbesondere wobei der die katalytischen und/oder reaktiven Partikel (4) aufweisende Dickenabschnitt auf der dem Träger (2) abgewandten Seite der Klebstoffschicht (3) angeordnet ist; und/oder wobei die katalytischen und/oder reaktiven Partikel (4) zumindest im Wesentlichen in der gesamten Dicke der Klebstoffschicht (3) in der Klebstoffschicht (3) angeordnet sind und/oder vorliegen, insbesondere in die Klebstoffschicht (3) eingelagert und/oder integriert sind; und/oder
wobei die auf der Klebstoffschicht (3) angeordneten und/oder vorliegenden katalytischen und/oder reaktiven Partikel (4) eine größere mittlere Partikelgröße (D50), insbesondere einen größeren mittleren Teilchendurchmesser (D50), als die zumindest im Wesentlichen vollständig oder aber zumindest teilweise in der Klebstoffschicht (3) angeordneten und/oder vorliegenden katalytischen und/oder reaktiven Partikel (4) aufweisen; und/oder
wobei das Verhältnis der mittleren Partikelgröße (D50), insbesondere des mittleren Teilchendurchmesser (D50), der zumindest im Wesentlichen vollständig oder aber zumindest teilweise auf der Klebstoffschicht (3) angeordneten und/oder vorliegenden katalytischen und/oder reaktiven Partikel (4) einerseits zu der mittleren Partikelgröße (D50), insbesondere dem mittleren Teilchendurchmesser (D50), der zumindest im Wesentlichen vollständig oder aber zumindest teilweise in der Klebstoffschicht (3) angeordneten und/oder vorliegenden, insbesondere in die Klebstoffschicht (3) integrierten und/oder eingebrachten katalytischen und/oder reaktiven Partikel (4) andererseits [Partikelgröße (D50), insbesondere mittlerer Teilchendurchmesser (D50), der aufgelagerten katalytischen und/oder reaktiven Partikel (4) : Partikelgröße (D50), insbesondere mittlerer Teilchendurchmesser (D50), der eingelagerten katalytischen und/oder reaktiven Partikel (4)] im Bereich von 100 : 1 bis 1 : 1, insbesondere im Bereich von 50 : 1 bis 1,05 : 1, vorzugsweise im Bereich von 40 : 1 bis 1,1 : 1, bevorzugt im Bereich von 30 : 1 bis 1,5 : 1, besonders bevorzugt im Bereich von 20 : 1 bis 2 : 1, ganz besonders bevorzugt im Bereich von 10 : 1 bis 3 : 1, liegt.

7. Einheit nach einem der vorangehenden Ansprüche,
wobei der Träger (2) mit einer Vielzahl der diskreten Adsorberpartikel (5) beaufschlagt und/oder ausgerüstet und/oder versehen ist, wobei die Adsorberpartikel (5) mit dem Träger (2) dauerhaft verbunden sind, insbesondere mittels Verklebung, und/oder mit dem Träger (2) verklebt sind, wobei die Verbindung und/oder Verklebung durch die auf den Träger (2) aufgebrachte Klebstoffschicht (3) erfolgt und/oder bewirkt ist; und/oder
wobei die Adsorberpartikel (5) auf und/oder in der Klebstoffschicht (3) angeordnet und/oder zumindest teilweise in die Klebstoffschicht (3) eingelagert und/oder integriert sind; und/oder
wobei die Adsorberpartikel (5) kornförmig und/oder kugelförmig, insbesondere kugelförmig, ausgebildet sind; und/oder
wobei Adsorberpartikel (5) eine Partikelgröße, insbesondere einen Teilchendurchmesser, im Bereich von 0,005 mm bis 2,5 mm, vorzugsweise 0,01 mm bis 2 mm, bevorzugt 0,015 mm bis 0,5 mm, besonders bevorzugt 0,02 mm bis 0,3 mm, ganz besonders bevorzugt 0,03 mm bis 0,15 mm, aufweisen, insbesondere wobei mindestens 80 %, insbesondere mindestens 90 %, vorzugsweise mindestens 95 % der Adsorberpartikel (5), bezogen auf die Gesamtanzahl der Adsorberpartikel (5), Partikelgrößen, insbesondere Teilchendurchmesser, in den vorgenannten Bereichen aufweisen, und/oder
wobei die Adsorberpartikel (5) eine mittlere Partikelgröße (D50), insbesondere einen mittleren Teilchendurchmesser (D50), im Bereich von 0,005 mm bis 2,5 mm, vorzugsweise 0,01 mm bis 2 mm, bevorzugt 0,015 mm bis 0,5 mm, besonders bevorzugt 0,02 mm bis 0,3 mm, ganz besonders bevorzugt 0,03 mm bis 0,15 mm, aufweisen; und/oder
wobei die Adsorberpartikel (5) eine mittlere Partikelgröße (D50), insbesondere einen mittleren Teilchendurchmesser (D50), im Bereich von 0,005 mm bis 1 mm, insbesondere im Bereich von 0,01 mm bis 0,5 mm, vorzugsweise im Bereich von 0,02 mm bis 0,1 mm, aufweisen, insbesondere wobei die Adsorberpartikel (5) zumindest teilweise in die Klebstoffschicht (3) eingelagert und/oder integriert sind; und/oder
wobei die Adsorberpartikel (5) eine mittlere Partikelgröße (D50), insbesondere einen mittleren Teilchendurchmesser (D50), im Bereich von 0,01 mm bis 2,5 mm, insbesondere im Bereich von 0,02 mm bis 2,0 mm, vorzugsweise im Bereich von 0,03 mm bis 1,0 mm, bevorzugt im Bereich von 0,03 mm bis 0,5 mm, aufweisen, insbesondere wobei die Adsorberpartikel (5) auf der Klebstoffschicht (3) angeordnet sind; und/oder
wobei die Adsorberpartikel (5) in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², eingesetzt werden und/oder wobei die Einheit (1) die Adsorberpartikel (5) in einer Menge im Bereich von 5 g/m² bis 150 g/m², insbesondere 10 g/m² bis 100 g/m², vorzugsweise 15 g/m² bis 75 g/m², bevorzugt 20 g/m² bis 50 g/m², aufweist; und/oder
wobei die Adsorberpartikel (5) auf und/oder in der Klebstoffschicht (3), insbesondere in zufälliger und/oder stochastischer Anordnung und/oder in stochastisch-homogener Anordnung, angebracht und/oder angeordnet sind und/oder zumindest teilweise in die Klebstoffschicht (3), insbesondere in zufälliger und/oder stochastischer Anordnung und/oder stochastisch-homogener Anordnung, eingelagert und/oder integriert sind; und/oder
wobei die Adsorberpartikel (5) zumindest im Wesentlichen vollständig oder aber zumindest teilweise auf der Klebstoffschicht (3) angeordnet sind und/oder wobei mindestens 50 %, insbesondere mindestens 70 %, vorzugsweise mindestens 90 %, bevorzugt mindestens 95 %, der Adsorberpartikel (5), bezogen auf die Gesamtanzahl der Adsorberpartikel (5), auf der Klebstoffschicht (3) angeordnet sind; und/oder
wobei die Adsorberpartikel (5) zumindest im Wesentlichen vollständig oder aber zumindest teilweise in der Klebstoffschicht (3) angeordnet sind, insbesondere in die Klebstoffschicht (3) eingelagert und/oder integriert sind, und/oder wobei mindestens 50 %, insbesondere mindestens 70 %, vorzugsweise mindestens 90 %, bevorzugt mindestens 95 %, der Adsorberpartikel (5), bezogen auf die Gesamtanzahl der Adsorberpartikel (5), in der Klebstoffschicht (3) angeordnet sind, insbesondere in die Klebstoffschicht (3) eingelagert und/oder integriert sind; und/oder
wobei die Adsorberpartikel (5) in einem Dickenabschnitt mit einer Dicke von mindestens 5 %, insbesondere mindestens 10 %, vorzugsweise mindestens 30 %, bevorzugt mindestens 50 %, besonders bevorzugt mindestens 70 %, ganz besonders bevorzugt mindestens 90 %, bezogen auf die Gesamtdicke der Klebstoffschicht (3), in der Klebstoffschicht (3) angeordnet und/oder eingelagert sind und/oder vorliegen, insbesondere in die Klebstoffschicht (3) eingelagert und/oder integriert sind, insbesondere wobei der die Adsorberpartikel (5) aufweisende Dickenabschnitt auf der dem Träger (2) abgewandten Seite der Klebstoffschicht (3) angeordnet ist; und/oder wobei die Adsorberpartikel (5) zumindest im Wesentlichen in der gesamten Dicke der Klebstoffschicht (3) in der Klebstoffschicht (3) angeordnet sind und/oder vorliegen, insbesondere in die Klebstoffschicht (3) eingelagert und/oder integriert sind; und/oder
wobei die auf der Klebstoffschicht (3) angeordneten und/oder vorliegenden Adsorberpartikel (5) eine größere mittlere Partikelgröße (D50), insbesondere mittleren Teilchendurchmesser (D50), als die zumindest im Wesentlichen vollständig oder aber zumindest teilweise in der Klebstoffschicht (3) angeordneten und/oder vorliegenden Adsorberpartikel (5) aufweisen; und/oder
wobei das Verhältnis der mittleren Partikelgröße (D50), insbesondere des mittleren Teilchendurchmesser (D50), der zumindest im Wesentlichen vollständig oder aber zumindest teilweise auf der Klebstoffschicht (3) angeordneten und/oder vorliegenden Adsorberpartikel (5) einerseits zu der mittleren Partikelgröße (D50), insbesondere dem mittleren Teilchendurchmesser (D50), der zumindest im Wesentlichen vollständig oder aber zumindest teilweise in der Klebstoffschicht (3) angeordneten und/oder vorliegenden, insbesondere in die Klebstoffschicht (3) integrierten und/oder eingebrachten Adsorberpartikel (5) andererseits [Partikelgröße (D50), insbesondere mittlerer Teilchendurchmesser (D50), der aufgelagerten Adsorberpartikel (5) : Partikelgröße (D50), insbesondere mittlerer Teilchendurchmesser (D50), der eingelagerten Adsorberpartikel (5)] im Bereich von 100 : 1 bis 1 : 1, insbesondere im Bereich von 50 : 1 bis 1,05 : 1, vorzugsweise im Bereich von 40 : 1 bis 1,1 : 1, bevorzugt im Bereich von 30 : 1 bis 1,5 : 1, besonders bevorzugt im Bereich von 20 : 1 bis 2 : 1, ganz besonders bevorzugt im Bereich von 10 : 1 bis 3 : 1, liegt; und/der
wobei die auf der Klebstoffschicht (3) angeordneten und/oder vorliegenden Adsorberpartikel (5) eine größere mittlere Partikelgröße (D50), insbesondere mittleren Teilchendurchmesser (D50), als die zumindest im Wesentlichen vollständig oder aber zumindest teilweise in der Klebstoffschicht (3) angeordneten und/oder vorliegenden katalytischen und/oder reaktiven Partikel (4) aufweisen; und/oder
wobei das Verhältnis der mittleren Partikelgröße (D50), insbesondere des mittleren Teilchendurchmesser (D50), der zumindest im Wesentlichen vollständig oder aber zumindest teilweise auf der Klebstoffschicht (3) angeordneten und/oder vorliegenden Adsorberpartikel (5) einerseits zu der mittleren Partikelgröße (D50), insbesondere dem mittleren Teilchendurchmesser (D50), der zumindest im Wesentlichen vollständig oder aber zumindest teilweise in der Klebstoffschicht (3) angeordneten und/oder vorliegenden, insbesondere in die Klebstoffschicht (3) integrierten und/oder eingebrachten, katalytischen und/oder reaktiven Partikel (4) andererseits [Partikelgröße (D50), insbesondere mittlerer Teilchendurchmesser (D50), der aufgelagerten Adsorberpartikel (5) : Partikelgröße (D50), insbesondere mittlerer Teilchendurchmesser (D50), der eingelagerten katalytischen und/oder reaktiven Partikel (4)] im Bereich von 100 : 1 bis 1 : 1, insbesondere im Bereich von 50 : 1 bis 1,05 : 1, vorzugsweise im Bereich von 40 : 1 bis 1,1 : 1, bevorzugt im Bereich von 30 : 1 bis 1,5 : 1, besonders bevorzugt im Bereich von 20 : 1 bis 2 : 1, ganz besonders bevorzugt im Bereich von 10 : 1 bis 3 : 1, liegt.

8. Einheit nach einem der vorangehenden Ansprüche,
wobei die katalytischen und/oder reaktiven Partikel (4) zumindest im Wesentlichen vollständig oder aber zumindest teilweise in der Klebstoffschicht (3) angeordnet sind, insbesondere in die Klebstoffschicht (3) eingelagert und/oder integriert sind, und/oder wobei mindestens 50 %, insbesondere mindestens 70 %, vorzugsweise mindestens 90 %, bevorzugt mindestens 95 %, der katalytischen und/oder reaktiven Partikel (4), bezogen auf die Gesamtanzahl der katalytischen und/oder reaktiven Partikel (4), in der Klebstoffschicht (3) angeordnet sind, insbesondere in die Klebstoffschicht (3) eingelagert und/oder integriert sind, und
wobei die Adsorberpartikel (5) zumindest im Wesentlichen vollständig oder aber zumindest teilweise auf der Klebstoffschicht (3) angeordnet sind und/oder wobei mindestens 50 %, insbesondere mindestens 70 %, vorzugsweise mindestens 90 %, bevorzugt mindestens 95 %, der Adsorberpartikel (5), bezogen auf die Gesamtanzahl der Adsorberpartikel (5), auf der Klebstoffschicht (3) angeordnet sind;
insbesondere wobei die Adsorberpartikel (5) eine größere Partikelgröße, insbesondere einen größeren Teilchendurchmesser, und/oder eine größere mittlere Partikelgröße (D50), insbeson-dere eine größeren mittleren Teilchendurchmesser (D50), als die katalytischen und/oder reaktiven Partikel (4) aufweisen, insbesondere wobei die Partikelgröße, insbesondere der Teilchendurchmesser, und/oder die mittlere Partikelgröße (D50), insbesondere der mittlere Teilchendurchmesser (D50), der Adsorberpartikel (5) um mindestens 10 %, insbesondere mindestens 25 %, vorzugsweise mindestens 50 %, größer ist als die entsprechende Größe der katalytischen und/oder reaktiven Partikel (4), bezogen auf die entsprechende Größe der katalytischen und/oder reaktiven Partikel (4); und/oder
insbesondere wobei die Adsorberpartikel (5) auf der dem Träger (2) abgewandten Seite der Klebstoffschicht (3) angeordnet sind.

9. Einheit nach einem der vorangehenden Ansprüche,
wobei die Adsorberpartikel (5) aus partikulärer Aktivkohle, vorzugsweise in Form von Aktivkohleteilchen in Kornform ("Kornkohle") oder Kugelform ("Kugelkohle"), gebildet sind und/oder hieraus bestehen; und/oder
wobei die Adsorberpartikel (5) in einer Menge im Bereich von 5 g/m² bis 350 g/m², insbesondere 10 g/m² bis 200 g/m², vorzugsweise 15 g/m² bis 100 g/m², bevorzugt 20 g/m² bis 40 g/m², eingesetzt werden und/oder wobei die Einheit (1) die Adsorberpartikel (5) in einer Menge im Bereich von 5 g/m² bis 350 g/m², insbesondere 10 g/m² bis 200 g/m², vorzugsweise 15 g/m² bis 100 g/m², bevorzugt 20 g/m² bis 40 g/m², aufweist.

10. Einheit nach einem der vorangehenden Ansprüche,
wobei der gebrochene Klebstoffpolymerschaum der Klebstoffschicht (3) eine Vielzahl getrockneter und/oder ausgehärteter, insbesondere vernetzter, zerstörter und/oder geplatzter und/oder kollabierter Schaumblasen aufweist; und/oder
wobei der gebrochene Klebstoffpolymerschaum, insbesondere die getrockneten und/oder ausgehärteten, insbesondere vernetzten, zerstörten und/oder geplatzten und/oder kollabierten Schaumblasen des gebrochenen Klebstoffschaums, eine Vielzahl an zerstörten und/oder gebrochenen und/oder kollabierten Wandungen und/oder Stegen aus Klebstoffpolymer aufweist bzw. aufweisen; und/oder
wobei der gebrochene Klebstoffpolymerschaum einen Anteil an zerstörten und/oder geplatzten und/oder kollabierten Schaumblasen von mindestens 10 %, insbesondere mindestens 30 %, vorzugsweise mindestens 50 %, bevorzugt mindestens 70 %, besonders bevorzugt mindestens 90 %, ganz besonders bevorzugt mindestens 95 %, bezogen auf die Gesamtanzahl an Schaumblasen in dem gebrochenen Klebstoffpolymerschaum, aufweist; und/oder
wobei der gebrochene Klebstoffpolymerschaum einen Anteil an zerstörten und/oder geplatzten und/oder kollabierten Schaumblasen im Bereich von 10 % bis 100 %, insbesondere im Bereich von 30 % bis 99,9 %, vorzugsweise im Bereich von 50 % bis 99 %, bevorzugt im Bereich von 70 % bis 99 %, besonders bevorzugt im Bereich von 90 % bis 98 %, bezogen auf die Gesamtanzahl an Schaumblasen in dem gebrochenen Klebstoffpolymerschaum, aufweist; und/oder
wobei der gebrochene Klebstoffpolymerschaum nicht geschlossen ausgebildet ist und/oder wobei der gebrochene Klebstoffpolymerschaum eine Vielzahl von insbesondere sich in dem gebrochenen Klebstoffpolymerschaum erstreckenden Durchbrechungen, Poren, Kanäle und/oder Öffnungen und/oder eine Vielzahl von insbesondere die jeweiligen Außenseiten des gebrochenen Klebstoffpolymerschaums und/oder der Klebstoffschicht (3) verbindenden Durchbrechungen, Poren, Kanäle und/oder Öffnungen aufweist; und/oder
wobei der gebrochene Klebstoffpolymerschaum zusammenhängend und/oder kohärent ausgebildet ist; und/oder
wobei der gebrochene Klebstoffpolymerschaum zumindest im Wesentlichen vollflächig und/oder ganzseitig auf dem Träger (2) aufgebracht ist; und/oder wobei der gebrochene Klebstoffpolymerschaum im Vergleich zu einem entsprechenden nichtgeschäumten und/oder kontinuierlich ausgebildeten Klebstoffpolymer eine bzw. ein um mindestens 5 %, insbesondere mindestens 10 %, vorzugsweise mindestens 15 %, bevorzugt mindestens 20 %, besonders bevorzugt mindestens 25 %, verringerte Dichte und/oder verringertes insbesondere flächenbezogenes Volumengewicht, bezogen auf das nichtgeschäumte und/oder kontinuierlich ausgebildete Klebstoffpolymer, aufweist und/oder
wobei der gebrochene Klebstoffpolymerschaum im Vergleich zu einem entsprechenden nichtgeschäumten und/oder kontinuierlich ausgebildeten Klebstoffpolymer eine bzw. ein im Bereich von 5 % bis 80%, insbesondere im Bereich von 10 % bis 70 %, vorzugsweise im Bereich von 15 % bis 60 %, bevorzugt im Bereich von 20 % bis 55 %, verringerte Dichte und/oder verringertes insbesondere flächenbezogenes Volumengewicht, bezogen auf das nichtgeschäumte und/oder kontinuierlich ausgebildete Klebstoffpolymer, aufweist; und/oder
wobei der gebrochene Klebstoffpolymerschaum im Vergleich zu einem entsprechenden intakten und/oder nichtgebrochenen Klebstoffpolymerschaum eine bzw. ein um höchstens 10 %, insbesondere höchstens 5 %, vorzugsweise höchstens 1 %, erhöhte Dichte und/oder erhöhtes insbesondere flächenbezogenes Volumengewicht, bezogen auf den intakten und/oder nichtgebrochenen Klebstoffpolymerschaum, aufweist; und/oder
wobei der gebrochene Klebstoffpolymerschaum im Vergleich zu einem entsprechenden intakten und/oder nichtgebrochenen Klebstoffpolymerschaum eine um höchstens 30 %, insbesondere höchstens 20 %, vorzugsweise höchstens 10 %, bevorzugt höchstens 5 %, verringerte Elastizität und/oder reversible Dehnbarkeit, bezogen auf den intakten und/oder nichtgebrochenen Klebstoffpolymerschaum, aufweist und/oder
wobei der gebrochene Klebstoffpolymerschaum im Vergleich zu einem entsprechenden intakten und/oder nichtgebrochenen Klebstoffpolymerschaum eine im Bereich von 5 % bis 30 %, insbesondere im Bereich von 10 % bis 20 %, verringerte Elastizität und/oder reversible Dehnbarkeit, bezogen auf den intakten und/oder nichtgebrochenen Klebstoffpolymerschaum, aufweist; und/oder
wobei die Klebstoffschicht (3) in einer Menge im Bereich von 5 g/m² bis 60 g/m², insbesondere im Bereich von 10 g/m² bis 50 g/m², vorzugsweise im Bereich von 20 g/m² bis 40 g/m², bevorzugt im Bereich von 25 g/m² bis 35 g/m², auf den textilen Träger (2) aufgebracht ist und/oder vorliegt und/oder wobei die Klebstoffschicht (3) ein Flächengewicht im Bereich von 5 g/m² bis 60 g/m², insbesondere im Bereich von 10 g/m² bis 50 g/m², vorzugsweise im Bereich von 20 g/m² bis 40 g/m², bevorzugt im Bereich von 25 g/m² bis 35 g/m², aufweist; und/oder
wobei die katalytischen und/oder reaktiven Partikel (4) und/oder die Adsorberpartikel (5), unabhängig voneinander, an dem gebrochenen Klebstoffpolymerschaum der Klebstoffschicht (3), insbesondere an den zerstörten und/oder gebrochenen und/oder kollabierten Wandungen und/oder Stegen der zerstörten und/oder geplatzten und/oder kollabierten Schaumblasen des gebrochenen Klebstoffschaums befestigt und/oder fixiert sind.

11. Einheit nach einem der vorangehenden Ansprüche,
wobei der gebrochene Klebstoffpolymerschaum erhältlich ist durch Trocknung und/oder Aushärtung, insbesondere Vernetzung, einer aufgeschäumten, vorzugsweise unter mechanischem Energieeintrag aufgeschäumten, wässrig oder organisch basierten, vorzugsweise wässrig basierten, Lösung und/oder Dispersion des Klebstoffpolymers, insbesondere einhergehend mit einer zumindest teilweisen Brechung des durch die aufgeschäumte Lösung und/oder Dispersion des Klebstoffpolymers bereitgestellten Schaums,
insbesondere wobei die Trocknung und/oder Aushärtung, insbesondere Vernetzung, in Gegenwart mindestens eines Schaumbildners und gegebenenfalls mindestens eines Schaumstabilisators und gegebenenfalls mindestens eines Vernetzers und gegebenenfalls mindestens eines Emulgators und gegebenenfalls mindestens eines Verdickers durchgeführt ist; und/oder
wobei das Klebstoffpolymer ausgewählt ist aus der Gruppe von Polyacrylat (PA), Polymethacrylat (PMA), Polymethylmethacrylat (PMMA), Polycarbonat (PC), Polyurethan (PU) und Silikonen; vorzugsweise Polyacrylat (PA) und Polyurethan (PU); sowie Mischungen oder Kombinationen von mindestens zwei der vorgenannten Verbindungen, bevorzugt Polyurethan (PU), und/oder wobei das Klebstoffpolymer ein Polyacrylat (PA) und/oder Polyurethan (PU) ist und/oder wobei das Klebstoffpolymer ein *High Solid-*Klebstoff ist.

12. Verfahren zur Herstellung einer katalytischen und/oder reaktiven Einheit (1), insbesondere wie in einem der Ansprüche 1 bis 11 definiert, in Form eines Schutzmaterials mit katalytischen und/oder reaktiven Eigenschaften, insbesondere mit Schutzfunktion gegenüber chemischen und/oder biologischen Schad- und/oder Giftstoffen, vorzugsweise zur Herstellung eines insbesondere textilen katalytischen und/oder reaktiven Schutzfiltermaterials,
wobei ein insbesondere luftdurchlässiger Träger (2), insbesondere in Form eines textilen Trägers, mit einer Vielzahl diskreter katalytischer und/oder reaktiver Partikel (4) ausgerüstet wird,
wobei die katalytischen und/oder reaktiven Partikel (4) mindestens eine katalytische und/oder reaktive Komponente aufweisen oder hieraus bestehen, wobei die katalytische und/oder reaktive Komponente ein MOF-Material (*Metal Organic Framework*) aufweist oder hieraus besteht,
wobei die katalytischen und/oder reaktiven Partikel (4) mit dem Träger (2) mittels Verklebung dauerhaft verbunden werden und/oder mit dem Träger (2) verklebt werden, wobei die Klebstoffschicht (3) als eine luftdurchlässige und/oder diskontinuierlich Schicht auf Basis eines getrockneten und ausgehärteten gebrochenen Klebstoffpolymerschaums ausgebildet wird, und
wobei die Einheit (1) zudem mit einer Vielzahl diskreter Adsorberpartikel (5) ausgerüstet wird.

13. Verwendung einer katalytischen und/oder reaktiven Einheit, wie in einem der Ansprüche 1 bis 11 definiert,
zur Herstellung von Schutzausrüstung und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, und/oder
zur Herstellung von Filtern und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

14. Schutzausrüstungen und/oder Schutzgegenstände aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, hergestellt unter Verwendung einer katalytischen und/oder reaktiven Einheit, wie in einem der Ansprüche 1 bis 11 definiert, und/oder aufweisend eine katalytische und/oder reaktive Einheit, wie in einem der Ansprüche 1 bis 11 definiert.

15. Filter und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer katalytischen und/oder reaktiven Einheit, wie in einem der Ansprüche 1 bis 11 definiert, und/oder aufweisend eine katalytische und/oder reaktive Einheit, wie in einem der Ansprüche 1 bis 11 definiert.

## Claims

1. A catalytic and/or reactive unit (1) in the form of a protective material having catalytic and/or reactive properties, in particular with the function of protecting against chemical and/or biological harmful and/or poisonous substances,
wherein the unit (1) comprises an in particular air-permeable carrier (2), in particular in the form of a textile carrier, wherein the carrier (2) is equipped with a plurality of discrete catalytic and/or reactive particles (4),
wherein the catalytic and/or reactive particles (4) comprise at least one catalytic and/or reactive component, or consist thereof, wherein said catalytic and/or reactive component comprises an MOF (*Metal Organic Framework*) material or consists thereof,
wherein the catalytic and/or reactive particles (4) are permanently bonded to the carrier (2) by means of gluing and/or are glued to the carrier (2), wherein the bonding and/or gluing is effected by an adhesive layer (3) applied to the carrier (2), wherein the adhesive layer (3) is designed as an air-permeable and/or discontinuous layer based on a dried and cured broken adhesive polymer foam, and
wherein the catalytic and/or reactive particles (4) are applied jointly and/or together with a plurality of activated carbon particles as discrete adsorber particles (5).

2. The unit according to claim 1,
wherein the catalytic and/or reactive component is applied in bulk and/or in pure form and/or without a carrier component and/or as such; and/or wherein the catalytic and/or reactive particles (4) consist of and/or are formed from the catalytic and/or reactive component in bulk and/or in pure form and/or without a carrier component and/or as such.

3. The unit according to claim 1 or 2,
wherein the catalytic and/or reactive particles (4) comprise the catalytic and/or reactive component together with a carrier component or consist thereof;
in particular wherein the carrier component comprises at least one inorganic, organic or inorganic-organic binder and/or a carrier component having in particular porous and/or internal cavities or consists thereof; and/or
in particular wherein the catalytic and/or reactive component is in particular chemically and/or physically fixed to the carrier component and/or embedded therein and/or wherein the carrier component is doped and/or impregnated with the catalytic and/or reactive component; and/or
in particular wherein the catalytic and/or reactive particles (4) contain the catalytic and/or reactive component, in particular the catalytic and/or reactive metal component in amounts in the range from 0.001% to 100% by weight, in particular in the range from 0.005% to 99.5% by weight, preferably in the range from 0.01% to 95% by weight, preferably in the range from 0.05% to 90% by weight, particularly preferably in the range from 0.1% to 80% by weight, very particularly preferably in the range from 0.25% to 50% by weight, more preferably in the range from 0.5% to 30% by weight, even more preferably in the range from 1% to 20% by weight, even more preferably in the range from 2% to 10% by weight, in relation to the catalytic and/or reactive particles (4).

4. The unit according to any one of the preceding claims,
wherein the MOF (*Metal Organic Framework*) material comprises repeating structural units based on at least one metal, in particular metal atom or metal ion, in particular as defined above, on the one hand, and at least one at least bidentate and/or bridging organic ligand, in particular as defined below, on the other hand; and/or
wherein the MOF (*Metal Organic Framework*) material comprises at least one metal, in particular a metal atom or metal ion, in particular as defined above, in particular wherein the metal is selected from elements from groups 1 to 14 of the periodic table of elements, in particular elements from groups 4, 8 and 11 to 13 of the periodic table of elements, and/or in particular wherein the metal is selected from the group of Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Si, Ge, Sn, Pb, As, Sb and Bi, in particular from the group of Ti, Zn, Cu, Zr, Ni, Pd, Pt, Ru, Th, Fe, Mn, Ag, Al and Co, preferably from the group of Ti, Cu, Zr, Fe, Co, Zn, Mn, Al and Ag, preferably from the group of Cu, Fe, Al and Zn; and/or
wherein the MOF (*Metal Organic Framework*) material comprises at least one at least bidentate and/or bridging organic ligand, wherein the ligand comprises at least one functional group which is capable of forming at least two coordinate bonds to a metal, in particular a metal atom or metal ion, in particular as defined above and/or forming a coordinative bond to two or more metals, in particular metal atoms or metal ions, in particular as defined above, in each case identically or differently, in particular wherein the functional group of the ligand comprises at least one heteroatom, preferably from the group of N, O, S, B, P, Si and Al, particularly preferably N, O and S, in particular wherein the ligand is selected from at least divalent organic acids, in particular dicarboxylic acids, tricarboxylic acids, tetracarboxylic acids and mixtures thereof, particularly preferably aromatic, in particular mono-, di-, tri-, tetra- or higher-nuclear aromatic di-, tri- or tetracarboxylic acids which are optionally at least monosubstituted, in particular wherein each of the nuclei has at least one heteroatom, the same or different, such as in particular N, O, S, B, P, Si and/or Al, preferably N, S and/or O, and/or
wherein the MOF (*Metal Organic Framework*) material is provided, in particular doped, with at least one other metal selected from the group of precious metals, in particular selected from the group of Rt, Rh, Pt, Ag, Au and combinations thereof, in particular wherein the amount of the other metal is in the range from 0.01% to 15% by weight, in particular in the range from 0.05% to 10% by weight, preferably in the range from 0.1% to 8% by weight, in relation to the metal-containing inorganic, organic or inorganic-organic framework material; and/or
wherein the MOF (*Metal Organic Framework*) material is provided in crystalline form, in particular wherein the degree of crystallinity is at least 60%, in particular at least 70%, preferably at least 80%, particularly preferably at least 90%, more particularly preferably at least 95%, very particularly preferably at least 99% or more; and/or
wherein the MOF (*Metal Organic Framework*) material is provided in activated form, preferably by means of heat treatment, in particular at temperatures in the range from 90°C to 300°C, preferably 100°C to 250°C, preferably 110°C to 220°C; and/or
wherein the catalytic and/or reactive particles (4) consist of MOF (*Metal Organic Framework*) material; and/or
wherein the catalytic and/or reactive particles (4) are formed on the basis of the MOF (*Metal Organic Framework*) material, in particular comprise the MOF (*Metal Organic Framework*) material or consist thereof, in particular consist thereof; and/or
wherein the catalytic and/or reactive particles (4) contain or consist of the MOF (*Metal Organic Framework*) material in mass and/or in a pure form and/or without a carrier component and/or contain as such or are made therefrom, in particular are made therefrom; and/or wherein the catalytic and/or reactive particles (4) consist of the MOF (*Metal Organic Framework*) material in mass and/or in a pure form and/or without a carrier component and/or are made as such and/or are formed therefrom; and/or
wherein the MOF (*Metal Organic Framework*) material is provided in a carrier component, in particular in an inorganic, organic or inorganic-organic binder, and/or in a carrier component which is in particular porous and/or has internal cavities; and/or
wherein the catalytic and/or reactive particles (4) contain the MOF (*Metal Organic Framework*) material on the one hand, and the carrier component on the other hand, in a framework material/carrier component ratio, in particular a framework material/carrier component weight ratio, in the range from 1:0.5 to 15:1, in particular in the range from 1:1 to 10:1, preferably in the range from 1.2:1 to 3:1, particularly preferably in the range from 1.4:1 to 2.5:1 and in particular contains more than 1 (> 1, i.e. not including 1); and/or
wherein the carrier component comprises at least one organic binder, in particular an organic polymer or consists thereof, in particular wherein the organic binder is selected from the group of polyesters, polystyrenes, poly(meth)acrylates, polyacrylates, celluloses, polyamides, polyolefins, polyalkylene oxides and combinations and mixtures thereof.

5. The unit according to any one of the preceding claims,
wherein the MOF (*Metal Organic Framework*) material comprises at least one metal, in particular a metal atom or metal ion, in particular as defined above, in particular wherein the metal is selected from elements from groups 1 to 14 of the periodic table of elements, in particular elements from groups 4, 8 and 11 to 13 of the periodic table of elements, and/or in particular wherein the metal is selected from the group of Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Si, Ge, Sn, Pb, As, Sb and Bi, in particular from the group of Ti, Zn, Cu, Zr, Ni, Pd, Pt, Ru, Th, Fe, Mn, Ag, Al and Co, preferably from group of Ti, Cu, Zr, Fe, Co, Zn, Mn, Al and Ag, preferably from the group of Cu, Fe, Al and Zn; and/or
wherein the MOF (*Metal Organic Framework*) material is provided, in particular doped, with at least one other metal, selected from the group of precious metals, in particular selected from the group of Rt, Rh, Pt, Ag, Au and combinations thereof; and/or
wherein the catalytic and/or reactive particles (4) contain or consist of the MOF (*Metal Organic Framework*) material in mass and/or in a pure form and/or without a carrier component and/or contain as such or consist thereof, in particular consist thereof; and/or wherein the catalytic and/or reactive particles (4) consist of catalytic and/or reactive components in the form of MOF (*Metal Organic Framework*) material in mass and/or in a pure form and/or without a carrier component and/or contain as such and/or are formed therefrom; and/or
wherein the catalytic and/or reactive particles (4) are at least substantially completely or at least partially arranged in the adhesive layer (3) and/or embedded and/or integrated in the adhesive layer (3); and/or
wherein the catalytic and/or reactive particles (4) on the one hand and the adhesive layer (3) on the other hand are applied in a particle/adhesive layer quantity ratio, in particular a particle/adhesive layer surface weight ratio, in particular in the range from 10:1 to 1:5, preferably in the range from 5:1 to 1:2, preferably in the range from 2:1 to 1:1, and/or in particular more than 1 (> 1, i.e. not including 1); and/or
wherein the adsorber particles (5) are at least substantially completely or at least partially arranged on the adhesive layer (3) and/or in particular wherein the ratio of the mean particle size (D50), in particular the mean particle diameter (D50), of the adsorber particles (5) arranged and/or provided at least substantially completely or at least partially on the adhesive layer (3), to the mean particle size (D50), in particular the mean particle diameter (D50), of the catalytic and/or reactive particles (4) arranged and/or present at least substantially completely or at least partially in the adhesive layer (3), in particular integrated and/or introduced into the adhesive layer (3), on the other hand [particle size (D50), in particular mean particle diameter (D50), of the deposited adsorber particles (5): particle size (D50), in particular mean particle diameter (D50), of the embedded catalytic and/or reactive particles (4)] is in the range from 100:1 to 1:1, in particular in the range from 50:1 to 1.05:1, preferably in the range from 40:1 to 1.1:1, preferably in the range from 30:1 to 1.5:1, particularly preferably in the range from 20:1 to 2:1, very particularly preferably in the range from 10:1 to 3:1.

6. The unit according to any one of the preceding claims,
wherein the catalytic and/or reactive particles (4) are granular and/or spherical, in particular spherical; and/or
wherein the catalytic and/or reactive particles (4) have a particle size, in particular a particle diameter, in the range from 0.0001 mm to 2.5 mm, in particular in the range from 0.0005 mm to 2 mm, preferably in the range from 0.001 mm to 1.5 mm, preferably in the range from 0.003 mm to 1 mm, particularly preferably in the range from 0.005 mm to 0.8 mm, very particularly preferably in the range from 0.01 mm to 0.5 mm, in particular wherein at least 80%, in particular at least 90%, preferably at least 95% of the catalytic and/or reactive particles (4), in relation to the total number of catalytic and/or reactive particles (4), have particle sizes, in particular particle diameters, in the abovementioned ranges, and/or
wherein the catalytic and/or reactive particles (4) have a mean particle size (D50), in particular a mean particle diameter (D50), in the range from 0.0001 mm to 2.5 mm, in particular in the range from 0.0005 mm to 2 mm, preferably in the range from 0.001 mm to 1.5 mm, preferably in the range from 0.003 mm to 1 mm, particularly preferably in the range from 0.005 mm to 0.8 mm, very particularly preferably in the range from 0.01 mm to 0.5 mm; and/or
wherein the catalytic and/or reactive particles (4) have a mean particle size (D50), in particular a mean particle diameter (D50), in the range from 0.0001 mm to 1 mm, in particular in the range from 0.0005 mm to 0.5 mm, preferably in the range from 0.001 mm to 0.1 mm, in particular wherein the catalytic and/or reactive particles (4) are at least partially embedded and/or integrated in the adhesive layer (3); and/or
wherein the catalytic and/or reactive particles (4) have a mean particle size (D50), in particular a mean particle diameter (D50), in the range from 0.001 mm to 2.5 mm, in particular in the range from 0.002 mm to 2 mm, preferably in the range from 0.003 mm to 1 mm, preferably in the range from 0.005 mm to 0.5 mm, in particular wherein the catalytic and/or reactive particles (4) are arranged on the adhesive layer (3); and/or
wherein the catalytic and/or reactive particles (4) are applied in an amount in the range from 5 g/m² to 150 g/m², in particular 10 g/m² to 100 g/m², preferably 15 g/m² to 75 g/m², preferably 20 g/m² to 50 g/m², and/or wherein the unit (1) comprises the catalytic and/or reactive particles (4) in an amount in the range from 5 g/m² to 150 g/m², in particular 10 g/m² to 100 g/m², preferably 15 g/m² to 75 g/m², preferably 20 g/m² to 50 g/m²; and/or
wherein the catalytic and/or reactive particles (4) are attached and/or arranged on and/or in the adhesive layer (3), in particular in a random and/or stochastic arrangement and/or in a stochastic-homogeneous arrangement, and/or are at least partially embedded and/or integrated in the adhesive layer (3), in particular in a random and/or stochastic arrangement and/or stochastic-homogeneous arrangement; and/or
wherein the catalytic and/or reactive particles (4) are at least substantially completely or at least partially arranged and/or provided on the adhesive layer (3) and/or wherein at least 50%, in particular at least 70%, preferably at least 90%, preferably at least 95% of the catalytic and/or reactive particles (4), in relation to the total number of catalytic and/or reactive particles (4), are arranged and/or are provided on the adhesive layer (3); and/or
wherein the catalytic and/or reactive particles (4) are at least substantially completely or at least partially arranged and/or provided in the adhesive layer (3), in particular are embedded and/or integrated in the adhesive layer (3) and/or wherein at least 50%, in particular at least 70%, preferably at least 90%, preferably at least 95% of the catalytic and/or reactive particles (4), in relation to the total number of catalytic and/or reactive particles (4), are arranged and/or are provided in the adhesive layer (3), in particular are incorporated and/or integrated into the adhesive layer (3); and/or
wherein the catalytic and/or reactive particles (4) are arranged and/or embedded and/or present in a thickness section with a thickness of at least 5%, in particular at least 10%, preferably at least 30%, preferably at least 50%, particularly preferably at least 70%, very particularly preferably at least 90%, in relation to the total thickness of the adhesive layer (3), in the adhesive layer (3), in particular embedded and/or integrated into the adhesive layer (3), in particular wherein the thickness section comprising the catalytic and/or reactive particles (4) is arranged on the side of the adhesive layer (3) facing away from the carrier (2); and/or wherein the catalytic and/or reactive particles (4) are arranged and/or present in the adhesive layer (3) at least substantially in the entire thickness of the adhesive layer (3), in particular are embedded and/or integrated into the adhesive layer (3); and/or
wherein the catalytic and/or reactive particles (4) arranged and/or provided on the adhesive layer (3) have a larger mean particle size (D50), in particular a larger mean particle diameter (D50), than the catalytic and/or reactive particles (4) arranged and/or present at least substantially completely or at least partially in the adhesive layer (3); and/or
wherein the ratio of the mean particle size (D50), in particular the mean particle diameter (D50), of the catalytic and/or reactive particles (4) arranged and/or provided at least substantially completely or at least partially on the adhesive layer (3), to the mean particle size (D50), in particular the mean particle diameter (D50), of the catalytic and/or reactive particles (4) arranged and/or present at least substantially completely or at least partially in the adhesive layer (3), in particular integrated and/or introduced into the adhesive layer (3), on the other hand [particle size (D50), in particular mean particle diameter (D50), of the deposited catalytic and/or reactive particles (4): particle size (D50), in particular mean particle diameter (D50), of the embedded catalytic and/or reactive particles (4)] is in the range from 100:1 to 1:1, in particular in the range from 50:1 to 1.05:1, preferably in the range from 40:1 to 1.1:1, preferably in the range from 30:1 to 1.5:1, particularly preferably in the range from 20:1 to 2:1, very particularly preferably in the range from 10:1 to 3:1.

7. The unit according to any one of the preceding claims,
wherein the carrier (2) is loaded and/or equipped and/or provided with a plurality of discrete adsorber particles (5), wherein the adsorber particles (5) are permanently bonded to the carrier (2), in particular by means of adhesive and/or are glued to the carrier (2), wherein the bonding and/or gluing occurs or is effected by the adhesive layer (3) applied to the carrier (2); and/or
wherein the adsorber particles (5) are arranged on and/or in the adhesive layer (3) and/or are at least partially embedded and/or integrated in the adhesive layer (3); and/or
wherein the adsorber particles (5) are granular and/or spherical, in particular spherical; and/or
wherein the adsorber particles (5) have a particle size, in particular a particle diameter, in the range from 0.005 mm to 2.5 mm, preferably 0.01 mm to 2 mm, preferably 0.015 mm to 0.5 mm, particularly preferably 0.02 mm to 0.3 mm, very particularly preferably 0.03 mm to 0.15 mm, in particular wherein at least 80%, in particular at least 90%, preferably at least 95% of the adsorber particles (5), in relation to the total number of adsorber particles (5), have particle sizes, in particular particle diameters, in the aforementioned ranges, and/or
wherein the adsorber particles (5) have a mean particle size (D50), in particular a mean particle diameter (D50), in the range from 0.005 mm to 2.5 mm, preferably 0.01 mm to 2 mm, preferably 0.015 mm to 0.5 mm, particularly preferably 0.02 mm to 0.3 mm, very particularly preferably 0.03 mm to 0.15 mm; and/or
wherein the adsorber particles (5) have a mean particle size (D50), in particular a mean particle diameter (D50), in the range from 0.005 mm to 1 mm, in particular in the range from 0.01 mm to 0.5 mm, preferably in the range from 0.02 mm to 0.1 mm, in particular wherein the adsorber particles (5) are at least partially embedded and/or integrated in the adhesive layer (3); and/or
wherein the adsorber particles (5) have a mean particle size (D50), in particular a mean particle diameter (D50), in the range from 0.01 mm to 2.5 mm, in particular in the range from 0.02 mm to 2.0 mm, preferably in the range from 0.03 mm to 1.0 mm, preferably in the range from 0.03 mm to 0.5 mm, in particular wherein the adsorber particles (5) are arranged on the adhesive layer (3); and/or
wherein the adsorber particles (5) are applied in an amount in the range from 5 g/m² to 150 g/m², in particular 10 g/m² to 100 g/m², preferably 15 g/m² to 75 g/m², preferably 20 g/m² to 50 g/m², and/or wherein the unit (1) comprises the adsorber particles (5) in an amount in the range from 5 g/m² to 150 g/m², in particular 10 g/m² to 100 g/m², preferably 15 g/m² to 75 g/m², preferably 20 g/m² to 50 g/m²; and/or
wherein the adsorber particles (5) are attached and/or arranged on and/or in the adhesive layer (3), in particular in a random and/or stochastic arrangement and/or in a stochastic-homogeneous arrangement, and/or at least partially are embedded and/or integrated in the adhesive layer (3), in particular in a random and/or stochastic arrangement and/or stochastic-homogeneous arrangement; and/or
wherein the adsorber particles (5) are at least substantially completely or at least partially arranged and/or provided on the adhesive layer (3) and/or wherein at least 50%, in particular at least 70%, preferably at least 90%, preferably at least 95% of the adsorber particles (5), in relation to the total number of adsorber particles (5), are arranged and/or are provided on the adhesive layer (3); and/or
wherein the adsorber particles (5) are at least substantially completely or at least partially arranged in the adhesive layer (3), in particular are embedded and/or integrated in the adhesive layer (3) and/or wherein at least 50%, in particular at least 70%, preferably at least 90%, preferably at least 95% of the adsorber particles (5), in relation to the total number of adsorber particles (5), are arranged in the adhesive layer (3), in particular are embedded and/or integrated in the adhesive layer (3); and/or
wherein the adsorber particles (5) are arranged and/or incorporated and/or present in a thickness section with a thickness of at least 5%, in particular at least 10%, preferably at least 30%, preferably at least 50%, particularly preferably at least 70%, very particularly preferably at least 90%, in relation to the total thickness of the adhesive layer (3), in the adhesive layer (3), in particular embedded and/or integrated into the adhesive layer (3), in particular wherein the thickness section comprising the adsorber particles (5) is arranged on the side of the adhesive layer (3) facing away from the carrier (2); and/or wherein the adsorber particles (5) are arranged and/or present in the adhesive layer (3) at least substantially in the entire thickness of the adhesive layer (3), in particular are embedded and/or integrated into the adhesive layer (3); and/or
wherein the adsorber particles (5) arranged and/or provided on the adhesive layer (3) have a larger mean particle size (D50), in particular a larger mean particle diameter (D50), than the adsorber particles (5) arranged and/or present at least substantially completely or at least partially in the adhesive layer (3); and/or
wherein the ratio of the mean particle size (D50), in particular the mean particle diameter (D50), of the adsorber particles (5) arranged and/or provided at least substantially completely or at least partially on the adhesive layer (3), to the mean particle size (D50), in particular the mean particle diameter (D50), of the adsorber particles (5) arranged and/or present at least substantially completely or at least partially in the adhesive layer (3), in particular integrated and/or introduced into the adhesive layer (3), on the other hand [particle size (D50), in particular mean particle diameter (D50), of the deposited adsorber particles (5): particle size (D50), in particular mean particle diameter (D50), of the embedded adsorber particles (5)] is in the range from 100:1 to 1:1, in particular in the range from 50:1 to 1.05:1, preferably in the range from 40:1 to 1.1:1, preferably in the range from 30:1 to 1.5:1, particularly preferably in the range from 20:1 to 2:1, very particularly preferably in the range from 10:1 to 3:1; and/or
wherein the adsorber particles (5) arranged and/or provided on the adhesive layer (3) have a larger mean particle size (D50), in particular a larger mean particle diameter (D50), than the catalytic and/or reactive particles (4) arranged and/or present at least substantially completely or at least partially in the adhesive layer (3); and/or
wherein the ratio of the mean particle size (D50), in particular the mean particle diameter (D50), of the adsorber particles (5) arranged and/or provided at least substantially completely or at least partially on the adhesive layer (3), to the mean particle size (D50), in particular the mean particle diameter (D50), of the catalytic and/or reactive particles (4) arranged and/or present at least substantially completely or at least partially in the adhesive layer (3), in particular integrated and/or introduced into the adhesive layer (3), on the other hand [particle size (D50), in particular mean particle diameter (D50), of the deposited adsorber particles (5): particle size (D50), in particular mean particle diameter (D50), of the embedded catalytic and/or reactive particles (4)] is in the range from 100:1 to 1:1, in particular in the range from 50:1 to 1.05:1, preferably in the range from 40:1 to 1.1:1, preferably in the range from 30:1 to 1.5:1, particularly preferably in the range from 20:1 to 2:1, very particularly preferably in the range from 10:1 to 3:1.

8. The unit according to any one of the preceding claims,
wherein the catalytic and/or reactive particles (4) are at least substantially completely or at least partially arranged in the adhesive layer (3), in particular are embedded and/or integrated in the adhesive layer (3) and/or wherein at least 50%, in particular at least 70%, preferably at least 90%, preferably at least 95% of the catalytic and/or reactive particles (4), in relation to the total number of catalytic and/or reactive particles (4), are arranged in the adhesive layer (3), in particular are embedded and/or integrated into the adhesive layer (3); and
wherein the adsorber particles (5) are at least substantially completely or at least partially arranged and/or provided on the adhesive layer (3) and/or wherein at least 50%, in particular at least 70%, preferably at least 90%, preferably at least 95% of the adsorber particles (5), in relation to the total number of adsorber particles (5), are arranged and/or are provided on the adhesive layer (3);
in particular wherein the adsorber particles (5) have a larger particle size, in particular a larger particle diameter, and/or a larger mean particle size (D50), in particular a larger mean particle diameter (D50), than the catalytic and/or reactive particles (4), in particular wherein the particle size, in particular the particle diameter, and/or the mean particle size (D50), in particular the mean particle diameter (D50), of the adsorber particles (5) is larger by at least 10%, in particular at least 25%, preferably at least 50% than the corresponding size of the catalytic and/or reactive particles (4), in relation to the corresponding size of the catalytic and/or reactive particles (4); and/or
in particular wherein the adsorber particles (5) are arranged on the side of the adhesive layer (3) facing away from the carrier (2).

9. The unit according to any one of the preceding claims,
wherein the adsorber particles (5) are formed and/or consist of particulate activated carbon, preferably in the form of activated carbon particles in granular form ("granular activated carbon") or spherical form ("spherical activated carbon"); and/or
wherein the adsorber particles (5) are applied in an amount in the range from 5 g/m² to 350 g/m², in particular 10 g/m² to 200 g/m², preferably 15 g/m² to 100 g/m², preferably 20 g/m² to 40 g/m², and/or wherein the unit (1) comprises the adsorber particles (5) in an amount in the range from 5 g/m² to 350 g/m², in particular 10 g/m² to 200 g/m², preferably 15 g/m² to 100 g/m², preferably 20 g/m² to 40 g/m².

10. The unit according to any one of the preceding claims,
wherein the broken adhesive polymer foam of the adhesive layer (3) has a plurality of dried and/or cured, in particular crosslinked, destroyed and/or burst and/or collapsed foam bubbles; and/or
wherein the broken adhesive polymer foam, in particular the dried and/or cured, in particular crosslinked, destroyed and/or burst and/or collapsed broken adhesive foam bubbles of the broken adhesive foam has/have a plurality of destroyed and/or broken and/or collapsed walls and/or webs of adhesive polymer; and/or
wherein the broken adhesive polymer foam has a proportion of destroyed and/or burst and/or collapsed foam bubbles of at least 10%, in particular at least 30%, preferably at least 50%, more preferably at least 70%, particularly preferably at least 90% and very particularly preferably at least 95%, in relation to the total number of foam bubbles in the broken adhesive polymer foam; and/or
wherein the broken adhesive polymer foam has a proportion of destroyed and/or burst and/or collapsed foam bubbles in the range from 10% to 100%, in particular in the range from 30% to 99.9%, preferably in the range from 50% to 99%, preferably in the range from 70% to 99%, particularly preferably in the range from 90% to 98%, based on the total number of foam bubbles in the broken adhesive polymer foam; and/or
wherein the broken adhesive polymer foam is not closed and/or wherein the broken adhesive polymer foam has a plurality of apertures, pores, channels and/or openings in particular extending in the broken adhesive polymer foam and/or a plurality of apertures, pores, channels and/or openings in particular connecting the respective outer surfaces of the broken adhesive polymer foam and/or of the adhesive layer (3); and/or
wherein the broken adhesive polymer foam is contiguous and/or coherent; and/or
wherein the broken adhesive polymer foam is applied to the carrier (2) substantially over the entire area and/or the whole side; and/or
wherein the broken adhesive polymer foam, compared to a corresponding non-foamed and/or continuously formed adhesive polymer, has a density and/or volume weight, in particular per unit area, reduced by at least 5%, in particular at least 10%, preferably at least 15%, preferably at least 20%, particularly preferably at least 25% in relation to the non-foamed and/or continuously formed adhesive polymer, and/or
wherein the broken adhesive polymer foam, in comparison to a corresponding non-foamed and/or continuously formed adhesive polymer, preferably in the range from 5% to 80%, in particular in the range from 10% to 70%, preferably in the range from 15% to 60% in the range from 20% to 55%, has a reduced density and/or reduced, in particular area-based, volume weight, based on the non-foamed and/or continuously formed adhesive polymer; and/or
wherein the broken adhesive polymer foam, compared to a corresponding intact and/or unbroken adhesive polymer foam, has an increased density and/or increased, in particular area-related volume weight, based on the intact and/or unbroken adhesive polymer foam, of at most 10%, in particular at most 5%, preferably at most 1%; and/or
wherein the broken adhesive polymer foam has a reduced elasticity and/or reversible extensibility, in relation to the intact and/or unbroken adhesive polymer foam, of at most 30%, in particular at most 20%, preferably at most 10%, preferably at most 5%, compared to a corresponding intact and/or unbroken adhesive polymer foam; and/or
wherein the broken adhesive polymer foam, in comparison to a corresponding intact and/or unbroken adhesive polymer foam, has a reduced elasticity and/or reversible extensibility in the range from 5% to 30%, in particular in the range from 10% to 20%, in relation to the intact and/or unbroken adhesive polymer foam; and/or
wherein the adhesive layer (3) is applied and/or is provided on the textile carrier (2) in an amount in the range from 5 g/m² to 60 g/m², in particular in the range from 10 g/m² to 50 g/m², preferably in the range from 20 g/m² to 40 g/m², preferably in the range from 25 g/m² to 35 g/m² and/or wherein the adhesive layer (3) has a weight per unit area in the range from 5 g/m² to 60 g/m², preferably in the range from 10 g/m² to 50 g/m², preferably in the range from 20 g/m² to 40 g/m², preferably in the range from 25 g/m² to 35 g/m²; and/or
wherein the catalytic and/or reactive particles (4) and/or the adsorber particles (5), independently of one another, are attached and/or fixed on the broken adhesive polymer foam of the adhesive layer (3), in particular on the destroyed and/or broken and/or collapsed walls and/or webs of the destroyed and/or burst and/or collapsed foam bubbles of the broken adhesive foam.

11. The unit according to any one of the preceding claims,
wherein the broken adhesive polymer foam is obtainable by drying and/or curing, in particular crosslinking, a foamed, preferably foamed under mechanical energy input, aqueous or organically based, preferably aqueous-based, solution and/or dispersion of the adhesive polymer, in particular accompanied by at least partial refraction of the foam provided by the foamed solution and/or dispersion of the adhesive polymer,
in particular wherein the drying and/or curing, in particular crosslinking, is carried out in the presence of at least one foaming agent and optionally at least one foam stabiliser and optionally at least one crosslinking agent and optionally at least one emulsifier and optionally at least one thickener; and/or
wherein the adhesive polymer is selected from the group of polyacrylate (PA), polymethacrylate (PMA), polymethyl methacrylate (PMMA), polycarbonate (PC), polyurethane (PU) and silicones; preferably polyacrylate (PA) and polyurethane (PU); as well as mixtures or combinations of at least two of the aforementioned compounds, preferably polyurethane (PU), and/or wherein the adhesive polymer is a polyacrylate (PA) and/or polyurethane (PU) and/or wherein the adhesive polymer is a *high solid* adhesive.

12. A method for producing a catalytic and/or reactive unit (1), in particular as defined in any one of claims 1 to 11, in the form of a protective material having catalytic and/or reactive properties, in particular with the function of protecting against chemical and/or biological harmful and/or poisonous substances, preferably for the production of, in particular, a textile catalytic and/or reactive protective filter material,
wherein an in particular air-permeable carrier (2), in particular in the form of a textile carrier, is equipped with a plurality of discrete catalytic and/or reactive particles (4),
wherein the catalytic and/or reactive particles (4) comprise at least one catalytic and/or reactive component, or consist thereof, wherein said catalytic and/or reactive component comprises an MOF (*Metal Organic Framework*) material or consists thereof,
wherein the catalytic and/or reactive particles (4) are permanently bonded to the carrier (2) by means of gluing and/or are glued to the carrier (2), wherein the adhesive layer (3) is designed as an air-permeable and/or discontinuous layer based on a dried and cured broken adhesive polymer foam, and
wherein the unit (1) is also equipped with a plurality of discrete adsorber particles (5).

13. A use of a catalytic and/or reactive unit, as defined in any one of claims 1 to 11,
in the manufacture of protective equipment and/or protective articles of any kind, in particular protective clothing, in particular for the civilian or military sector, such as protective suits, protective gloves, protective footwear, protective socks, protective headwear and the like, and of protective coverings of any kind, preferably any aforementioned protective materials for ABC usage and/or having a protective function with respect to radioactive harmful and/or poisonous substances and/or with respect to biological harmful and/or poisonous substances and/or with respect to chemical harmful and/or poisonous substances; and/or
in the manufacture of filters and filtering materials of any kind, in particular for removal of harmful, odorous and poisonous substances of any kind, preferably for removal of radioactive harmful and/or poisonous substances and/or of biological harmful and/or poisonous substances and/or of chemical harmful and/or poisonous substances, in particular from air and/or gas streams, such as ABC protective mask filters, odour filters, surface filters, air filters, in particular filters for indoor air cleaning, adsorption-capable carrier structures and filters for the medical sector.

14. Protective equipment and/or protective objects of all kinds, in particular for the civil or military sector, in particular protective clothing, such as protective suits, protective gloves, protective footwear, protective socks, protective headwear and the like, as well as protective covers, preferably all of the aforementioned protective equipment and/or protective objects for CBRN use and/or with a protective function against radioactive harmful and/or poisonous substances and/or against biological harmful and/or poisonous substances and/or against chemical harmful and/or poisonous substances, produced using a catalytic and/or reactive unit, as defined in any one of the claims 1 to 11, and/or comprising a catalytic and/or reactive unit as defined in any one of claims 1 to 11.

15. Filter and filtering materials of all types, in particular for removing harmful, odorous and poisonous substances of all types, preferably for removing radioactive harmful and/or poisonous substances and/or biological harmful and/or poisonous substances and/or chemical harmful and/or poisonous substances, in particular from air and/or gas streams, such as protective mask filters, odour filters, surface filters, air filters, in particular filters for room air purification, adsorption-capable carrier structures and filters for the medical field, produced using a catalytic and/or reactive unit, as defined in any one of claims 1 to 11, and/or comprising a catalytic and/or reactive unit as defined in any one of claims 1 to 11.

## Revendications

1. Unité catalytique et/ou réactive (1) sous forme d'une matière de protection aux propriétés catalytiques et/ou réactives, notamment à fonction protectrice contre les substances nocives et/ou toxiques chimiques et/ou biologiques,
dans laquelle l'unité (1) comprend un support (2), notamment perméable à l'air, notamment sous forme de support textile, le support (2) étant équipé d'un grand nombre de particules catalytiques et/ou réactives discrètes (4),
dans laquelle lesdites particules catalytiques et/ou réactives (4) comprennent au moins un composant catalytique et/ou réactif ou consistent en celui-ci, dans laquelle ledit composant catalytique et/ou réactif comprend un matériau MOF *(Metal Organic Framework)* ou consiste en celui-ci,
dans laquelle les particules catalytiques et/ou réactives (4) sont reliées durablement au support (2) au moyen d'un collage et/ou sont collées au support (2), la liaison et/ou le collage étant obtenus par une couche adhésive (3) appliquée sur le support (2), la couche adhésive (3) étant conçue comme une couche perméable à l'air et/ou discontinue à base d'une mousse polymère adhésive rompue séchée et durcie et
dans laquelle les particules catalytiques et/ou réactives (4) sont utilisées conjointement et/ou ensemble avec un grand nombre de particules de charbon actif en tant que particules d'adsorbeur discrètes (5).

2. Unité selon la revendication 1,
dans laquelle le composant catalytique et/ou réactif est utilisé en masse et/ou sous forme pure et/ou sans composant support et/ou en tant que tel ; et/ou dans laquelle les particules catalytiques et/ou réactives (4) sont constituées et/ou sont formées du composant catalytique et/ou réactif en masse et/ou sous forme pure et/ou sans composant support et/ou en tant que tel.

3. Unité selon la revendication 1 ou 2,
dans laquelle les particules catalytiques et/ou réactives (4) présentent ou sont constituées du composant catalytique et/ou réactif conjointement avec un composant support ;
en particulier dans laquelle le composant support comprend ou consiste en au moins un liant inorganique, organique ou inorganique-organique et/ou un composant support qui présente notamment des cavités poreuses et/ou internes ; et/ou
en particulier dans laquelle le composant catalytique et/ou réactif est notamment fixé chimiquement et/ou physiquement sur et/ou incorporé dans le composant support et/ou dans laquelle le composant support est dopé et/ou imprégné du composant catalytique et/ou réactif ; et/ou
en particulier dans laquelle les particules catalytiques et/ou réactives (4) contiennent le composant catalytique et/ou réactif, en particulier le composant métallique catalytique et/ou réactif en des quantités dans la plage de 0,001 % en poids à 100 % en poids, en particulier dans la plage de 0,005 % en poids à 99,5 % en poids, de préférence dans la plage de 0,01 % en poids à 95 % en poids, préférablement dans la plage de 0,05 % en poids à 90 % en poids, de manière particulièrement préférée dans la plage de 0,1 % en poids à 80 % en poids, de manière tout particulièrement préférée dans la plage de 0,25 % en poids à 50 % en poids, de préférence encore dans la plage de 0,5 % en poids à 30 % en poids, encore plus préférablement dans la plage de 1 % en poids à 20 % en poids, encore plus préférentiellement dans la plage de 2 % en poids à 10 % en poids, par rapport aux particules catalytiques et/ou réactives (4).

4. Unité selon l'une quelconque des revendications précédentes,
dans laquelle le matériau MOF *(Metal Organic Framework)* présente des unités structurales répétitives sur la base d'au moins un métal respectivement, en particulier un atome métallique ou un ion métallique, en particulier tel que défini ci-dessus d'une part et d'au moins un ligand organique au moins bidentate (bidenté) et/ou de pontage, en particulier comme défini ci-dessous, d'autre part ; et/ou
dans laquelle le matériau MOF *(Metal Organic Framework)* présente au moins un métal, en particulier un atome métallique ou un ion métallique, en particulier tel que défini ci-dessus, en particulier dans laquelle le métal est choisi parmi les éléments des groupes 1 à 14 de la classification périodique des éléments, en particulier des éléments des groupes 4, 8 et 11 à 13 du tableau périodique des éléments et/ou en particulier dans laquelle le métal est choisi dans le groupe composé de Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb et Bi, en particulier dans le groupe composé de Ti, Zn, Cu, Zr, Ni, Pd, Pt, Ru, Th, Fe, Mn, Ag, Al et Co, de préférence dans le groupe composé de Ti, Cu, Zr, Fe, Co, Zn, Mn, Al et Ag, préférablement dans le groupe composé de Cu, Fe, Al et Zn ; et/ou
dans laquelle le matériau MOF *(Metal Organic Framework)* présente au moins un ligand organique au moins bidentate (bidenté) et/ou de pontage, dans laquelle le ligand présente au moins un groupe fonctionnel qui est capable de former au moins deux liaison de coordination avec un métal, en particulier un atome métallique ou un ion métallique, en particulier tel que défini précédemment et/ou de former une liaison de coordination respectivement avec deux ou plusieurs métaux, notamment des atomes métalliques ou des ions métalliques, notamment tels que définis précédemment, identiques ou différents, en particulier dans laquelle le groupe fonctionnel du ligand a au moins un hétéroatome, de préférence dans le groupe des N, O, S, B, P, Si et Al, de manière particulièrement préférée N, O et S, en particulier dans laquelle le ligand est choisi parmi au moins les acides organiques dibasiques, en particulier les acides dicarboxyliques, les acides tricarboxyliques, les acides tétracarboxyliques et leurs mélanges, de manière particulièrement préférée des acides di-, tri-ou tétracarboxyliques aromatiques à un, deux, trois, quatre noyaux ou plus, le cas échéant au moins une fois substitués, dans laquelle chaque noyau peut contenir au moins un hétéroatome, identique ou différent, tel que notamment N, O, S, B, P , Si et/ou Al, de préférence N, S et/ou O ; et/ou
dans laquelle le matériau MOF *(Metal Organic Framework) est* muni, en particulier dopé, d'au moins un autre métal choisi dans le groupe des métaux précieux, en particulier choisi dans le groupe de Rt, Rh, Pt, Ag, Au et leurs combinaisons, en particulier dans laquelle la quantité de l'autre métal est comprise dans la plage de 0,01 % en poids à 15 % en poids, en particulier dans la plage de 0,05 % en poids à 10 % en poids, de préférence dans la plage de 0,1 % en poids à 8 % en poids, sur la base du matériau d'armature inorganique, organique ou inorganique-organique contenant du métal ; et/ou
dans laquelle le matériau MOF *(Metal Organic Framework)* est sous forme cristalline, en particulier dans laquelle le degré de cristallinité se situe à au moins 60 %, en particulier au moins 70 %, de préférence au moins 80 %, de manière particulièrement préférée au moins 90 %, de manière particulièrement préférée au moins 95 %, de manière tout particulièrement préférée au moins 99 % ou plus ; et/ou
dans laquelle le matériau MOF *(Metal Organic Framework)* est présent sous une forme activée, de préférence au moyen d'un traitement thermique, en particulier à des températures dans la plage de 90 °C à 300 °C, de préférence 100 °C à 250 °C, préférablement 110 °C à 220 °C ; et/ou
dans laquelle les particules catalytiques et/ou réactives (4) sont composées du matériau MOF *(Metal Organic Framework)* ; et/ou
dans laquelle les particules catalytiques et/ou réactives (4) sont formées sur la base du matériau MOF *(Metal Organic Framework),* en particulier comprennent le matériau MOF *(Metal Organic Framework)* ou se composent de celui-ci, en particulier, consistent en celui-ci ; et/ou
dans laquelle les particules catalytiques et/ou réactives (4) contiennent le matériau MOF *(Metal Organic Framework)* en masse et/ou sous une forme pure et/ou sans composant support et/ou en tant que tel, ou consistent en celui-ci, en particulier consistent en celui-ci ; et/ou dans laquelle les particules catalytiques et/ou réactives (4) consistent en le matériau MOF *(Metal Organic Framework)* en masse et/ou sous une forme pure et/ou sans composant de support et/ou en tant que tel et/ou sont formées à partir de celui-ci ; et/ou
dans laquelle le matériau MOF *(Metal Organic Framework)* est présent dans un composant support, en particulier dans un liant inorganique, organique ou inorganique-organique et/ou dans une forme intégrée à un composant support présentant des cavités en particulier poreuses et/ou internes ; et/ou
dans laquelle les particules catalytiques et/ou réactives (4) contiennent le matériau MOF *(Metal Organic Framework)* d'une part et le composant support, d'autre part, dans un rapport quantitatif matériau d'armature/composant support, en particulier un rapport pondéral matériau d'armature/composant support, situé dans la plage de 1: 0,5 à 15: 1, en particulier dans la plage de 1: 1 à 10: 1, de préférence dans la plage de 1,2: 1 à 3: 1, de manière particulièrement préférée dans la plage de 1,4: 1 à 2,5: 1, et en particulier supérieur à 1 (> 1, c'est-à-dire à l'exclusion de 1) ; et/ou
dans laquelle le composant de support comprend au moins un liant organique, en particulier un polymère organique, ou consiste en celui-ci, en particulier dans laquelle le liant organique est choisi dans le groupe des polyesters, polystyrènes, poly(méth)acrylates, polyacrylates, celluloses, polyamides, polyoléfines, poly(oxydes d'alkylène) et leurs combinaisons et mélanges.

5. Unité selon l'une quelconque des revendications précédentes,
dans laquelle le matériau MOF *(Metal Organic Framework)* présente au moins un métal,
en particulier un atome métallique ou un ion métallique, en particulier tel que défini ci-dessus, en particulier dans laquelle le métal est choisi parmi les éléments des groupes 1 à 14 de la classification périodique des éléments, en particulier des éléments des groupes 4, 8 et 11 à 13 du tableau périodique des éléments et/ou en particulier dans laquelle le métal est choisi dans le groupe composé de Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb et Bi, en particulier dans le groupe composé de Ti, Zn, Cu, Zr, Ni, Pd, Pt, Ru, Th, Fe, Mn, Ag, Al et Co, de préférence dans le groupe composé de Ti, Cu, Zr, Fe, Co, Zn, Mn, Al et Ag, préférablement dans le groupe composé de Cu, Fe, Al et Zn ; et/ou
dans laquelle le matériau MOF *(Metal Organic Framework)* est muni, en particulier dopé, d'au moins un autre métal choisi dans le groupe des métaux précieux, en particulier choisi dans le groupe de Rt, Rh, Pt, Ag, Au et leurs combinaisons ; et/ou
dans laquelle les particules catalytiques et/ou réactives (4) contiennent le matériau MOF (*Metal Organic Framework*) en masse et/ou sous une forme pure et/ou sans composant support et/ou en tant que tel, ou consistent en celui-ci, en particulier consistent en celui-ci ; et/ou dans laquelle les particules catalytiques et/ou réactives (4) consistent en le matériau MOF *(Metal Organic Framework)* en masse et/ou sous une forme pure et/ou sans composant support et/ou en tant que tel et/ou sont formées à partir de celui-ci ; et/ou
dans laquelle les particules catalytiques et/ou réactives (4) sont au moins sensiblement complètement ou au moins partiellement disposées dans la couche adhésive (3) et/ou incorporées et/ou intégrées dans la couche adhésive (3) ; et/ou
dans laquelle les particules catalytiques et/ou réactives (4) d'une part et la couche adhésive (3) d'autre part sont utilisées en un rapport quantitatif particules/couche adhésive, en particulier un rapport de poids surfacique particules/couche adhésive, en particulier dans la plage de 10: 1 à 1: 5, de préférence dans la plage de 5: 1 à 1: 2, préférablement dans la plage de 2: 1 à 1: 1, et/ou sont utilisées en particulier en un rapport supérieur à 1 (> 1, c'est-à-dire à l'exclusion de 1) ; et/ou
dans laquelle les particules d'adsorbeur (5) sont au moins sensiblement complètement ou au moins partiellement disposées sur la couche adhésive (3) et/ou en particulier dans laquelle le rapport de la taille moyenne des particules (D50), en particulier le diamètre moyen des particules (D50), des particules d'adsorbeur (5) disposées et/ou présentes au moins sensiblement complètement ou au moins partiellement sur la couche d'adhésif (3) d'une part à la taille moyenne de particules (D50), en particulier le diamètre moyen des particules (D50), des particules catalytiques et/ou réactives (4) disposées et/ou présentes au moins sensiblement totalement ou au moins partiellement dans la couche adhésive (3), en particulier intégrées et/ou incorporées dans la couche adhésive (3) d'autre part [taille des particules (D50), en particulier diamètre moyen des particules (D50), des particules d'adsorbeur supportées (5): taille des particules (D50), en particulier diamètre moyen des particules (D50), des particules catalytiques et/ou réactives incorporées (4)] dans la plage de 100: 1 à 1: 1, en particulier dans la plage de 50: 1 à 1,05: 1, de préférence dans la plage de 40: 1 à 1,1: 1, préférablement dans la plage de 30: 1 à 1,5: 1, de manière particulièrement préférée dans la plage de 20: 1 à 2: 1, de manière tout particulièrement préférée dans la plage de 10: 1 à 3: 1.

6. Unité selon l'une quelconque des revendications précédentes,
dans laquelle les particules catalytiques et/ou réactives (4) sont conçues granulaires et/ou sphériques, en particulier sphériques ; et/ou
dans laquelle les particules catalytiques et/ou réactives (4) ont une taille des particules, en particulier un diamètre de particule, dans la plage de 0,0001 mm à 2,5 mm, en particulier dans la plage de 0,0005 mm à 2 mm, de préférence dans la plage de 0,001 mm à 1,5 mm, préférablement dans la plage de 0,003 mm à 1 mm, de manière particulièrement préférée dans la plage de 0,005 mm à 0,8 mm, de manière tout particulièrement préférée dans la plage de 0,01 mm à 0,5 mm, en particulier dans laquelle au moins 80 %, en particulier au moins 90 %, de préférence au moins 95 % des particules catalytiques et/ou réactives (4), sur la base du nombre total des particules catalytiques et/ou réactives (4), ont des tailles de particules, en particulier des diamètres de particules, dans les plages susmentionnées et/ou
dans laquelle les particules catalytiques et/ou réactives (4) présentent une taille moyenne de particules (D50), en particulier un diamètre moyen de particules (D50), dans la plage de 0,0001 mm à 2,5 mm, en particulier dans la plage de 0,0005 mm à 2 mm, de préférence dans la plage de 0,001 mm à 1,5 mm, préférablement dans la plage de 0,003 mm à 1 mm, de manière particulièrement préférée dans la plage de 0,005 mm à 0,8 mm, de manière tout particulièrement préférée dans la plage de 0,01 mm à 0,5 mm ; et/ou
dans laquelle les particules catalytiques et/ou réactives (4) présentent une taille moyenne de particules (D50), en particulier un diamètre moyen de particules (D50), dans la plage de 0,0001 mm à 1 mm, en particulier dans la plage de 0,0005 mm à 0,5 mm, de préférence dans la plage de 0,001 mm à 0,1 mm, en particulier dans laquelle les particules catalytiques et/ou réactives (4) sont au moins partiellement incorporées et/ou intégrées dans la couche adhésive (3) ; et/ou
dans laquelle les particules catalytiques et/ou réactives (4) présentent une taille moyenne de particules (D50), en particulier un diamètre moyen de particules (D50), dans la plage de 0,001 mm à 2,5 mm, en particulier dans la plage de 0,002 mm à 2 mm, de préférence dans la plage de 0,003 mm à 1 mm, préférablement dans la plage de 0,005 mm à 0,5 mm, en particulier dans laquelle les particules catalytiques et/ou réactives (4) sont disposées sur la couche adhésive (3) ; et/ou ;
dans laquelle les particules catalytiques et/ou réactives (4) sont utilisées en une quantité dans la plage de 5 g/m² à 150 g/m², en particulier de 10 g/m² à 100 g/m², de préférence de 15 g/m² à 75 g/m², préférablement de 20 g/m² à 50 g/m², et/ou dans laquelle l'unité (1) contient les particules catalytiques et/ou réactives (4) en une quantité dans la plage de 5 g/m² à 150 g/m², en particulier 10 g/m² à 100 g/m², de préférence 15 g/m² à 75 g/m², préférablement de 20 g/m² à 50 g/m² ; et/ou
dans laquelle les particules catalytiques et/ou réactives (4) sont appliquées et/ou disposées sur et/ou dans la couche adhésive (3), en particulier dans un agencement aléatoire et/ou stochastique et/ou dans un agencement stochastique-homogène et/ou sont incorporées et/ou intégrées au moins partiellement dans la couche adhésive (3), en particulier dans un agencement aléatoire et/ou stochastique et/ou un agencement stochastique-homogène ; et/ou
dans laquelle les particules catalytiques et/ou réactives (4) sont au moins sensiblement complètement ou au moins partiellement disposées sur et/ou présentes dans la couche adhésive (3) et/ou dans laquelle au moins 50 %, en particulier au moins 70 %, de préférence au moins 90 %, préférablement au moins 95 % des particules catalytiques et/ou réactives (4), sur la base du nombre total de particules catalytiques et/ou réactives (4), sont disposés et/ou sont présents sur la couche adhésive (3) ; et/ou
dans laquelle les particules catalytiques et/ou réactives (4) sont au moins sensiblement complètement ou au moins partiellement disposées et/ou présentes dans la couche adhésive (3), en particulier sont incorporées et/ou intégrées dans la couche adhésive (3), et/ou dans laquelle au moins 50 %, en particulier au moins 70 %, de préférence au moins 90 %, préférablement au moins 95 %, des particules catalytiques et/ou réactives (4), sur la base du nombre total de particules catalytiques et/ou réactives (4), sont disposés et/ou sont présents dans la couche adhésive (3), en particulier incorporés et/ou intégrés dans la couche adhésive (3) ; et/ou
dans laquelle les particules catalytiques et/ou réactives (4) sont disposées et/ou incorporées et/ou présentes dans la couche adhésive (3) dans une partie de l'épaisseur ayant une épaisseur d'au moins 5 %, en particulier au moins 10 %, de préférence au moins 30 %, préférablement au moins 50 %, de manière particulièrement préférée au moins 70 %, de manière tout particulièrement préférée au moins 90 %, sur base de l'épaisseur totale de la couche adhésive (3), en particulier elles sont incorporées et/ou intégrées dans la couche adhésive (3), en particulier dans laquelle la partie de l'épaisseur comportant les particules catalytiques et/ou réactives (4) est disposée sur le côté de la couche adhésive (3) opposé au support (2) ; et/ou dans laquelle les particules catalytiques et/ou réactives (4) sont disposées et/ou sont présentes dans la couche adhésive (3) au moins sensiblement sur toute l'épaisseur de la couche adhésive (3), en particulier incorporées et/ou intégrées dans la couche adhésive (3) ; et/ou
dans laquelle les particules catalytiques et/ou réactives (4) disposées et/ou présentes sur la couche adhésive (3) ont une taille moyenne de particule (D50) supérieure, en particulier un diamètre moyen de particule (D50) supérieur, à celui des particules catalytiques et/ou réactives (4) au moins essentiellement complètement ou au moins partiellement disposées et/ou présentes dans la couche adhésive (3) ; et/ou
le rapport de la taille moyenne des particules (D50), en particulier du diamètre moyen des particules (D50), des particules catalytiques et/ou réactives (4) qui sont au moins sensiblement complètement ou au moins partiellement disposées et/ou présentes sur la couche adhésive (3) d'une part à la taille moyenne des particules (D50), en particulier le diamètre moyen des particules (D50), des particules catalytiques et/ou réactives (4) qui sont au moins sensiblement complètement ou au moins partiellement disposées et/ou présentes dans la couche adhésive (3), en particulier intégrées et/ou incorporées dans la couche adhésive (3) d'autre part [taille des particules (D50), en particulier diamètre moyen des particules (D50), des particules catalytiques et/ou réactives (4) supportées: taille des particules (D50), en particulier diamètre moyen des particules (D50), des particules catalytiques et/ou réactives incorporées (4)] dans la plage de 100: 1 à 1: 1, en particulier dans la plage de 50: 1 à 1,05: 1, de préférence dans la plage de 40: 1 à 1, 1: 1, préférablement dans la plage de 30: 1 à 1,5: 1, de manière particulièrement préférée dans la plage de 20: 1 à 2: 1, de manière tout particulièrement préférée dans la plage de 10: 1 à 3: 1.

7. Unité selon l'une quelconque des revendications précédentes,
dans laquelle le support (2) est muni et/ou équipé et/ou pourvu d'un grand nombre de particules d'adsorbeur discrètes (5), les particules d'adsorbeur (5) étant reliées durablement au support (2), en particulier par collage et/ou sont collées sur le support (2), la liaison et/ou le collage étant effectués et/ou obtenus par la couche adhésive (3) appliquée sur le support (2) ; et/ou
dans laquelle les particules d'adsorbeur (5) sont disposées sur et/ou dans la couche adhésive (3) et/ou sont au moins partiellement incorporées et/ou intégrées dans la couche adhésive (3) ; et/ou
dans laquelle les particules d'adsorbeur (5) sont conçues granulaires et/ou sphériques, en particulier sphériques ; et/ou
dans laquelle les particules d'adsorbeur (5) présentent une taille des particules, en particulier un diamètre de particule, dans la plage de 0,005 mm à 2,5 mm, de préférence de 0,01 mm à 2 mm, préférablement de 0,015 mm à 0,5 mm, de manière particulièrement préférée de 0,02 mm à 0,3 mm, de manière tout particulièrement préférée de 0,03 mm à 0,15 mm, en particulier dans laquelle au moins 80 %, en particulier au moins 90 %, de préférence au moins 95 % des particules d'adsorbeur (5), par rapport au nombre total de particules d'adsorbeur (5), ont des tailles de particules, en particulier un diamètre des particules, dans les plages précitées et/ou
dans laquelle les particules d'adsorbeur (5) présentent une taille moyenne des particules (D50), en particulier un diamètre moyen des particules (D50), dans la plage de 0,005 mm à 2,5 mm, de préférence de 0,01 mm à 2 mm, préférablement de 0,015 mm à 0,5 mm, de manière particulièrement préférée de 0,02 mm à 0,3 mm, de manière tout particulièrement préférée de 0,03 mm à 0,15 mm ; et/ou
dans laquelle les particules d'adsorbeur (5) présentent une taille moyenne des particules (D50), en particulier un diamètre moyen de particules (D50), dans la plage de 0,005 mm à 1 mm, en particulier dans la plage de 0,01 mm à 0,5 mm, de préférence dans la plage de 0,02 mm à 0,1 mm, en particulier dans laquelle les particules d'adsorbeur (5) sont au moins partiellement incorporées et/ou intégrées dans la couche adhésive (3) ; et/ou
dans laquelle les particules d'adsorbeur (5) présentent une taille moyenne de particules (D50), en particulier un diamètre moyen de particules (D50), dans la plage de 0,01 mm à 2,5 mm, en particulier dans la plage de 0,02 mm à 2,0 mm, de préférence dans la plage de 0,03 mm à 1,0 mm, préférablement dans la plage de 0,03 mm à 0,5 mm, en particulier dans laquelle les particules d'adsorbeur (5) sont disposées sur la couche adhésive (3) ; et/ou
dans laquelle les particules d'adsorbeur (5) sont utilisées en une quantité dans la plage de 5 g/m² à 150 g/m², en particulier de 10 g/m² à 100 g/m², de préférence de 15 g/m² à 75 g/m², préférablement de 20 g/m² à 50 g/m² et/ou dans laquelle l'unité (1) contient les particules d'adsorbeur (5) en une quantité dans la plage de 5 g/m² à 150 g/m², en particulier 10 g/m² à 100 g/m², de préférence 15 g/m² à 75 g/m², préférablement 20 g/m² à 50 g/m² ; et/ou
dans laquelle les particules d'adsorbeur (5) sont appliquées et/ou disposées sur et/ou dans la couche adhésive (3), en particulier dans un agencement aléatoire et/ou stochastique et/ou dans un agencement stochastique-homogène et/ou sont incorporées et/ou intégrées au moins partiellement dans la couche adhésive (3), en particulier dans un agencement aléatoire et/ou stochastique et/ou un agencement stochastique-homogène ; et/ou
dans laquelle les particules d'adsorbeur (5) sont au moins sensiblement complètement ou au moins partiellement disposées sur la couche adhésive (3) et/ou dans laquelle au moins 50 %, en particulier au moins 70 %, de préférence au moins 90 %, préférablement au moins 95 %, des particules d'adsorbeur (5), sur la base du nombre total de particules d'adsorbeur (5), sont disposées sur la couche adhésive (3) ; et/ou
dans laquelle les particules d'adsorbeur (5) sont au moins sensiblement complètement ou au moins partiellement disposées dans la couche adhésive (3), notamment incorporées et/ou intégrées dans la couche adhésive (3), et/ou dans laquelle au moins 50 %, en particulier au moins 70 %, de préférence au moins 90 %, préférablement au moins 95 %, des particules d'adsorbeur (5), sur la base du nombre total de particules d'adsorbeur (5), sont disposées dans la couche adhésive (3), en particulier sont incorporées et/ou intégrées dans la couche adhésive (3) ; et/ou
dans laquelle les particules d'adsorbeur (5) sont disposées et/ou incorporées et/ou présentes dans la couche adhésive (3) dans une partie de l'épaisseur ayant une épaisseur d'au moins 5 %, en particulier au moins 10 %, de préférence au moins 30 %, préférablement au moins 50 %, de manière particulièrement préférée au moins 70 %, de manière tout particulièrement préférée au moins 90 %, sur base de l'épaisseur totale de la couche adhésive (3), en particulier elles sont incorporées et/ou intégrées dans la couche adhésive (3), en particulier dans laquelle la partie de l'épaisseur comportant les particules d'adsorbeur (5) est disposée sur le côté de la couche adhésive (3) opposé au support (2) ; et/ou dans laquelle les particules d'adsorbeur (5) sont disposées et/ou sont présentes dans la couche adhésive (3) au moins sensiblement sur toute l'épaisseur de la couche adhésive (3), en particulier incorporées et/ou intégrées dans la couche adhésive (3) ; et/ou
dans laquelle les particules d'adsorbeur (5) disposées et/ou présentes sur la couche adhésive (3) ont une taille moyenne de particules (D50) supérieure, en particulier un diamètre moyen de particules (D50) supérieur, à celle des particules d'adsorbeur (5) au moins sensiblement complètement ou au moins partiellement disposées et/ou présentes dans la couche adhésive (3) ; et/ou
le rapport de la taille moyenne des particules (D50), en particulier du diamètre moyen des particules (D50), des particules d'adsorbeur (5) disposées et/ou présentes au moins sensiblement complètement ou au moins partiellement sur la couche adhésive (3) d'une part à la taille moyenne des particules (D50), en particulier le diamètre moyen des particules (D50), des particules d'adsorbeur (5) qui sont au moins sensiblement complètement ou au moins partiellement disposées et/ou présentes dans la couche adhésive (3), en particulier intégrées et/ou incorporées dans la couche adhésive (3), d'autre part [taille des particules (D50), en particulier diamètre moyen des particules (D50), des particules d'adsorbeur (5) supportées: taille des particules (D50), en particulier diamètre moyen des particules (D50), des particules d'adsorbeur (5) intégrées] dans la plage de 100: 1 à 1: 1, en particulier dans la plage de 50: 1 à 1,05: 1, de préférence dans la plage de 40: 1 à 1,1: 1, préférablement dans la plage de 30: 1 à 1,5: 1, de manière particulièrement préférée dans la plage de 20: 1 à 2: 1, de manière tout particulièrement préférée dans la plage de 10: 1 à 3: 1 ; et/ou
dans laquelle les particules d'adsorbeur (5) disposées et/ou présentes sur la couche adhésive (3) ont une taille moyenne de particules (D50) supérieure, en particulier un diamètre moyen de particules (D50) supérieur, à celle des particules catalytiques et/ou réactives (4) au moins sensiblement complètement ou au moins partiellement disposées et/ou présentes dans la couche adhésive (3) ; et/ou
dans laquelle le rapport de la taille moyenne des particules (D50), en particulier du diamètre moyen des particules (D50), des particules d'adsorbeur (5) disposées et/ou présentes au moins sensiblement complètement ou au moins partiellement sur la couche adhésive (3) d'une part à la taille moyenne des particules (D50), en particulier au diamètre moyen des particules (D50), des particules catalytiques et/ou réactives (4) qui sont au moins sensiblement complètement ou au moins partiellement disposées et/ou présentes dans la couche adhésive (3), en particulier intégrées et/ou incorporées dans la couche adhésive (3), d'autre part [taille des particules (D50), en particulier diamètre moyen des particules (D50), des particules d'adsorbeur (5) supportées: taille des particules (D50), en particulier diamètre moyen des particules (D50), des particules catalytiques et/ou réactives incorporées (4)] dans la plage de 100: 1 à 1: 1, en particulier dans la plage de 50: 1 à 1,05: 1, de préférence dans la plage de 40: 1 à 1,1: 1, préférablement dans la plage de 30: 1 à 1,5: 1, de manière particulièrement préférée dans la plage de 20: 1 à 2: 1, de manière tout particulièrement préférée dans la plage de 10: 1 à 3: 1.

8. Unité selon l'une quelconque des revendications précédentes,
dans laquelle les particules catalytiques et/ou réactives (4) sont au moins sensiblement complètement ou au moins partiellement disposées dans la couche adhésive (3), en particulier sont incorporées et/ou intégrées dans la couche adhésive (3) et/ou dans laquelle au moins 50 %, en particulier au moins 70 %, de préférence au moins 90 %, préférablement au moins 95 %, des particules catalytiques et/ou réactives (4), sur la base du nombre total de particules catalytiques et/ou réactives (4), sont disposées dans la couche adhésive (3), en particulier incorporées et/ou intégrées dans la couche adhésive (3) ; et
dans laquelle les particules d'adsorbeur (5) sont au moins sensiblement complètement ou au moins partiellement disposées sur la couche adhésive (3) et/ou dans laquelle au moins 50 %, en particulier au moins 70 %, de préférence au moins 90 %, préférablement au moins 95 %, des particules d'adsorbeur (5), sur la base du nombre total de particules d'adsorbeur (5), sont disposées sur la couche adhésive (3) ;
en particulier dans laquelle les particules d'adsorbeur (5) ont une taille de particules supérieure, en particulier un diamètre de particule supérieur et / ou une taille moyenne des particules supérieure (D50), en particulier un diamètre moyen de particule supérieur (D50), à celle des particules catalytiques et/ou réactives (4), en particulier dans laquelle la taille des particules, en particulier le diamètre des particules et/ou la taille moyenne des particules (D50), en particulier le diamètre moyen des particules (D50), des particules d'adsorbeur (5) est supérieure d'au moins 10 %, en particulier d'au moins 25 %, de préférence d'au moins 50 % à la taille correspondante des particules catalytiques et/ou réactives (4), sur la base de la taille correspondante des particules catalytiques et/ou réactives (4) ; et/ou
en particulier dans laquelle les particules d'adsorbeur (5) sont disposées du côté de la couche adhésive (3) opposé au support (2).

9. Unité selon l'une quelconque des revendications précédentes,
dans laquelle les particules d'adsorbeur (5) sont formées de charbon actif particulaire, de préférence sous forme de particules de charbon actif, de préférence de forme granulaire (« charbon granulé ») ou de formé sphérique (« charbon sphérique ») et/ou sont constituées de celui-ci ; et/ou
dans laquelle les particules d'adsorbeur (5) sont utilisées en une quantité dans la plage de 5 g/m² à 350 g/m², en particulier de 10 g/m² à 200 g/m², de préférence de 15 g/m² à 100 g/m², préférablement de 20 g/m² à 40 g/m² et/ou dans laquelle l'unité (1) contient les particules d'adsorbeur (5) en une quantité dans la plage de 5 g/m² à 350 g/m², en particulier 10 g/m² à 200 g/m², de préférence 15 g/m² à 100 g/m², préférablement 20 g/m² à 40 g/m².

10. Unité selon l'une quelconque des revendications précédentes,
dans laquelle la mousse polymère adhésive rompue de la couche adhésive (3) présente une pluralité de bulles de mousse séchées et/ou durcies, en particulier réticulées, détruites et/ou éclatées et/ou affaissées ; et/ou
dans laquelle la mousse polymère adhésive rompue, en particulier les bulles de mousse séchées et/ou durcies, en particulier réticulées, détruites et/ou éclatées et/ou affaissées de la mousse adhésive rompue présente ou présentent une pluralité de parois et/ou de traverses détruites et/ou rompues et/ou affaissées, en polymère adhésif ; et/ou
dans laquelle la couche polymère adhésive rompue présente une proportion de bulles de mousse détruites et/ou éclatées et/ou affaissées d'au moins 10 %, en particulier d'au moins 30 %, de préférence d'au moins 50 %, préférablement d'au moins 70 %, d'une manière particulièrement préférée d'au moins 90 %, d'une manière tout particulièrement préférée d'au moins 95 %, par rapport au nombre total de bulles de mousse dans la mousse polymère adhésive rompue ; et/ou
dans laquelle la mousse de polymère adhésive rompue a une proportion de bulles de mousse détruites et/ou éclatées et/ou affaissées dans la plage de 10 % à 100 %, en particulier dans la plage de 30 % à 99,9 %, de préférence dans la plage de 50 % à 99 %, préférablement dans plage de 70 % à 99 %, de manière particulièrement préférée dans la plage de 90 % à 98 %, sur la base du nombre total de bulles de mousse dans la mousse polymère adhésive rompue ; et/ou
dans laquelle la mousse polymère adhésive rompue est conçue non fermée et/ou dans laquelle la mousse polymère adhésive rompue présente une pluralité de percements, de pores, de canaux et/ou d'ouvertures s'étendant en particulier dans la mousse polymère adhésive rompue et/ou une pluralité de percements, pores, canaux et/ou ouvertures reliant en particulier les faces extérieures respectives de la mousse polymère adhésive rompue et/ou de la couche adhésive (3) ; et/ou
dans laquelle la mousse polymère adhésive rompue est conçue de manière continue et/ou cohérente ; et/ou
dans laquelle la mousse polymère adhésive rompue est appliquée au moins pour l'essentiel sur toute la surface et/ou sur toute la face du support (2) ; et/ou
dans laquelle la mousse polymère adhésive rompue, par rapport à un polymère adhésif non moussant et/ou formé en continu correspondant, présente une densité réduite et/ou une masse volumique réduite, en particulier rapportée à la surface d'au moins 5 %, en particulier d'au moins 10 %, de préférence d'au moins 15 %, préférablement d'au moins 20 %, de manière particulièrement préférée d'au moins 25 %, sur la base du polymère adhésif non moussé et/ou formé en continu et/ou
dans laquelle la mousse polymère adhésive rompue, par rapport à un polymère adhésif non moussé et/ou formé en continu correspondant, présente une densité réduite et/ou une masse volumique réduite, en particulier rapportée à la surface dans la plage de 5 % à 80 %, en particulier dans la plage de 10 % à 70 %, de préférence dans la plage de 15 % à 60 %, préférablement dans la plage de 20 % à 55 %, sur la base du polymère adhésif non moussé et/ou formé en continu ; et/ou
dans laquelle la mousse polymère adhésive rompue par rapport à une mousse polymère adhésive intacte et/ou non rompue correspondante présente une densité accrue et/ou une masse volumique accrue, en particulier rapportée à la surface, d'au plus 10 %, en particulier d'au plus 5 %, de préférence d'au plus 1 %, sur la base de la mousse polymère adhésive intacte et/ou non rompue ; et/ou
dans laquelle la mousse polymère adhésive rompue par rapport à une mousse polymère adhésive intacte et/ou non rompue correspondante a une élasticité et/ou une extensibilité réversible réduites, d'au plus 30 %, en particulier d'au plus 20 %, de préférence d'au plus 10 %, préférablement d'au plus 5 %, sur la base de la mousse polymère adhésive intacte et/ou non rompue et/ou
dans laquelle la mousse polymère adhésive rompue par rapport à une mousse polymère adhésive intacte et/ou non rompue correspondante présente une élasticité et/ou une extensibilité réversible réduites dans la plage de 5 % à 30 %, en particulier dans la plage de 10 % à 20 %, sur la base de la mousse polymère adhésive intacte et/ou non rompue ; et/ou
dans laquelle la couche adhésive (3) est appliquée et/ou est présente sur le support textile (2) en une quantité située dans la plage de 5 g/m² à 60 g/m², en particulier dans la plage de 10 g/m² à 50 g/m², de préférence dans la plage de 20 g/m² à 40 g/m², préférablement dans la plage de 25 g/m² à 35 g/m² et/ou dans laquelle la couche adhésive (3) présente une masse surfacique située dans la plage de 5 g/m² à 60 g/m², en particulier dans la plage de 10 g/m² à 50 g/m², de préférence dans la plage de 20 g/m² à 40 g/m², préférablement dans la plage de 25 g/m² à 35 g/m² ; et/ou
dans laquelle les particules catalytiques et/ou réactives (4) et/ou les particules d'adsorbeur (5), indépendamment les unes des autres, sont fixées et/ou attachées sur la mousse polymère adhésive rompue de la couche adhésive (3), en particulier sur les parois et/ou traverses détruites et/ou cassées et/ou affaissées des bulles de mousse détruites et/ou éclatées et/ou affaissées de la mousse adhésive rompue.

11. Unité selon l'une quelconque des revendications précédentes,
dans laquelle la mousse polymère adhésive rompue peut être obtenue par séchage et/ou durcissement, en particulier par réticulation, d'une solution et/ou dispersion à base aqueuse ou organique, de préférence à base aqueuse, du polymère adhésif, moussée, de préférence moussée sous apport d'énergie mécanique, en particulier accompagnée d'une rupture au moins partielle de la mousse préparée à partir de la solution et/ou la dispersion moussée du polymère adhésif,
en particulier dans laquelle le séchage et/ou le durcissement, en particulier la réticulation, est réalisé en présence d'au moins un agent moussant et éventuellement d'au moins un stabilisant de mousse et éventuellement d'au moins un agent de réticulation et éventuellement d'au moins un émulsifiant et éventuellement d'au moins un épaississant ; et/ou
dans laquelle le polymère adhésif est choisi dans le groupe des polyacrylates (PA), des polyméthacrylates (PMA), du poly(méthacrylate de méthyle) (PMMA), des polycarbonates (PC), des polyuréthannes (PU) et des silicones ; de préférence un polyacrylate (PA) et un polyuréthanne (PU) ; ainsi que des mélanges ou combinaisons d'au moins deux des composés susmentionnés, de préférence un polyuréthanne (PU) et/ou dans laquelle le polymère adhésif est un polyacrylate (PA) et/ou un polyuréthanne (PU) et/ou dans laquelle le polymère adhésif est un adhésif à *haute teneur en solides.*

12. Procédé de fabrication d'une unité catalytique et/ou réactive (1), en particulier telle que définie dans l'une des revendications 1 à 11, sous forme d'une matière de protection à propriétés catalytiques et/ou réactives, en particulier à fonction protectrice contre les substances nocives et/ou toxiques chimiques et/ou biologiques, de préférence pour la fabrication, en particulier, d'une matière filtrante de protection textile catalytique et/ou réactive,
dans lequel un support (2), en particulier perméable à l'air, en particulier sous forme d'un support textile, est équipé d'un grand nombre de particules catalytiques et/ou réactives (4) discrètes,
dans lequel lesdites particules catalytiques et/ou réactives (4) comprennent au moins un composant catalytique et/ou réactif ou consistent en celui-ci, dans lequel ledit composant catalytique et/ou réactif comprend un matériau MOF *(Métal Organic Framework)* ou consiste en celui-ci,
dans lequel les particules catalytiques et/ou réactives (4) sont reliées durablement au support (2) au moyen d'un collage et/ou sont collées au support (2), dans lequel la couche adhésive (3) est formée comme une couche perméable à l'air et/ou discontinue à base d'une mousse polymère adhésive rompue séchée et durcie et
dans lequel l'unité (1) est également équipée d'un grand nombre de particules d'adsorbeur (5) discrètes.

13. Utilisation d'une unité catalytique et/ou réactive telle que définie dans l'une des revendications 1 à 11,
pour la fabrication d'un équipement de protection et/ou d'objets de protection de tous types, en particulier de vêtements de protection, en particulier pour le domaine civil ou militaire, tels que des combinaisons de protection, des gants de protection, des chaussures de protection, des chaussettes de protection, des vêtements de protection de la tête et analogues et des capuchons de protection de tous types, de préférence tous les matériaux de protection mentionnés ci-dessus pour une utilisation NRBC et/ou ayant une fonction de protection vis-à-vis des substances nocives et/ou toxiques radioactives et/ou vis-à-vis des substances nocives et/ou toxiques biologiques et/ou vis-à-vis des substances nocives et/ou toxiques chimiques ; et/ou
pour la fabrication de filtres et de matériaux filtrants de tous types, en particulier pour éliminer les substances nocives, malodorantes et toxiques de tous types, de préférence pour éliminer des substances nocives et/ou toxiques radioactives et/ou des substances nocives et/ou toxiques biologiques et/ou des substances nocives et/ou toxiques chimiques, en particulier de flux d'air et/ou de gaz, tels que les filtres pour masques de protection NRBC, les filtres anti-odeur, les filtres de surface, les filtres à air, en particulier les filtres pour la purification de l'air ambiant, les structures supports adsorbantes et les filtres pour le domaine médical.

14. Équipements de protection et/ou objets de protection de tous types, en particulier pour le secteur civil ou militaire, en particulier vêtements de protection, tels que combinaisons de protection, gants de protection, chaussures de protection, chaussettes de protection, vêtements de protection de la tête et similaires, ainsi que capuchons de protection, de préférence tous les équipements de protection et/ou objets de protection susmentionnés pour une utilisation NRBC et/ou ayant une fonction protectrice contre les substances nocives et/ou toxiques radioactives et/ou contre les substances nocives et/ou toxiques biologiques et/ou contre les substances nocives et/ou toxiques chimiques, produits à l'aide d'une unité catalytique et/ou réactive, comme définie dans l'une des revendications 1 à 11 et/ou comprenant une unité catalytique et/ou réactive telle que définie dans l'une quelconque des revendications 1 à 11.

15. Filtres et matériaux filtrants de tous types, en particulier pour éliminer les substances nocives, odorantes et toxiques de tous types, de préférence pour éliminer les substances nocives et/ou toxiques radioactives et/ou les substances nocives et/ou toxiques biologiques et/ou les substances nocives et/ou toxiques chimiques, en particulier des flux d'air et/ou de gaz, tels que les filtres pour masques de protection, les filtres anti-odeur, les filtres de surface, les filtres à air, en particulier les filtres pour la purification de l'air ambiant, les structures supports adsorbantes et les filtres pour le domaine médical, fabriqués à l'aide d'une unité catalytique et/ou réactive telle que définie dans l'une des revendications 1 à 11 et/ou comprenant une unité catalytique et/ou réactive telle que définie dans l'une des revendications 1 à 11.
